# EUROPEAN PATENT APPLICATION

(11) **EP 4 062 770 A1**
(43) Date of publication of application: **28.09.2022**
(21) Application number: 20891054.7
(22) Date of filing: 18.11.2020
(51) Int. Cl.: A23L 27/20

(54) **OFF-FLAVOR SUPPRESSING AGENT**

(30) Priority: 19.11.2019 JP 2019208858
(71) Applicant: AJINOMOTO CO., INC., Chuo-ku Tokyo 104-8315 (JP)
(72) Inventor: KANNO, Kyoko, Kawasaki-shi, Kanagawa 210-8681 (JP); KITADA, Ryo, Kawasaki-shi, Kanagawa 210-8681 (JP); KITAJIMA, Seiji, Kawasaki-shi, Kanagawa 210-8681 (JP)
(74) Representative: Strehl Schübel-Hopf & Partner
(86) International application number: PCT/JP2020/042890
(87) International publication number: WO 2021/100729

(57) **Abstract**

An object of the present invention is to provide an off-taste suppressing agent capable of effectively suppressing off-tastes due to off-taste substances, and the like.

The present invention relates to an off-taste suppressing agent for an oral product containing an off-taste substance added thereto, wherein the agent contains at least one compound selected from the group consisting of a compound represented by the following formula (I): 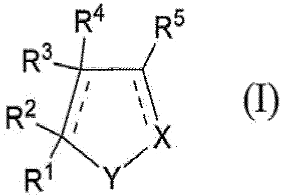 wherein each symbol is as defined in the present specification, cyclotene, and a fatty acid having a carbon atom number of 3 or 4.

## Description

### [Technical Field]

The present invention relates to an agent for suppressing an off-taste of oral products, a method for suppressing an off-taste of oral products, and a method for producing an oral product with a suppressed off-taste. Particularly, the present invention relates to an agent for suppressing an off-taste of an oral product containing an off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) added thereto, a method for suppressing an off-taste of an oral product containing an off-taste substance added thereto, and a method for producing an oral product containing an off-taste substance added thereto in which the off-taste is suppressed.

### [Background Art]

Due to health consciousness in recent years, there is an increasing need for foods with reduced salt content (salt-reduced food, etc.). However, foods with reduced salt content tend to cause less satisfaction due to the lack of salty taste. Conventionally, therefore, salt substitutes have been used for the purpose of supplementing the lack of salty taste.

Potassium chloride is one of the most frequently used salt substitutes. While potassium chloride supplements the salty taste, it also imparts off-tastes such as a bitter taste, a metallic taste, a harsh taste, and other tastes, and sometimes degrades the quality of taste of food as a whole.

As a means for suppressing the off-taste imparted by potassium chloride, addition of acetic acid, HEMF, isoamyl alcohol, and methional in combination (Patent Literature 1), addition of a predetermined acidulant, calcium salt, magnesium salt, and rice flour in combination (Patent Literature 2), and the like have been proposed. However, the off-taste suppressing effects of these are not sufficient.

### [Citation List]

### [Patent Literature]

[PTL 1] JP-A- 2015-092874
[PTL 2] Japanese Translation of PCT Application Publication No. 2010-521974

### [Summary of Invention]

### [Technical Problem]

In addition, amino acids or salts thereof, high-intensity sweeteners, vegetable proteins, flavonoid compounds, pH-adjusting or bacteriostatic agents, and thickening polysaccharides have been conventionally used in various foods. However, these substances impart off-tastes such as a bitter taste and the like to foods.

The present invention has been made in view of the aforementioned situation, and the problem to be solved is to provide an off-taste suppressing agent, an off-taste suppressing method, and the like capable of effectively suppressing off-tastes caused by off-taste substances such as inorganic salt such as potassium chloride or the like, amino acid or a salt thereof, high-intensity sweetener, vegetable protein, flavonoid compound, pH-adjusting or bacteriostatic agent, thickening polysaccharide, etc.

### [Solution to Problem]

The present inventors have conducted intensive studies in an attempt to solve the aforementioned problem and found that the off-tastes derived from inorganic salts (e.g., potassium chloride) can be effectively suppressed by adding a predetermined compound (a compound represented by the following formula (I), cyclotene, fatty acid having 3 or 4 carbon atoms). The present inventors have also found that the off-tastes derived from off-taste substances such as amino acid or a salt thereof, high-intensity sweetener, vegetable protein, flavonoid compound, pH-adjusting or bacteriostatic agent, thickening polysaccharide, etc. can be effectively suppressed by adding the compound. The present inventors have conducted further studies and completed the present invention.

Accordingly, the present invention provides the following.

[1] An agent for suppressing an off-taste of an oral product to which an off-taste substance is added, which agent comprises at least one compound (hereinafter to be referred to as an off-taste suppressing compound) selected from the group consisting of
   a compound represented by the following formula (I):

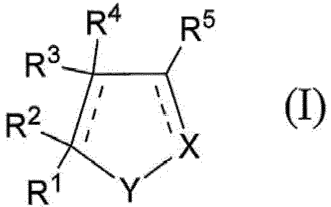

      wherein
   R¹ and R³ are each independently a hydrogen atom, a hydroxy group, a methyl group, a formyl group, an acetyl group, or an acetoxy group;
   R² and R⁴ are each a hydrogen atom, or are absent when a carbon atom bonded to R¹ and a carbon atom bonded to R³ are bonded to each other to form a double bond;
   R⁵ is a hydrogen atom or an oxo group;
   one of X and Y is an oxy group, and the other is a group represented by the following formula (II):

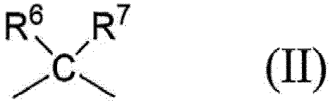

      wherein R⁶ is a hydrogen atom or a methyl group;
   R⁷ is a hydrogen atom, or is absent when a carbon atom bonded to R⁵ and a carbon atom bonded to R⁶ are bonded to each other to form a double bond;
   a doublet consisting of a solid line and a broken line is a single bond or a double bond,
   provided that R⁵ is an oxo group when R¹ and R³ are simultaneously hydrogen atoms,
   cyclotene, and
   a fatty acid having 3 or 4 carbon atoms.
[2] The agent of [1], wherein the off-taste suppressing compound is at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid.
[3] The agent of [1] or [2], wherein the off-taste suppressing compound is at least one compound selected from the group consisting of furfural, 2-acetylfuran, cyclotene, and propionic acid.
[4] The agent of any one of [1] to [3], wherein the off-taste suppressing compound comprises furfural, 2-acetylfuran, cyclotene, and propionic acid.
[5] The agent of any one of [1] to [4], wherein the off-taste substance comprises at least one selected from the group consisting of an inorganic salt, an amino acid or a salt thereof, a high-intensity sweetener, a vegetable protein, a flavonoid compound, a pH-adjusting or bacteriostatic agent, and a thickening polysaccharide.
[6] The agent of [5], wherein the inorganic salt comprises at least one selected from the group consisting of potassium chloride, magnesium chloride, and calcium chloride.
[7] The agent of [5] or [6], wherein the amino acid or a salt thereof comprises at least one selected from the group consisting of a branched chain amino acid, tryptophan, phenylalanine, arginine, cysteine, methionine, lysine, histidine, tyrosine, glycine, and salts thereof.
[8] The agent of any one of [5] to [7], wherein the high-intensity sweetener comprises at least one selected from the group consisting of acesulfame potassium, sucralose, aspartame, stevia, thaumatin, saccharin, saccharin sodium, licorice, neotame, and advantame.
[9] The agent of any one of [5] to [8], wherein the vegetable protein comprises at least one selected from the group consisting of soy protein, pea protein, fava bean protein, chickpea protein, almond protein, and sunflower protein.
[10] The agent of any one of [5] to [9], wherein the flavonoid compound comprises at least one selected from the group consisting of a flavanol compound, a flavanone compound, a flavone compound, a flavol compound, and an isoflavone compound.
[11] The agent of any one of [5] to [10], wherein the pH-adjusting or bacteriostatic agent comprises at least one selected from the group consisting of acetic acid or salts thereof, phosphoric acid or salts thereof, citric acid or salts thereof, and glycine.
[12] The agent of any one of [5] to [11], wherein the thickening polysaccharide comprises at least one selected from the group consisting of a cellulose derivative, alginic acids, xanthan gum, guar gum, locust bean gum, tara gum, gellan gum, carrageenan, gum tragacanth, gum arabic, caraya gum, tamarind seed gum, psyllium seed gum, curdlan, and pectin.
[13] The agent of any one of [1] to [12], wherein the off-taste substance comprises at least one selected from the group consisting of potassium chloride, a branched chain amino acid, acesulfame potassium, sucralose, aspartame, stevia, soy protein, pea protein, fava bean protein, flavanol compound, sodium acetate, disodium phosphate, and a cellulose derivative.
[14] The agent of any one of [1] to [13], wherein, when the oral product is an oral product comprising at least a high-intensity sweetener added thereto, the off-taste suppressing compound is at least one compound selected from the group consisting of 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid.
[15] The agent of any one of [1] to [14], wherein, when the oral product is an oral product comprising at least potassium chloride added thereto, the off-taste suppressing compound is at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, and butyric acid.
[16] The agent of any one of [1] to [15], wherein the agent is used such that an addition amount of the off-taste suppressing compound to the oral product is 0.005 - 8000 weight ppm with respect to the addition amount of the off-taste substance to the oral product.
[17] The agent of any one of [1] to [16], wherein, when the off-taste suppressing compound comprises compound (I), the agent is used such that an addition amount of the compound (I) to the oral product is 0.005 - 8000 weight ppm with respect to the addition amount of the off-taste substance to the oral product.
[18] The agent of any one of [1] to [17], wherein, when the off-taste suppressing compound comprises furfural, the agent is used such that an addition amount of the furfural to the oral product is 0.005 - 8000 weight ppm with respect to the addition amount of the off-taste substance to the oral product.
[19] The agent of any one of [1] to [18], wherein, when the off-taste suppressing compound comprises 2-acetylfuran, the agent is used such that an addition amount of the 2-acetylfuran to the oral product is 0.01 - 8000 weight ppm with respect to the addition amount of the off-taste substance to the oral product.
[20] The agent of any one of [1] to [19], wherein, when the off-taste suppressing compound comprises cyclotene, the agent is used such that an addition amount of the cyclotene to the oral product is 0.005 - 8000 weight ppm with respect to the addition amount of the off-taste substance to the oral product.
[21] The agent of any one of [1] to [20], wherein, when the off-taste suppressing compound comprises a fatty acid having 3 or 4 carbon atoms, the agent is used such that an addition amount of the fatty acid having 3 or 4 carbon atoms to the oral product is 0.05 - 8000 weight ppm with respect to the addition amount of the off-taste substance to the oral product.
[22] The agent of any one of [1] to [21], wherein, when the off-taste substance added to the oral product comprises an inorganic salt, the agent is used such that an addition amount of the off-taste suppressing compound to the oral product is 0.05 - 5000 weight ppm with respect to the addition amount of the inorganic salt to the oral product.
[23] The agent of any one of [1] to [22], wherein, when the off-taste substance added to the oral product comprises an inorganic salt, and the off-taste suppressing compound comprises compound (I), the agent is used such that an addition amount of the compound (I) to the oral product is 0.05 - 5000 weight ppm with respect to the addition amount of the inorganic salt to the oral product.
[24] The agent of any one of [1] to [23], wherein, when the off-taste substance added to the oral product comprises an inorganic salt, and the off-taste suppressing compound comprises furfural, the agent is used such that an addition amount of the furfural to the oral product is 0.3 - 1000 weight ppm with respect to the addition amount of the inorganic salt to the oral product.
[25] The agent of any one of [1] to [24], wherein, when the off-taste substance added to the oral product comprises an inorganic salt, and the off-taste suppressing compound comprises 2-acetylfuran, the agent is used such that an addition amount of the 2-acetylfuran to the oral product is 3 - 1000 weight ppm with respect to the addition amount of the inorganic salt to the oral product.
[26] The agent of any one of [1] to [25], wherein, when the off-taste substance added to the oral product comprises an inorganic salt, and the off-taste suppressing compound comprises cyclotene, the agent is used such that an addition amount of the cyclotene to the oral product is 0.05 - 2000 weight ppm with respect to the addition amount of the inorganic salt to the oral product.
[27] The agent of any one of [1] to [26], wherein, when the off-taste substance added to the oral product comprises an inorganic salt, and the off-taste suppressing compound comprises a fatty acid having 3 or 4 carbon atoms, the agent is used such that an addition amount of the fatty acid having 3 or 4 carbon atoms to the oral product is 10 - 5000 weight ppm with respect to the addition amount of the inorganic salt to the oral product.
[28] The agent of any one of [1] to [27], wherein, when the off-taste substance added to the oral product comprises an amino acid or a salt thereof, the agent is used such that an addition amount of the off-taste suppressing compound to the oral product is 0.005 - 1000 weight ppm with respect to the addition amount of the amino acid or a salt thereof to the oral product.
[29] The agent of any one of [1] to [28], wherein, when the off-taste substance added to the oral product comprises an amino acid or a salt thereof, and the off-taste suppressing compound comprises compound (I), the agent is used such that an addition amount of the compound (I) to the oral product is 0.005 - 100 weight ppm with respect to the addition amount of the amino acid or a salt thereof to the oral product.
[30] The agent of any one of [1] to [29], wherein, when the off-taste substance added to the oral product comprises an amino acid or a salt thereof, and the off-taste suppressing compound comprises furfural, the agent is used such that an addition amount of the furfural to the oral product is 0.005 - 50 weight ppm with respect to the addition amount of the amino acid or a salt thereof to the oral product.
[31] The agent of any one of [1] to [30], wherein, when the off-taste substance added to the oral product comprises an amino acid or a salt thereof, and the off-taste suppressing compound comprises 2-acetylfuran, the agent is used such that an addition amount of the 2-acetylfuran to the oral product is 0.05 - 100 weight ppm with respect to the addition amount of the amino acid or a salt thereof to the oral product.
[32] The agent of any one of [1] to [31], wherein, when the off-taste substance added to the oral product comprises an amino acid or a salt thereof, and the off-taste suppressing compound comprises cyclotene, the agent is used such that an addition amount of the cyclotene to the oral product is 0.005 - 50 weight ppm with respect to the addition amount of the amino acid or a salt thereof to the oral product.
[33] The agent of any one of [1] to [32], wherein, when the off-taste substance added to the oral product comprises an amino acid or a salt thereof, and the off-taste suppressing compound comprises a fatty acid having 3 or 4 carbon atoms, the agent is used such that an addition amount of the fatty acid having 3 or 4 carbon atoms to the oral product is 0.5 - 1000 weight ppm with respect to the addition amount of the amino acid or a salt thereof to the oral product.
[34] The agent of any one of [1] to [33], wherein, when the off-taste substance added to the oral product comprises a high-intensity sweetener, the agent is used such that an addition amount of the off-taste suppressing compound to the oral product is 0.1 - 8000 weight ppm with respect to the addition amount of the high-intensity sweetener to the oral product.
[35] The agent of any one of [1] to [34], wherein, when the off-taste substance added to the oral product comprises a high-intensity sweetener, and the off-taste suppressing compound comprises compound (I), the agent is used such that an addition amount of the compound (I) to the oral product is 0.1 - 8000 weight ppm with respect to the addition amount of the high-intensity sweetener to the oral product.
[36] The agent of any one of [1] to [35], wherein, when the off-taste substance added to the oral product comprises a high-intensity sweetener, and the off-taste suppressing compound comprises cyclotene, the agent is used such that an addition amount of the cyclotene to the oral product is 0.1 - 8000 weight ppm with respect to the addition amount of the high-intensity sweetener to the oral product.
[37] The agent of any one of [1] to [36], wherein, when the off-taste substance added to the oral product comprises a high-intensity sweetener, and the off-taste suppressing compound comprises a fatty acid having 3 or 4 carbon atoms, the agent is used such that an addition amount of the fatty acid having 3 or 4 carbon atoms to the oral product is 1 - 8000 weight ppm with respect to the addition amount of the high-intensity sweetener to the oral product.
[38] The agent of any one of [1] to [37], wherein, when the off-taste substance added to the oral product comprises a vegetable protein, the agent is used such that an addition amount of the off-taste suppressing compound to the oral product is 0.01 - 250 weight ppm with respect to the addition amount of the vegetable protein to the oral product.
[39] The agent of any one of [1] to [38], wherein, when the off-taste substance added to the oral product comprises a vegetable protein, and the off-taste suppressing compound comprises compound (I), the agent is used such that an addition amount of the compound (I) to the oral product is 0.01 - 250 weight ppm with respect to the addition amount of the vegetable protein to the oral product.
[40] The agent of any one of [1] to [39], wherein, when the off-taste substance added to the oral product comprises a vegetable protein, and the off-taste suppressing compound comprises furfural, the agent is used such that an addition amount of the furfural to the oral product is 0.01 - 15 weight ppm with respect to the addition amount of the vegetable protein to the oral product.
[41] The agent of any one of [1] to [40], wherein, when the off-taste substance added to the oral product comprises a vegetable protein, and the off-taste suppressing compound comprises 2-acetylfuran, the agent is used such that an addition amount of the 2-acetylfuran to the oral product is 0.01 - 25 weight ppm with respect to the addition amount of the vegetable protein to the oral product.
[42] The agent of any one of [1] to [41], wherein, when the off-taste substance added to the oral product comprises a vegetable protein, and the off-taste suppressing compound comprises cyclotene, the agent is used such that an addition amount of the cyclotene to the oral product is 0.01 - 15 weight ppm with respect to the addition amount of the vegetable protein to the oral product.
[43] The agent of any one of [1] to [42], wherein, when the off-taste substance added to the oral product comprises a vegetable protein, and the off-taste suppressing compound comprises a fatty acid having 3 or 4 carbon atoms, the agent is used such that an addition amount of the fatty acid having 3 or 4 carbon atoms to the oral product is 0.05 - 250 weight ppm with respect to the addition amount of the vegetable protein to the oral product.
[44] The agent of any one of [1] to [43], wherein, when the off-taste substance added to the oral product comprises a flavonoid compound, the agent is used such that an addition amount of the off-taste suppressing compound to the oral product is 0.1 - 8000 weight ppm with respect to the addition amount of the flavonoid compound to the oral product.
[45] The agent of any one of [1] to [44], wherein, when the off-taste substance added to the oral product comprises a flavonoid compound, and the off-taste suppressing compound comprises compound (I), the agent is used such that an addition amount of the compound (I) to the oral product is 0.1 - 8000 weight ppm with respect to the addition amount of the flavonoid compound to the oral product.
[46] The agent of any one of [1] to [45], wherein, when the off-taste substance added to the oral product comprises a flavonoid compound, and the off-taste suppressing compound comprises furfural or 2-acetylfuran, the agent is used such that an addition amount of the furfural or 2-acetylfuran to the oral product is 0.1 - 1000 weight ppm with respect to the addition amount of the flavonoid compound to the oral product.
[47] The agent of any one of [1] to [46], wherein, when the off-taste substance added to the oral product comprises a flavonoid compound, and the off-taste suppressing compound comprises cyclotene, the agent is used such that an addition amount of the cyclotene to the oral product is 0.1 - 1000 weight ppm with respect to the addition amount of the flavonoid compound to the oral product.
[48] The agent of any one of [1] to [47], wherein, when the off-taste substance added to the oral product comprises a flavonoid compound, and the off-taste suppressing compound comprises a fatty acid having 3 or 4 carbon atoms, the agent is used such that an addition amount of the fatty acid having 3 or 4 carbon atoms to the oral product is 1 - 8000 weight ppm with respect to the addition amount of the flavonoid compound to the oral product.
[49] The agent of any one of [1] to [48], wherein, when the off-taste substance added to the oral product comprises a pH-adjusting or bacteriostatic agent, the agent is used such that an addition amount of the off-taste suppressing compound to the oral product is 0.01 - 500 weight ppm with respect to the addition amount of the pH-adjusting or bacteriostatic agent to the oral product.
[50] The agent of any one of [1] to [49], wherein, when the off-taste substance added to the oral product comprises a pH-adjusting or bacteriostatic agent, and the off-taste suppressing compound comprises compound (I), the agent is used such that an addition amount of the compound (I) to the oral product is 0.01 - 500 weight ppm with respect to the addition amount of the pH-adjusting or bacteriostatic agent to the oral product.
[51] The agent of any one of [1] to [50], wherein, when the off-taste substance added to the oral product comprises a pH-adjusting or bacteriostatic agent, and the off-taste suppressing compound comprises furfural or 2-acetylfuran, the agent is used such that an addition amount of the furfural or 2-acetylfuran to the oral product is 0.01 - 50 weight ppm with respect to the addition amount of the pH-adjusting or bacteriostatic agent to the oral product.
[52] The agent of any one of [1] to [51], wherein, when the off-taste substance added to the oral product comprises a pH-adjusting or bacteriostatic agent, and the off-taste suppressing compound comprises cyclotene, the agent is used such that an addition amount of the cyclotene to the oral product is 0.01 - 50 weight ppm with respect to the addition amount of the pH-adjusting or bacteriostatic agent to the oral product.
[53] The agent of any one of [1] to [52], wherein, when the off-taste substance added to the oral product comprises a pH-adjusting or bacteriostatic agent, and the off-taste suppressing compound comprises a fatty acid having 3 or 4 carbon atoms, the agent is used such that an addition amount of the fatty acid having 3 or 4 carbon atoms to the oral product is 0.1 - 500 weight ppm with respect to the addition amount of the pH-adjusting or bacteriostatic agent to the oral product.
[54] The agent of any one of [1] to [53], wherein, when the off-taste substance added to the oral product comprises a thickening polysaccharide, the agent is used such that an addition amount of the off-taste suppressing compound to the oral product is 0.05 - 500 weight ppm with respect to the addition amount of the thickening polysaccharide to the oral product.
[55] The agent of any one of [1] to [54], wherein, when the off-taste substance added to the oral product comprises a thickening polysaccharide, and the off-taste suppressing compound comprises compound (I), the agent is used such that an addition amount of the compound (I) to the oral product is 0.05 - 500 weight ppm with respect to the addition amount of the thickening polysaccharide to the oral product.
[56] The agent of any one of [1] to [55], wherein, when the off-taste substance added to the oral product comprises a thickening polysaccharide, and the off-taste suppressing compound comprises furfural or 2-acetylfuran, the agent is used such that an addition amount of the furfural or 2-acetylfuran to the oral product is 0.05 - 50 weight ppm with respect to the addition amount of the thickening polysaccharide to the oral product.
[57] The agent of any one of [1] to [56], wherein, when the off-taste substance added to the oral product comprises a thickening polysaccharide, and the off-taste suppressing compound comprises cyclotene, the agent is used such that an addition amount of the cyclotene to the oral product is 0.05 - 50 weight ppm with respect to the addition amount of the thickening polysaccharide to the oral product.
[58] The agent of any one of [1] to [57], wherein, when the off-taste substance added to the oral product comprises a thickening polysaccharide, and the off-taste suppressing compound comprises a fatty acid having 3 or 4 carbon atoms, the agent is used such that an addition amount of the fatty acid having 3 or 4 carbon atoms to the oral product is 0.5 - 500 weight ppm with respect to the addition amount of the thickening polysaccharide to the oral product.
[59] The agent of any one of [1] to [58], wherein the oral product is a food.
[60] The agent of any one of [1] to [59], wherein the off-taste of the oral product derives from an off-taste substance added to the oral product.
[61] The agent of any one of [1] to [60], wherein the off-taste is at least one selected from the group consisting of a bitter taste, a metallic taste, a harsh taste, an astringent taste, and a rough taste.
[62] A method for suppressing an off-taste of an oral product comprising an off-taste substance added thereto, comprising adding at least one compound (hereinafter to be referred to as an off-taste suppressing compound) selected from the group consisting of
   a compound represented by the following formula (I):

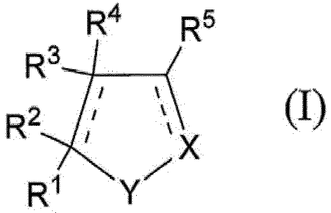

   wherein
   R¹ and R³ are each independently a hydrogen atom, a hydroxy group, a methyl group, a formyl group, an acetyl group, or an acetoxy group;
   R² and R⁴ are each a hydrogen atom, or are absent when a carbon atom bonded to R¹ and a carbon atom bonded to R³ are bonded to each other to form a double bond;
   R⁵ is a hydrogen atom or an oxo group;
   one of X and Y is an oxy group, and the other is a group represented by the following formula (II):

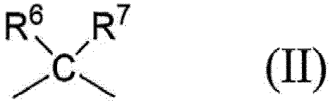

      wherein R⁶ is a hydrogen atom or a methyl group;
   R⁷ is a hydrogen atom, or is absent when a carbon atom bonded to R⁵ and a carbon atom bonded to R⁶ are bonded to each other to form a double bond;
   a doublet consisting of a solid line and a broken line is a single bond or a double bond,
   provided that R⁵ is an oxo group when R¹ and R³ are simultaneously hydrogen atoms,
   cyclotene, and
   a fatty acid having 3 or 4 carbon atoms.
[63] The method of [62], wherein the off-taste suppressing compound is at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid.
[64] The method of [62] or [63], wherein the off-taste suppressing compound is at least one compound selected from the group consisting of furfural, 2-acetylfuran, cyclotene, and propionic acid.
[65] The method of any one of [62] to [64], wherein the off-taste suppressing compound comprises furfural, 2-acetylfuran, cyclotene, and propionic acid.
[66] The method of any one of [62] to [65], wherein the off-taste substance comprises at least one selected from the group consisting of an inorganic salt, an amino acid or a salt thereof, a high-intensity sweetener, a vegetable protein, a flavonoid compound, a pH-adjusting or bacteriostatic agent, and a thickening polysaccharide.
[67] The method of [66], wherein the inorganic salt comprises at least one selected from the group consisting of potassium chloride, magnesium chloride, and calcium chloride.
[68] The method of [66] or [67], wherein the amino acid or a salt thereof comprises at least one selected from the group consisting of a branched chain amino acid, tryptophan, phenylalanine, arginine, cysteine, methionine, lysine, histidine, tyrosine, glycine, and salts thereof.
[69] The method of any one of [66] to [68], wherein the high-intensity sweetener comprises at least one selected from the group consisting of acesulfame potassium, sucralose, aspartame, stevia, thaumatin, saccharin, saccharin sodium, licorice, neotame, and advantame.
[70] The method of any one of [66] to [69], wherein the vegetable protein comprises at least one selected from the group consisting of soy protein, pea protein, fava bean protein, chickpea protein, almond protein, and sunflower protein.
[71] The method of any one of [66] to [70], wherein the flavonoid compound comprises at least one selected from the group consisting of a flavanol compound, a flavanone compound, a flavone compound, a flavol compound, and an isoflavone compound.
[72] The method of any one of [66] to [71], wherein the pH-adjusting or bacteriostatic agent comprises at least one selected from the group consisting of acetic acid or salts thereof, phosphoric acid or salts thereof, citric acid or salts thereof, and glycine.
[73] The method of any one of [66] to [72], wherein the thickening polysaccharide comprises at least one selected from the group consisting of a cellulose derivative, alginic acids, xanthan gum, guar gum, locust bean gum, tara gum, gellan gum, carrageenan, gum tragacanth, gum arabic, caraya gum, tamarind seed gum, psyllium seed gum, curdlan, and pectin.
[74] The agent of any one of [62] to [73], wherein the off-taste substance comprises at least one selected from the group consisting of potassium chloride, a branched chain amino acid, acesulfame potassium, sucralose, aspartame, stevia, soy protein, pea protein, fava bean protein, flavanol compound, sodium acetate, disodium phosphate, and a cellulose derivative.
[75] The method of any one of [62] to [74], wherein, when the oral product is an oral product comprising at least a high-intensity sweetener added thereto, the off-taste suppressing compound is at least one compound selected from the group consisting of 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid.
[76] The method of any one of [62] to [75], wherein, when the oral product is an oral product comprising at least potassium chloride added thereto, the off-taste suppressing compound is at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, and butyric acid.
[77] The method of any one of [62] to [76], wherein the off-taste suppressing compound is added to the oral product in an amount of 0.005 - 8000 weight ppm with respect to the amount of the off-taste substance added to the oral product.
[78] The method of any one of [62] to [77], wherein, when the off-taste suppressing compound comprises compound (I), the compound (I) is added to the oral product in an amount of 0.005 - 8000 weight ppm with respect to the amount of the off-taste substance added to the oral product.
[79] The method of any one of [62] to [78], wherein, when the off-taste suppressing compound comprises furfural, the furfural is added to the oral product in an amount of 0.005 - 8000 weight ppm with respect to the amount of the off-taste substance added to the oral product.
[80] The method of any one of [62] to [79], wherein, when the off-taste suppressing compound comprises 2-acetylfuran, the 2-acetylfuran is added to the oral product in an amount of 0.01 - 8000 weight ppm with respect to the amount of the off-taste substance added to the oral product.
[81] The method of any one of [62] to [80], wherein, when the off-taste suppressing compound comprises cyclotene, the cyclotene is added to the oral product in an amount of 0.005 - 8000 weight ppm with respect to the amount of the off-taste substance added to the oral product.
[82] The method of any one of [62] to [81], wherein, when the off-taste suppressing compound comprises a fatty acid having 3 or 4 carbon atoms, the fatty acid having 3 or 4 carbon atoms is added to the oral product in an amount of 0.05 - 8000 weight ppm with respect to the amount of the off-taste substance added to the oral product.
[83] The method of any one of [62] to [82], wherein, when the off-taste substance added to the oral product comprises an inorganic salt, the off-taste suppressing compound is added to the oral product in an amount of 0.05 - 5000 weight ppm with respect to the amount of the inorganic salt added to the oral product.
[84] The method of any one of [62] to [83], wherein, when the off-taste substance added to the oral product comprises an inorganic salt, and the off-taste suppressing compound comprises compound (I), the compound (I) is added to the oral product in an amount of 0.05 - 5000 weight ppm with respect to the amount of the inorganic salt added to the oral product.
[85] The method of any one of [62] to [84], wherein, when the off-taste substance added to the oral product comprises an inorganic salt, and the off-taste suppressing compound comprises furfural, the furfural is added to the oral product in an amount of 0.3 - 1000 weight ppm with respect to the amount of the inorganic salt added to the oral product.
[86] The method of any one of [62] to [85], wherein, when the off-taste substance added to the oral product comprises an inorganic salt, and the off-taste suppressing compound comprises 2-acetylfuran, the 2-acetylfuran is added to the oral product in an amount of 3 - 1000 weight ppm with respect to the amount of the inorganic salt added to the oral product.
[87] The method of any one of [62] to [86], wherein, when the off-taste substance added to the oral product comprises an inorganic salt, and the off-taste suppressing compound comprises cyclotene, the cyclotene is added to the oral product in an amount of 0.05 - 2000 weight ppm with respect to the amount of the inorganic salt added to the oral product.
[88] The method of any one of [62] to [87], wherein, when the off-taste substance added to the oral product comprises an inorganic salt, and the off-taste suppressing compound comprises a fatty acid having 3 or 4 carbon atoms, the fatty acid having 3 or 4 carbon atoms is added to the oral product in an amount of 10 - 5000 weight ppm with respect to the amount of the inorganic salt added to the oral product.
[89] The method of any one of [62] to [88], wherein, when the off-taste substance added to the oral product comprises an amino acid or a salt thereof, the off-taste suppressing compound is added to the oral product in an amount of 0.005 - 1000 weight ppm with respect to the amount of the amino acid or a salt thereof added to the oral product.
[90] The method of any one of [62] to [89], wherein, when the off-taste substance added to the oral product comprises an amino acid or a salt thereof, and the off-taste suppressing compound comprises compound (I), the compound (I) is added to the oral product in an amount of 0.005 - 100 weight ppm with respect to the amount of the amino acid or a salt thereof added to the oral product.
[91] The method of any one of [62] to [90], wherein, when the off-taste substance added to the oral product comprises an amino acid or a salt thereof, and the off-taste suppressing compound comprises furfural, the furfural is added to the oral product in an amount of 0.005 - 50 weight ppm with respect to the amount of the amino acid or a salt thereof added to the oral product.
[92] The method of any one of [62] to [91], wherein, when the off-taste substance added to the oral product comprises an amino acid or a salt thereof, and the off-taste suppressing compound comprises 2-acetylfuran, the 2-acetylfuran is added to the oral product in an amount of 0.05 - 100 weight ppm with respect to the amount of the amino acid or a salt thereof added to the oral product.
[93] The method of any one of [62] to [92], wherein, when the off-taste substance added to the oral product comprises an amino acid or a salt thereof, and the off-taste suppressing compound comprises cyclotene, the cyclotene is added to the oral product in an amount of 0.005 - 50 weight ppm with respect to the amount of the amino acid or a salt thereof added to the oral product.
[94] The method of any one of [62] to [93], wherein, when the off-taste substance added to the oral product comprises an amino acid or a salt thereof, and the off-taste suppressing compound comprises a fatty acid having 3 or 4 carbon atoms, the fatty acid having 3 or 4 carbon atoms is added to the oral product in an amount of 0.5 - 1000 weight ppm with respect to the amount of the amino acid or a salt thereof added to the oral product.
[95] The method of any one of [62] to [94], wherein, when the off-taste substance added to the oral product comprises a high-intensity sweetener, the off-taste suppressing compound is added to the oral product in an amount of 0.1 - 8000 weight ppm with respect to the amount of the high-intensity sweetener added to the oral product.
[96] The method of any one of [62] to [95], wherein, when the off-taste substance added to the oral product comprises a high-intensity sweetener, and the off-taste suppressing compound comprises compound (I), the compound (I) is added to the oral product in an amount of 0.1 - 8000 weight ppm with respect to the amount of the high-intensity sweetener added to the oral product.
[97] The method of any one of [62] to [96], wherein, when the off-taste substance added to the oral product comprises a high-intensity sweetener, and the off-taste suppressing compound comprises cyclotene, the cyclotene is added to the oral product in an amount of 0.1 - 8000 weight ppm with respect to the amount of the high-intensity sweetener added to the oral product.
[98] The method of any one of [62] to [97], wherein, when the off-taste substance added to the oral product comprises a high-intensity sweetener, and the off-taste suppressing compound comprises a fatty acid having 3 or 4 carbon atoms, the fatty acid having 3 or 4 carbon atoms is added to the oral product in an amount of 1 - 8000 weight ppm with respect to the amount of the high-intensity sweetener added to the oral product.
[99] The method of any one of [62] to [98], wherein, when the off-taste substance added to the oral product comprises a vegetable protein, the off-taste suppressing compound is added to the oral product in an amount of 0.01 - 250 weight ppm with respect to the amount of the vegetable protein added to the oral product.
[100] The method of any one of [62] to [99], wherein, when the off-taste substance added to the oral product comprises a vegetable protein, and the off-taste suppressing compound comprises compound (I), the compound (I) is added to the oral product in an amount of 0.01 - 250 weight ppm with respect to the amount of the vegetable protein added to the oral product.
[101] The method of any one of [62] to [100], wherein, when the off-taste substance added to the oral product comprises a vegetable protein, and the off-taste suppressing compound comprises furfural, the furfural is added to the oral product in an amount of 0.01 - 15 weight ppm with respect to the amount of the vegetable protein added to the oral product.
[102] The method of any one of [62] to [101], wherein, when the off-taste substance added to the oral product comprises a vegetable protein, and the off-taste suppressing compound comprises 2-acetylfuran, the 2-acetylfuran is added to the oral product in an amount of 0.01 - 25 weight ppm with respect to the amount of the vegetable protein added to the oral product.
[103] The method of any one of [62] to [102], wherein, when the off-taste substance added to the oral product comprises a vegetable protein, and the off-taste suppressing compound comprises cyclotene, the cyclotene is added to the oral product in an amount of 0.01 - 15 weight ppm with respect to the amount of the vegetable protein added to the oral product.
[104] The method of any one of [62] to [103], wherein, when the off-taste substance added to the oral product comprises a vegetable protein, and the off-taste suppressing compound comprises a fatty acid having 3 or 4 carbon atoms, the fatty acid having 3 or 4 carbon atoms is added to the oral product in an amount of 0.05 - 250 weight ppm with respect to the amount of the vegetable protein added to the oral product.
[105] The method of any one of [62] to [104], wherein, when the off-taste substance added to the oral product comprises a flavonoid compound, the off-taste suppressing compound is added to the oral product in an amount of 0.1 - 8000 weight ppm with respect to the amount of the flavonoid compound added to the oral product.
[106] The method of any one of [62] to [105], wherein, when the off-taste substance added to the oral product comprises a flavonoid compound, and the off-taste suppressing compound comprises compound (I), the compound (I) is added to the oral product in an amount of 0.1 - 8000 weight ppm with respect to the amount of the flavonoid compound added to the oral product.
[107] The method of any one of [62] to [106], wherein, when the off-taste substance added to the oral product comprises a flavonoid compound, and the off-taste suppressing compound comprises furfural or 2-acetylfuran, the furfural or 2-acetylfuran is added to the oral product in an amount of 0.1 - 1000 weight ppm with respect to the amount of the flavonoid compound added to the oral product.
[108] The method of any one of [62] to [107], wherein, when the off-taste substance added to the oral product comprises a flavonoid compound, and the off-taste suppressing compound comprises cyclotene, the cyclotene is added to the oral product in an amount of 0.1 - 1000 weight ppm with respect to the amount of the flavonoid compound added to the oral product.
[109] The method of any one of [62] to [108], wherein, when the off-taste substance added to the oral product comprises a flavonoid compound, and the off-taste suppressing compound comprises a fatty acid having 3 or 4 carbon atoms, the fatty acid having 3 or 4 carbon atoms is added to the oral product in an amount of 1 - 8000 weight ppm with respect to the amount of the flavonoid compound added to the oral product.
[110] The method of any one of [62] to [109], wherein, when the off-taste substance added to the oral product comprises a pH-adjusting or bacteriostatic agent, the off-taste suppressing compound is added to the oral product in an amount of 0.01 - 500 weight ppm with respect to the amount of the pH-adjusting or bacteriostatic agent added to the oral product.
[111] The method of any one of [62] to [110], wherein, when the off-taste substance added to the oral product comprises a pH-adjusting or bacteriostatic agent, and the off-taste suppressing compound comprises compound (I), the compound (I) is added to the oral product in an amount of 0.01 - 500 weight ppm with respect to the amount of the pH-adjusting or bacteriostatic agent added to the oral product.
[112] The method of any one of [62] to [111], wherein, when the off-taste substance added to the oral product comprises a pH-adjusting or bacteriostatic agent, and the off-taste suppressing compound comprises furfural or 2-acetylfuran, the furfural or 2-acetylfuran is added to the oral product in an amount of 0.01 - 50 weight ppm with respect to the amount of the pH-adjusting or bacteriostatic agent added to the oral product.
[113] The method of any one of [62] to [112], wherein, when the off-taste substance added to the oral product comprises a pH-adjusting or bacteriostatic agent, and the off-taste suppressing compound comprises cyclotene, the cyclotene is added to the oral product in an amount of 0.01 - 50 weight ppm with respect to the amount of the pH-adjusting or bacteriostatic agent added to the oral product.
[114] The method of any one of [62] to [113], wherein, when the off-taste substance added to the oral product comprises a pH-adjusting or bacteriostatic agent, and the off-taste suppressing compound comprises a fatty acid having 3 or 4 carbon atoms, the fatty acid having 3 or 4 carbon atoms is added to the oral product in an amount of 0.1 - 500 weight ppm with respect to the amount of the pH-adjusting or bacteriostatic agent added to the oral product.
[115] The method of any one of [62] to [114], wherein, when the off-taste substance added to the oral product comprises a thickening polysaccharide, the off-taste suppressing compound is added to the oral product in an amount of 0.05 - 500 weight ppm with respect to the amount of the thickening polysaccharide added to the oral product.
[116] The method of any one of [62] to [115], wherein, when the off-taste substance added to the oral product comprises a thickening polysaccharide, and the off-taste suppressing compound comprises compound (I), the compound (I) is added to the oral product in an amount of 0.05 - 500 weight ppm with respect to the amount of the thickening polysaccharide added to the oral product.
[117] The method of any one of [62] to [116], wherein, when the off-taste substance added to the oral product comprises a thickening polysaccharide, and the off-taste suppressing compound comprises furfural or 2-acetylfuran, the furfural or 2-acetylfuran is added to the oral product in an amount of 0.05 - 50 weight ppm with respect to the amount of the thickening polysaccharide added to the oral product.
[118] The method of any one of [62] to [117], wherein, when the off-taste substance added to the oral product comprises a thickening polysaccharide, and the off-taste suppressing compound comprises cyclotene, the cyclotene is added to the oral product in an amount of 0.05 - 50 weight ppm with respect to the amount of the thickening polysaccharide added to the oral product.
[119] The method of any one of [62] to [118], wherein, when the off-taste substance added to the oral product comprises a thickening polysaccharide, and the off-taste suppressing compound comprises a fatty acid having 3 or 4 carbon atoms, the fatty acid having 3 or 4 carbon atoms is added to the oral product in an amount of 0.5 - 500 weight ppm with respect to the amount of the thickening polysaccharide added to the oral product.
[120] The method of any one of [62] to [119], wherein the oral product is a food.
[121] The method of any one of [62] to [120], wherein the off-taste of the oral product derives from an off-taste substance added to the oral product.
[122] The method of any one of [62] to [121], wherein the off-taste is at least one selected from the group consisting of a bitter taste, a metallic taste, a harsh taste, an astringent taste, and a rough taste.
[123] A method for producing an oral product, comprising adding at least one compound (hereinafter to be referred to as an off-taste suppressing compound) selected from the group consisting of
   a compound represented by the following formula (I):

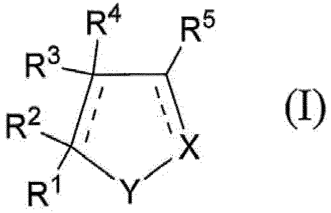

      wherein
   R¹ and R³ are each independently a hydrogen atom, a hydroxy group, a methyl group, a formyl group, an acetyl group, or an acetoxy group;
   R² and R⁴ are each a hydrogen atom, or are absent when a carbon atom bonded to R¹ and a carbon atom bonded to R³ are bonded to each other to form a double bond;
   R⁵ is a hydrogen atom or an oxo group;
   one of X and Y is an oxy group, and the other is a group represented by the following formula (II):

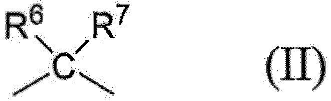

      wherein R⁶ is a hydrogen atom or a methyl group;
   R⁷ is a hydrogen atom, or is absent when a carbon atom bonded to R⁵ and a carbon atom bonded to R⁶ are bonded to each other to form a double bond;
   a doublet consisting of a solid line and a broken line is a single bond or a double bond,
   provided that R⁵ is an oxo group when R¹ and R³ are simultaneously hydrogen atoms,

   cyclotene, and
   a fatty acid having 3 or 4 carbon atoms, and
   an off-taste substance.
[124] The method of [123], wherein the off-taste suppressing compound is at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid.
[125] The method of [123] or [124], wherein the off-taste suppressing compound is at least one compound selected from the group consisting of furfural, 2-acetylfuran, cyclotene, and propionic acid.
[126] The method of any one of [123] to [125], wherein the off-taste suppressing compound comprises furfural, 2-acetylfuran, cyclotene, and propionic acid.
[127] The method of any one of [123] to [126], wherein the off-taste substance comprises at least one selected from the group consisting of an inorganic salt, an amino acid or a salt thereof, a high-intensity sweetener, a vegetable protein, a flavonoid compound, a pH-adjusting or bacteriostatic agent, and a thickening polysaccharide.
[128] The method of [127], wherein the inorganic salt comprises at least one selected from the group consisting of potassium chloride, magnesium chloride, and calcium chloride.
[129] The method of [127] or [128], wherein the amino acid or a salt thereof comprises at least one selected from the group consisting of a branched chain amino acid, tryptophan, phenylalanine, arginine, cysteine, methionine, lysine, histidine, tyrosine, glycine, and salts thereof.
[130] The method of any one of [127] to [129], wherein the high-intensity sweetener comprises at least one selected from the group consisting of acesulfame potassium, sucralose, aspartame, stevia, thaumatin, saccharin, saccharin sodium, licorice, neotame, and advantame.
[131] The method of any one of [127] to [130], wherein the vegetable protein comprises at least one selected from the group consisting of soy protein, pea protein, fava bean protein, chickpea protein, almond protein, and sunflower protein.
[132] The method of any one of [127] to [131], wherein the flavonoid compound comprises at least one selected from the group consisting of a flavanol compound, a flavanone compound, a flavone compound, a flavol compound, and an isoflavone compound.
[133] The method of any one of [127] to [132], wherein the pH-adjusting or bacteriostatic agent comprises at least one selected from the group consisting of acetic acid or salts thereof, phosphoric acid or salts thereof, citric acid or salts thereof, and glycine.
[134] The method of any one of [127] to [133], wherein the thickening polysaccharide comprises at least one selected from the group consisting of a cellulose derivative, alginic acids, xanthan gum, guar gum, locust bean gum, tara gum, gellan gum, carrageenan, gum tragacanth, gum arabic, caraya gum, tamarind seed gum, psyllium seed gum, curdlan, and pectin.
[135] The method of any one of [123] to [134], wherein the off-taste substance comprises at least one selected from the group consisting of potassium chloride, a branched chain amino acid, acesulfame potassium, sucralose, aspartame, stevia, soy protein, pea protein, fava bean protein, flavanol compound, sodium acetate, disodium phosphate, and a cellulose derivative.
[136] The method of any one of [123] to [135], wherein, when the oral product is an oral product comprising at least a high-intensity sweetener added thereto, the off-taste suppressing compound is at least one compound selected from the group consisting of 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid.
[137] The method of any one of [123] to [136], wherein, when the oral product is an oral product comprising at least potassium chloride added thereto, the off-taste suppressing compound is at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, and butyric acid.
[138] The method of any one of [123] to [137], wherein the off-taste suppressing compound is added to the oral product in an amount of 0.005 - 8000 weight ppm with respect to the amount of the off-taste substance to be added to the oral product.
[139] The method of any one of [123] to [138], wherein, when the off-taste suppressing compound comprises compound (I), the compound (I) is added to the oral product in an amount of 0.005 - 8000 weight ppm with respect to the amount of the off-taste substance to be added to the oral product.
[140] The method of any one of [123] to [139], wherein, when the off-taste suppressing compound comprises furfural, the furfural is added to the oral product in an amount of 0.005 - 8000 weight ppm with respect to the amount of the off-taste substance to be added to the oral product.
[141] The method of any one of [123] to [140], wherein, when the off-taste suppressing compound comprises 2-acetylfuran, the 2-acetylfuran is added to the oral product in an amount of 0.01 - 8000 weight ppm with respect to the amount of the off-taste substance to be added to the oral product.
[142] The method of any one of [123] to [141], wherein, when the off-taste suppressing compound comprises cyclotene, the cyclotene is added to the oral product in an amount of 0.005 - 8000 weight ppm with respect to the amount of the off-taste substance to be added to the oral product.
[143] The method of any one of [123] to [142], wherein, when the off-taste suppressing compound comprises a fatty acid having 3 or 4 carbon atoms, the fatty acid having 3 or 4 carbon atoms is added to the oral product in an amount of 0.05 - 8000 weight ppm with respect to the amount of the off-taste substance to be added to the oral product.
[144] The method of any one of [123] to [143], wherein, when the off-taste substance added to the oral product comprises an inorganic salt, the off-taste suppressing compound is added to the oral product in an amount of 0.05 - 5000 weight ppm with respect to the amount of the inorganic salt added to the oral product.
[145] The method of any one of [123] to [144], wherein, when the off-taste substance added to the oral product comprises an inorganic salt, and the off-taste suppressing compound comprises compound (I), the compound (I) is added to the oral product in an amount of 0.05 - 5000 weight ppm with respect to the amount of the inorganic salt added to the oral product.
[146] The method of any one of [123] to [145], wherein, when the off-taste substance added to the oral product comprises an inorganic salt, and the off-taste suppressing compound comprises furfural, the furfural is added to the oral product in an amount of 0.3 - 1000 weight ppm with respect to the amount of the inorganic salt added to the oral product.
[147] The method of any one of [123] to [146], wherein, when the off-taste substance added to the oral product comprises an inorganic salt, and the off-taste suppressing compound comprises 2-acetylfuran, the 2-acetylfuran is added to the oral product in an amount of 3 - 1000 weight ppm with respect to the amount of the inorganic salt added to the oral product.
[148] The method of any one of [123] to [147], wherein, when the off-taste substance added to the oral product comprises an inorganic salt, and the off-taste suppressing compound comprises cyclotene, the cyclotene is added to the oral product in an amount of 0.05 - 2000 weight ppm with respect to the amount of the inorganic salt added to the oral product.
[149] The method of any one of [123] to [148], wherein, when the off-taste substance added to the oral product comprises an inorganic salt, and the off-taste suppressing compound comprises a fatty acid having 3 or 4 carbon atoms, the fatty acid having 3 or 4 carbon atoms is added to the oral product in an amount of 10 - 5000 weight ppm with respect to the amount of the inorganic salt added to the oral product.
[150] The method of any one of [123] to [149], wherein, when the off-taste substance added to the oral product comprises an amino acid or a salt thereof, the off-taste suppressing compound is added to the oral product in an amount of 0.005 - 1000 weight ppm with respect to the amount of the amino acid or a salt thereof added to the oral product.
[151] The method of any one of [123] to [150], wherein, when the off-taste substance added to the oral product comprises an amino acid or a salt thereof, and the off-taste suppressing compound comprises compound (I), the compound (I) is added to the oral product in an amount of 0.005 - 100 weight ppm with respect to the amount of the amino acid or a salt thereof added to the oral product.
[152] The method of any one of [123] to [151], wherein, when the off-taste substance added to the oral product comprises an amino acid or a salt thereof, and the off-taste suppressing compound comprises furfural, the furfural is added to the oral product in an amount of 0.005 - 50 weight ppm with respect to the amount of the amino acid or a salt thereof added to the oral product.
[153] The method of any one of [123] to [152], wherein, when the off-taste substance added to the oral product comprises an amino acid or a salt thereof, and the off-taste suppressing compound comprises 2-acetylfuran, the 2-acetylfuran is added to the oral product in an amount of 0.05 - 100 weight ppm with respect to the amount of the amino acid or a salt thereof added to the oral product.
[154] The method of any one of [123] to [153], wherein, when the off-taste substance added to the oral product comprises an amino acid or a salt thereof, and the off-taste suppressing compound comprises cyclotene, the cyclotene is added to the oral product in an amount of 0.005 - 50 weight ppm with respect to the amount of the amino acid or a salt thereof added to the oral product.
[155] The method of any one of [123] to [154], wherein, when the off-taste substance added to the oral product comprises an amino acid or a salt thereof, and the off-taste suppressing compound comprises a fatty acid having 3 or 4 carbon atoms, the fatty acid having 3 or 4 carbon atoms is added to the oral product in an amount of 0.5 - 1000 weight ppm with respect to the amount of the amino acid or a salt thereof added to the oral product.
[156] The method of any one of [123] to [155], wherein, when the off-taste substance added to the oral product comprises a high-intensity sweetener, the off-taste suppressing compound is added to the oral product in an amount of 0.1 - 8000 weight ppm with respect to the amount of the high-intensity sweetener added to the oral product.
[157] The method of any one of [123] to [156], wherein, when the off-taste substance added to the oral product comprises a high-intensity sweetener, and the off-taste suppressing compound comprises compound (I), the compound (I) is added to the oral product in an amount of 0.1 - 8000 weight ppm with respect to the amount of the high-intensity sweetener added to the oral product.
[158] The method of any one of [123] to [157], wherein, when the off-taste substance added to the oral product comprises a high-intensity sweetener, and the off-taste suppressing compound comprises cyclotene, the cyclotene is added to the oral product in an amount of 0.1 - 8000 weight ppm with respect to the amount of the high-intensity sweetener added to the oral product.
[159] The method of any one of [123] to [158], wherein, when the off-taste substance added to the oral product comprises a high-intensity sweetener, and the off-taste suppressing compound comprises a fatty acid having 3 or 4 carbon atoms, the fatty acid having 3 or 4 carbon atoms is added to the oral product in an amount of 1 - 8000 weight ppm with respect to the amount of the high-intensity sweetener added to the oral product.
[160] The method of any one of [123] to [159], wherein, when the off-taste substance added to the oral product comprises a vegetable protein, the off-taste suppressing compound is added to the oral product in an amount of 0.01 - 250 weight ppm with respect to the amount of the vegetable protein added to the oral product.
[161] The method of any one of [123] to [160], wherein, when the off-taste substance added to the oral product comprises a vegetable protein, and the off-taste suppressing compound comprises compound (I), the compound (I) is added to the oral product in an amount of 0.01 - 250 weight ppm with respect to the amount of the vegetable protein added to the oral product.
[162] The method of any one of [123] to [161], wherein, when the off-taste substance added to the oral product comprises a vegetable protein, and the off-taste suppressing compound comprises furfural, the furfural is added to the oral product in an amount of 0.01 - 15 weight ppm with respect to the amount of the vegetable protein added to the oral product.
[163] The method of any one of [123] to [162], wherein, when the off-taste substance added to the oral product comprises a vegetable protein, and the off-taste suppressing compound comprises 2-acetylfuran, the 2-acetylfuran is added to the oral product in an amount of 0.01 - 25 weight ppm with respect to the amount of the vegetable protein added to the oral product.
[164] The method of any one of [123] to [163], wherein, when the off-taste substance added to the oral product comprises a vegetable protein, and the off-taste suppressing compound comprises cyclotene, the cyclotene is added to the oral product in an amount of 0.01 - 15 weight ppm with respect to the amount of the vegetable protein added to the oral product.
[165] The method of any one of [123] to [164], wherein, when the off-taste substance added to the oral product comprises a vegetable protein, and the off-taste suppressing compound comprises a fatty acid having 3 or 4 carbon atoms, the fatty acid having 3 or 4 carbon atoms is added to the oral product in an amount of 0.05 - 250 weight ppm with respect to the amount of the vegetable protein added to the oral product.
[166] The method of any one of [123] to [165], wherein, when the off-taste substance added to the oral product comprises a flavonoid compound, the off-taste suppressing compound is added to the oral product in an amount of 0.1 - 8000 weight ppm with respect to the amount of the flavonoid compound added to the oral product.
[167] The method of any one of [123] to [166], wherein, when the off-taste substance added to the oral product comprises a flavonoid compound, and the off-taste suppressing compound comprises compound (I), the compound (I) is added to the oral product in an amount of 0.1 - 8000 weight ppm with respect to the amount of the flavonoid compound added to the oral product.
[168] The method of any one of [123] to [167], wherein, when the off-taste substance added to the oral product comprises a flavonoid compound, and the off-taste suppressing compound comprises furfural or 2-acetylfuran, the furfural or 2-acetylfuran is added to the oral product in an amount of 0.1 - 1000 weight ppm with respect to the amount of the flavonoid compound added to the oral product.
[169] The method of any one of [123] to [168], wherein, when the off-taste substance added to the oral product comprises a flavonoid compound, and the off-taste suppressing compound comprises cyclotene, the cyclotene is added to the oral product in an amount of 0.1 - 1000 weight ppm with respect to the amount of the flavonoid compound added to the oral product.
[170] The method of any one of [123] to [169], wherein, when the off-taste substance added to the oral product comprises a flavonoid compound, and the off-taste suppressing compound comprises a fatty acid having 3 or 4 carbon atoms, the fatty acid having 3 or 4 carbon atoms is added to the oral product in an amount of 1 - 8000 weight ppm with respect to the amount of the flavonoid compound added to the oral product.
[171] The method of any one of [123] to [170], wherein, when the off-taste substance added to the oral product comprises a pH-adjusting or bacteriostatic agent, the off-taste suppressing compound is added to the oral product in an amount of 0.01 - 500 weight ppm with respect to the amount of the pH-adjusting or bacteriostatic agent added to the oral product.
[172] The method of any one of [123] to [171], wherein, when the off-taste substance added to the oral product comprises a pH-adjusting or bacteriostatic agent, and the off-taste suppressing compound comprises compound (I), the compound (I) is added to the oral product in an amount of 0.01 - 500 weight ppm with respect to the amount of the pH-adjusting or bacteriostatic agent added to the oral product.
[173] The method of any one of [123] to [172], wherein, when the off-taste substance added to the oral product comprises a pH-adjusting or bacteriostatic agent, and the off-taste suppressing compound comprises furfural or 2-acetylfuran, the furfural or 2-acetylfuran is added to the oral product in an amount of 0.01 - 50 weight ppm with respect to the amount of the pH-adjusting or bacteriostatic agent added to the oral product.
[174] The method of any one of [123] to [173], wherein, when the off-taste substance added to the oral product comprises a pH-adjusting or bacteriostatic agent, and the off-taste suppressing compound comprises cyclotene, the cyclotene is added to the oral product in an amount of 0.01 - 50 weight ppm with respect to the amount of the pH-adjusting or bacteriostatic agent added to the oral product.
[175] The method of any one of [123] to [174], wherein, when the off-taste substance added to the oral product comprises a pH-adjusting or bacteriostatic agent, and the off-taste suppressing compound comprises a fatty acid having 3 or 4 carbon atoms, the fatty acid having 3 or 4 carbon atoms is added to the oral product in an amount of 0.1 - 500 weight ppm with respect to the amount of the pH-adjusting or bacteriostatic agent added to the oral product.
[176] The method of any one of [123] to [175], wherein, when the off-taste substance added to the oral product comprises a thickening polysaccharide, the off-taste suppressing compound is added to the oral product in an amount of 0.05 - 500 weight ppm with respect to the amount of the thickening polysaccharide added to the oral product.
[177] The method of any one of [123] to [176], wherein, when the off-taste substance added to the oral product comprises a thickening polysaccharide, and the off-taste suppressing compound comprises compound (I), the compound (I) is added to the oral product in an amount of 0.05 - 500 weight ppm with respect to the amount of the thickening polysaccharide added to the oral product.
[178] The method of any one of [123] to [177], wherein, when the off-taste substance added to the oral product comprises a thickening polysaccharide, and the off-taste suppressing compound comprises furfural or 2-acetylfuran, the furfural or 2-acetylfuran is added to the oral product in an amount of 0.05 - 50 weight ppm with respect to the amount of the thickening polysaccharide added to the oral product.
[179] The method of any one of [123] to [178], wherein, when the off-taste substance added to the oral product comprises a thickening polysaccharide, and the off-taste suppressing compound comprises cyclotene, the cyclotene is added to the oral product in an amount of 0.05 - 50 weight ppm with respect to the amount of the thickening polysaccharide added to the oral product.
[180] The method of any one of [123] to [179], wherein, when the off-taste substance added to the oral product comprises a thickening polysaccharide, and the off-taste suppressing compound comprises a fatty acid having 3 or 4 carbon atoms, the fatty acid having 3 or 4 carbon atoms is added to the oral product in an amount of 0.5 - 500 weight ppm with respect to the amount of the thickening polysaccharide added to the oral product.
[181] The method of any one of [123] to [180], wherein the oral product is a food.
[182] The method of any one of [123] to [181], wherein the off-taste of the oral product derives from an off-taste substance added to the oral product.
[183] The method of any one of [123] to [182], wherein the off-taste is at least one selected from the group consisting of a bitter taste, a metallic taste, a harsh taste, an astringent taste, and a rough taste.
[184] The method of any one of [123] to [183], wherein the oral product is an oral product with a suppressed off-taste.

### [Advantageous Effects of Invention]

According to the present invention, an agent for suppressing an off-taste of an oral product containing an off-taste substance (e.g., potassium chloride and the like inorganic salt, amino acid or a salt thereof, high-intensity sweetener, vegetable protein, flavonoid compound, pH-adjusting or bacteriostatic agent, thickening polysaccharide, etc.) added thereto can be provided.

In addition, the present invention can also provide a method for suppressing an off-taste of an oral product containing an off-taste substance (e.g., potassium chloride and the like inorganic salt, amino acid or a salt thereof, high-intensity sweetener, vegetable protein, flavonoid compound, pH-adjusting or bacteriostatic agent, thickening polysaccharide, etc.) added thereto, and a method for producing an oral product containing an off-taste substance (e.g., potassium chloride and the like inorganic salt, amino acid or a salt thereof, high-intensity sweetener, vegetable protein, flavonoid compound, pH-adjusting or bacteriostatic agent, thickening polysaccharide, etc.) added thereto in which the off-taste is suppressed.

### [Description of Embodiments]

### 1. off-taste suppressing agent

One of the characteristics of the off-taste suppressing agent of the present invention (referred to as "the agent of the present invention" at times in the present specification) is that it contains at least one compound (sometimes referred to as an "off-taste suppressing compound" in the present specification) selected from the group consisting of
a compound represented by the following formula (I):

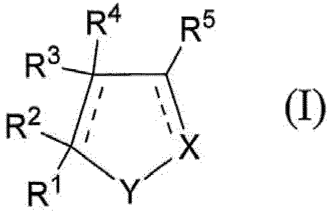

wherein
R¹ and R³ are each independently a hydrogen atom, a hydroxy group, a methyl group, a formyl group, an acetyl group, or an acetoxy group;
R² and R⁴ are each a hydrogen atom, or are absent when a carbon atom bonded to R¹ and a carbon atom bonded to R³ are bonded to each other to form a double bond;
R⁵ is a hydrogen atom or an oxo group;
one of X and Y is an oxy group, and the other is a group represented by the following formula (II):

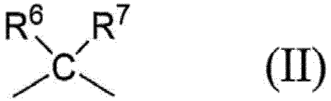

   wherein R⁶ is a hydrogen atom or a methyl group;
R⁷ is a hydrogen atom, or is absent when a carbon atom bonded to R⁵ and a carbon atom bonded to R⁶ are bonded to each other to form a double bond;
a doublet consisting of a solid line and a broken line is a single bond or a double bond,
provided that R⁵ is an oxo group when R¹ and R³ are simultaneously hydrogen atoms,
cyclotene, and
a fatty acid having 3 or 4 carbon atoms.

In the present invention, the "off-taste" refers to an uncomfortable taste and flavor that are not felt when ingesting or taking ordinary foods, oral medicines, or the like. Specific examples thereof include a bitter taste, a rough taste, a harsh taste, a metallic taste, an astringent taste (straining, feeling that the tongue is squeezed) and the like. The presence or absence and the degree thereof can be evaluated, for example, by sensory evaluation or the like by an expert panel.

In the present invention, "suppression" of the off-taste means making the intensity of the off-taste of a substance causing the off-taste (e.g., potassium chloride, etc.) partially or completely undetectable.

The agent of the present invention may contain one, or two or more of the compounds represented by the following formula (I) (hereinafter referred to as compound (I) at times) as the off-taste suppressing compound. 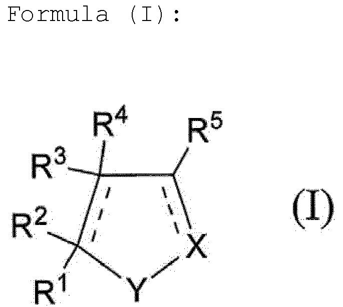 wherein
R¹ and R³ are each independently a hydrogen atom, a hydroxy group, a methyl group, a formyl group, an acetyl group or an acetoxy group;
R² and R⁴ are each independently a hydrogen atom, or are absent when a carbon atom bonded to R¹ and a carbon atom bonded to R³ are bonded to each other to form a double bond;
R⁵ is a hydrogen atom or an oxo group;
one of X and Y is an oxy group, and the other is a group represented by the following formula (II):

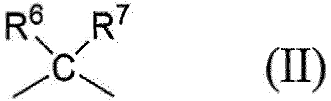

   wherein R⁶ is a hydrogen atom or a methyl group;
R⁷ is a hydrogen atom, or is absent when a carbon atom bonded to R⁵ and a carbon atom bonded to R⁶ are bonded to each other to form a double bond;
a doublet consisting of a solid line and a broken line is a single bond or a double bond,
provided that R⁵ is an oxo group when R¹ and R³ are simultaneously hydrogen atoms.

Each group in the formula (I) is explained below.

In the formula (I), R¹ and R³ are each independently a hydrogen atom, a hydroxy group (i.e., a group represented by - OH), a methyl group (i.e., a group represented by -CH₃), a formyl group (i.e., a group represented by -CHO), an acetyl group (i.e., a group represented by -C(=O)-CH₃), or an acetoxy group (i.e., a group represented by -O-C(=O)-CH₃).

R¹ is preferably a hydrogen atom, a methyl group, a formyl group, or an acetyl group, more preferably a methyl group, a formyl group, or an acetyl group, particularly preferably a formyl group or an acetyl group.

In one embodiment, R¹ may be a hydrogen atom, a methyl group, or an acetyl group, preferably a methyl group or an acetyl group, more preferably an acetyl group.

R³ is preferably a hydrogen atom, a hydroxy group, an acetyl group, or an acetoxy group, more preferably a hydrogen atom or an acetyl group, particularly preferably a hydrogen atom.

In the formula (I), R² and R⁴ are each a hydrogen atom, or are absent when a carbon atom bonded to R¹ and a carbon atom bonded to R³ are bonded to each other to form a double bond (i.e., when a doublet consisting of a solid line and a broken line between a carbon atom bonded to R¹ and a carbon atom bonded to R³ is a double bond).

In the formula (I), R⁵ is a hydrogen atom or an oxo group (i.e., a group represented by =O), preferably a hydrogen atom.

R⁵ is an oxo group when R¹ and R³ are simultaneously hydrogen atoms. In this case, a doublet consisting of a solid line and a broken line between the carbon atoms bonded to R⁵ and X is a single bond.

In the formula (I), one of X and Y is an oxy group (i.e., a group represented by -O-), and the other is a group represented by the following formula (II):

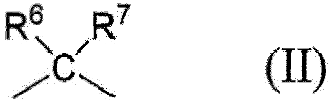

wherein R⁶ is a hydrogen atom or a methyl group;
R⁷ is a hydrogen atom, or is absent when a carbon atom bonded to R⁵ and a carbon atom bonded to R⁶ are bonded to each other to form a double bond.
X and Y are not oxy groups at the same time, and are not groups represented by the formula (II) at the same time.

In the formula (II), R⁶ is a hydrogen atom or a methyl group, preferably a hydrogen atom.

In the formula (II), R⁷ is a hydrogen atom, or is absent when X is a group represented by the formula (II), and a carbon atom bonded to R⁵ and a carbon atom bonded to R⁶ are bonded to each other to form a double bond (i.e., when X is a group represented by the formula (II), and a doublet consisting of a solid line and a broken line between the carbon atoms bonded to R⁵ and X is a double bond).

When a carbon atom bonded to R⁵ and a carbon atom bonded to R⁶ are bonded to each other to form a single bond or a double bond, X is a group represented by the formula (II) and Y is an oxy group.

In the formula (I), a doublet consisting of a solid line and a broken line (i.e., part denoted by 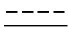 ) is a single bond or a double bond.

A doublet consisting of a solid line and a broken line between the carbon atoms bonded to R⁵ and X is a double bond when R⁵ is a hydrogen atom, and is a single bond when R⁵ is an oxo group.

Compound (I) may exclude a compound wherein R¹ is a formyl group, R³ is a hydrogen atom, a carbon atom bonded to R¹ and a carbon atom bonded to R³ are bonded to each other to form a double bond (i.e., a doublet consisting of a solid line and a broken line between the carbon atom bonded to R¹ and the carbon atom bonded to R³ is a double bond), R² and R⁴ are absent, R⁵ is a hydrogen atom, X is a group represented by the formula (II), R⁶ is a methyl group, a carbon atom bonded to R⁵ and a carbon atom bonded to R⁶ are bonded to each other to form double bond (i.e., a doublet consisting of a solid line and a broken line between the carbon atoms bonded to R⁵ an X is a double bond), R⁷ is absent, and Y is an oxy group; and a compound wherein R¹ is a methyl group, R³ is a hydrogen atom, a carbon atom bonded to R¹ and a carbon atom bonded to R³ are bonded to each other to form a double bond (i.e., a doublet consisting of a solid line and a broken line between the carbon atom bonded to R¹ and a carbon atom bonded to R³ is a double bond), R² and R⁴ are absent, R⁵ is a hydrogen atom, X is a group represented by the formula (II), R⁶ is a hydrogen atom, a carbon atom bonded to R⁵ and a carbon atom bonded to R⁶ are bonded to each other to form a double bond (i.e., a doublet consisting of a solid line and a broken line between the carbon atoms bonded to R⁵ and X is a double bond), R⁷ is absent, and Y is an oxy group.

Examples of the preferable compound (I) include compound (I) wherein
R¹ is a hydrogen atom, a methyl group, a formyl group, or an acetyl group;
R³ is a hydrogen atom, a hydroxy group, an acetyl group or an acetoxy group;
R² and R⁴ are each a hydrogen atom, or are absent when a carbon atom bonded to R¹ and a carbon atom bonded to R³ are bonded to each other to form double bond;
R⁵ is a hydrogen atom or an oxo group;
one of X and Y is an oxy group, and the other is a group represented by the following formula (II): 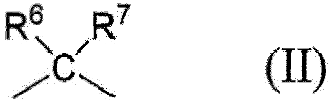 wherein R⁶ is a hydrogen atom or a methyl group;
R⁷ is a hydrogen atom, or is absent when a carbon atom bonded to R⁵ and a carbon atom bonded to R⁶ are bonded to each other to form a double bond);
a doublet consisting of a solid line and a broken line is a single bond or a double bond,
and the like.

The preferred embodiment of compound (I) is a compound represented by the following formula (III) (hereinafter referred to as compound (III) at times). 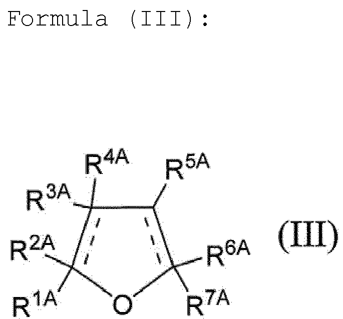 wherein
R^{1A} and R^{3A} are each independently a hydrogen atom, a hydroxy group, a methyl group, a formyl group, an acetyl group, or an acetoxy group;
R^{2A} and R^{4A} are each a hydrogen atom, or are absent when a carbon atom bonded to R^{1A} and a carbon atom bonded to R^{3A} are bonded to each other to form a double bond;
R^{5A} is a hydrogen atom or an oxo group;
R^{6A} is a hydrogen atom or a methyl group;
R^{7A} is a hydrogen atom, or is absent when a carbon atom bonded to R^{5A} and a carbon atom bonded to R^{6A} are bonded to each other to form a double bond;
a doublet consisting of a solid line and a broken line is a single bond or a double bond,
provided that R^{5A} is an oxo group when R^{1A} and R^{3A} are simultaneously hydrogen atoms.

Each group in the formula (III) is described below.

R^{1A}, R^{2A}, R^{3A}, R^{4A} and R^{5A} in the formula (III) are respectively as defined for R¹, R², R³, R⁴ and R⁵ in the formula (I), and preferred embodiment is also the same.

R^{6A} in the formula (III) is as defined for R⁶ in the formula (II), and preferred embodiment is also the same.

In the formula (III), R^{7A} is a hydrogen atom, or is absent when a carbon atom bonded to R^{5A} and a carbon atom bonded to R^{6A} are bonded to each other to form a double bond (i.e., when a doublet consisting of a solid line and a broken line between the carbon atom bonded to R^{5A} and the carbon atom bonded to R^{6A} is a double bond) .

A doublet consisting of a solid line and a broken line in the formula (III) is as defined for the doublet consisting of a solid line and a broken line in the formula (I).

A doublet consisting of a solid line and a broken line between the carbon atom bonded to R^{5A} and the carbon atom bonded to R^{6A} is a double bond when R^{5A} is a hydrogen atom, and a single bond when R^{5A} is an oxo group.

Compound (III) may exclude a compound wherein R^{1A} is a formyl group, R^{3A} is a hydrogen atom, a carbon atom bonded to R^{1A} and a carbon atom bonded to R^{3A} are bonded to each other to form a double bond (i.e., a doublet consisting of a solid line and a broken line between the carbon atom bonded to R^{1A} and the carbon atom bonded to R^{3A} is a double bond), R^{2A} and R^{4A} are absent, R^{5A} is a hydrogen atom, R^{6A} is a methyl group, a carbon atom bonded to R^{5A} and a carbon atom bonded to R^{6A} are bonded to each other to form a double bond (i.e., a doublet consisting of a solid line and a broken line between the carbon atom bonded to R^{5A} and the carbon atom bonded to R^{6A} is a double bond), and R^{7A} is absent; and a compound wherein R^{1A} is a methyl group, R^{3A} is a hydrogen atom, a carbon atom bonded to R^{1A} and a carbon atom bonded to R^{3A} are bonded to each other to form a double bond (i.e., a doublet consisting of a solid line and a broken line between the carbon atom bonded to R^{1A} and the carbon atom bonded to R^{3A} is a double bond), R^{2A} and R^{4A} are absent, R^{5A} is a hydrogen atom, R^{6A} is a hydrogen atom, a carbon atom bonded to R^{5A} and a carbon atom bonded to R^{6A} are bonded to each other to form a double bond (i.e., a doublet consisting of a solid line and a broken line between the carbon atom bonded to R^{5A} and the carbon atom bonded to R^{6A} is a double bond), and R^{7A} is absent.

Examples of a preferred compound (III) include compound (III) wherein
R^{1A} is a hydrogen atom, a methyl group, a formyl group, or an acetyl group;
R^{3A} is a hydrogen atom, a hydroxy group, an acetyl group, or an acetoxy group;
R^{2A} and R^{4A} are each a hydrogen atom, or are absent when a carbon atom bonded to R^{1A} and a carbon atom bonded to R^{3A} are bonded to each other to form a double bond;
R^{5A} is a hydrogen atom or an oxo group;
R^{6A} is a hydrogen atom or a methyl group;
R^{7A} is a hydrogen atom, or is absent when a carbon atom bonded to R^{5A} and a carbon atom bonded to R^{6A} are bonded to each other to form a double bond; and
a doublet consisting of a solid line and a broken line is a single bond or a double bond,
and the like.

A more preferred embodiment of compound (I) is a compound represented by the following formula (IV) (hereinafter referred to as compound (IV) at times). 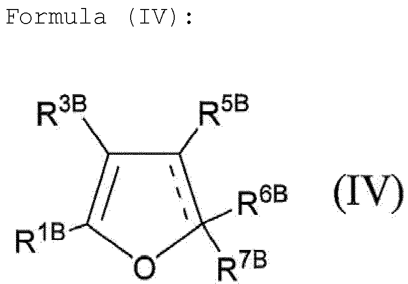 wherein
R^{1B} and R^{3B} are each independently a hydrogen atom, a hydroxy group, a methyl group, a formyl group, an acetyl group, or an acetoxy group;
R^{5B} is a hydrogen atom or an oxo group;
R^{6B} is a hydrogen atom or a methyl group;
R^{7B} is a hydrogen atom, or is absent when a carbon atom bonded to R^{5B} and a carbon atom bonded to R^{6B} are bonded to each other to form a double bond; and
a doublet consisting of a solid line and a broken line is a single bond or a double bond,
provided that R^{5B} is an oxo group when R^{1B} and R^{3B} are simultaneously hydrogen atoms.

Each group in the formula (IV) is described below.

R^{1B}, R^{3B}, and R^{5B} in the formula (IV) are respectively as defined for R¹ , R³, and R⁵ in the formula (I), and preferred embodiment is also the same.

R^{6B} in the formula (IV) is as defined for R⁶ in the formula (II), and preferred embodiment is also the same.

In the formula (IV), R^{7B} is a hydrogen atom, or is absent when a carbon atom bonded to R^{5B} and a carbon atom bonded to R^{6B} are bonded to each other to form a double bond (i.e., when a doublet consisting of a solid line and a broken line between the carbon atom bonded to R^{5B} and the carbon atom bonded to R^{6B} is a double bond).

A doublet consisting of a solid line and a broken line in the formula (IV) is as defined for the doublet consisting of a solid line and a broken line in the formula (I).

A doublet consisting of a solid line and a broken line between the carbon atom bonded to R^{5B} and the carbon atom bonded to R^{6B} is a double bond when R^{5B} is a hydrogen atom, and a single bond when R^{5B} is an oxo group.

Compound (IV) may exclude a compound wherein R^{1B} is a formyl group, R^{3B} is a hydrogen atom, R^{5B} is a hydrogen atom, R^{6B} is a methyl group, a carbon atom bonded to R^{5B} and a carbon atom bonded to R^{6B} are bonded to each other to form a double bond (i.e., a doublet consisting of a solid line and a broken line between the carbon atom bonded to R^{5B} and the carbon atom bonded to R^{6B} is a double bond), and R^{7B} is absent; and a compound wherein R^{1B} is a methyl group, R^{3B} is a hydrogen atom, R^{5B} is a hydrogen atom, R^{6B} is a hydrogen atom, a carbon atom bonded to R^{5B} and a carbon atom bonded to R^{6B} are bonded to each other to form a double bond (i.e., a doublet consisting of a solid line and a broken line between the carbon atom bonded to R^{5B} and the carbon atom bonded to R^{6B} is a double bond), and R^{7B} is absent.

Examples of a preferred compound (IV) include compound (IV) wherein
R^{1B} is a hydrogen atom, a methyl group, a formyl group, or an acetyl group;
R^{3B} is a hydrogen atom, a hydroxy group, an acetyl group, or an acetoxy group;
R^{5B} is a hydrogen atom or an oxo group;
R^{6B} is a hydrogen atom or a methyl group;
R^{7B} is a hydrogen atom, or is absent when a carbon atom bonded to R^{5B} and a carbon atom bonded to R^{6B} are bonded to each other to form a double bond; and
a doublet consisting of a solid line and a broken line is a single bond or a double bond,
and the like.

Particularly preferred one embodiment of compound (I) is a compound represented by the following formula (V) (hereinafter referred to as compound (V) at times).

Formula (V):

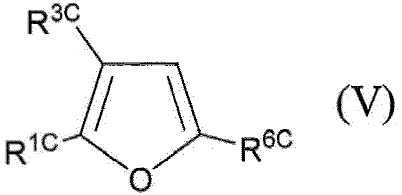

wherein
R^{1C} and R^{3C} are each independently a hydrogen atom, a hydroxy group, a methyl group, a formyl group, an acetyl group, or an acetoxy group; and
R^{6C} is a hydrogen atom or a methyl group,
provided that R^{1C} and R^{3C} are not hydrogen atoms at the same time.

Each group in the formula (V) is described below.

R^{1C} and R^{3C} in the formula (V) are respectively as defined for R¹ and R³ in the formula (I) .

R^{1C} is preferably a methyl group, a formyl group, or an acetyl group, more preferably a formyl group or an acetyl group.

R^{3C} is preferably a hydrogen atom or an acetyl group, more preferably a hydrogen atom.

R^{1C} and R^{3C} are not hydrogen atoms at the same time.

R^{6C} in the formula (V) is as defined for R⁶ in the formula (II), and preferred embodiment is also the same.

Compound (V) may exclude a compound wherein R^{1C} is a formyl group, R^{3C} is a hydrogen atom, and R^{6C} is a methyl group; and a compound wherein R^{1C} is a methyl group, R^{3C} is a hydrogen atom, and R^{6C} is a hydrogen atom.

Examples of the preferred compound (V) include compound (V) wherein
R^{1C} is a methyl group, a formyl group, or an acetyl group (preferably a formyl group or an acetyl group);
R^{3C} is a hydrogen atom or an acetyl group (preferably a hydrogen atom); and
R^{6C} is a hydrogen atom or a methyl group (preferably a hydrogen atom), and the like.

Another particularly preferred embodiment of compound (I) is a compound represented by the following formula (VI) (hereinafter referred to as compound (VI) at times).

Formula (VI):

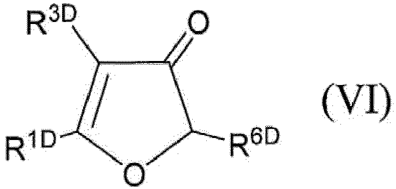

wherein
R^{1D} and R^{3D} are each independently a hydrogen atom, a hydroxy group, a methyl group, a formyl group, an acetyl group, or an acetoxy group; and
R^{6D} is a hydrogen atom or a methyl group.

Each group in the formula (VI) is described below.

R^{1D} and R^{3D} in the formula (VI) are respectively as defined for R¹ and R³ in the formula (I).

R^{1D} is preferably a methyl group.

R^{3D} is preferably a hydroxy group or an acetoxy group.

R^{6D} in the formula (VI) is as defined for R⁶ in the formula (II), and preferred embodiment is also the same.

Examples of preferred compound (VI) include compound (VI) wherein
R^{1D} is a methyl group;
R^{3D} is a hydroxy group or an acetoxy group; and
R^{6D} is a hydrogen atom or a methyl group,
and the like.

Specific examples of preferred compound (I) include the following compounds and the like. • furfural (CAS Registry Number:98-01-1):

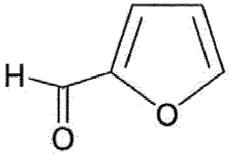

• 2-acetylfuran (CAS Registry Number:1192-62-7):

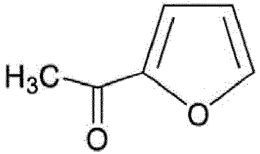

• 2-acetyl-5-methylfuran (CAS Registry Number:1193-79-9):

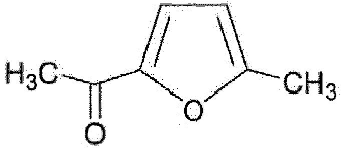

• 3-acetyl-2,5-dimethylfuran (CAS Registry Number:10599-70-9):

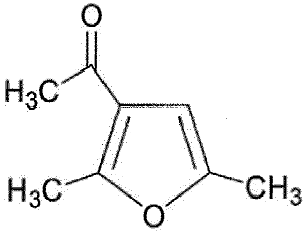

• 4,5-dimethyl-3-hydroxy-2(5H)-furanone (referred to as sotolon at times) (CAS Registry Number:28664-35-9):

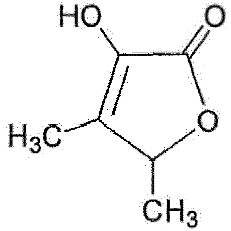

• 2-methyltetrahydrofuran-3-one (referred to as 4,5-dihydro-2-methyl-3(2H)-furanone at times) (CAS Registry Number:3188-00-9):

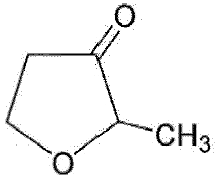

• 4-hydroxy-5-methyl-3(2H)-furanone (CAS Registry Number:19322-27-1):

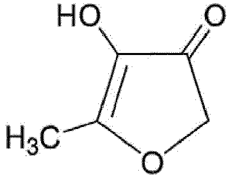

• 4-hydroxy-2,5-dimethyl-3(2H)-furanone (referred to as furaneol at times) (CAS Registry Number:3658-77-3):

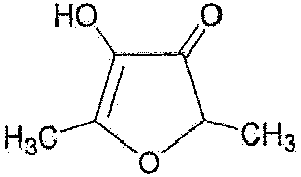

• 4-acetoxy-2,5-dimethyl-3(2H)-furanone (referred to as furaneol acetate at times) (CAS Registry Number:4166-20-5):

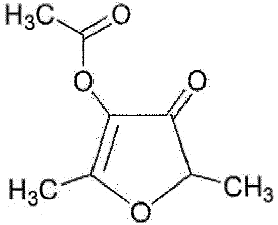

Among these, furfural and 2-acetylfuran are preferred because they suppress off-tastes particularly effectively.

Only one kind of compound (I) may be used or two or more kinds thereof may be used in combination.

Cyclotene (referred to as methylcyclopentenolone at times) used as an off-taste suppressing compound in the present invention is a compound represented by the following formula (CAS Registry Number:80-71-7).

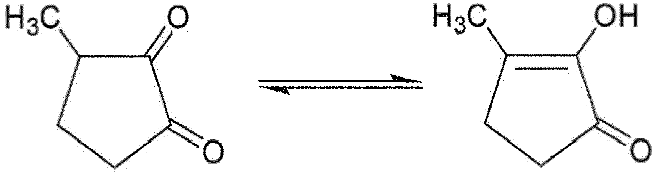

Fatty acid (aliphatic monocarboxylic acid) used as an off-taste suppressing compound in the present invention may be saturated or unsaturated, preferably saturated fatty acid. The fatty acid may be linear or branched chain, preferably linear. The fatty acid preferably has 3 or 4, more preferably 3, carbon atoms.

Specific examples of the fatty acid used as an off-taste suppressing compound in the present invention include propionic acid (represented by CH₃CH₂COOH, and referred to as propanoic acid at times, CAS Registry Number:79-09-4), butyric acid (represented by CH₃CH₂CH₂COOH, and referred to as butanoic acid at times, CAS Registry Number:107-92-6) and the like. Propionic acid is preferred because it can suppress off-tastes particularly effectively. Only one kind of the fatty acid may be used or two or more kinds thereof may be used in combination.

Examples of the preferred off-taste suppressing compound include furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, butyric acid and the like can be mentioned, preferably, furfural, 2-acetylfuran, cyclotene, and propionic acid. Only one kind of these off-taste suppressing compounds may be used or two or more kinds thereof may be used in combination. For example, as the off-taste suppressing compound, furfural, 2-acetylfuran, and cyclotene and propionic acid may be used in combination.

The method for producing the off-taste suppressing compound is not particularly limited, and a compound produced by a method known per se (e.g., chemical synthesis method, enzyme method, fermentation method, extraction method, etc.) or a method analogous thereto may be used. A commercially available product may be used as the off-taste suppressing compound.

One embodiment of the off-taste suppressing compound used in the present invention may be a chemically synthesized product produced by a chemical synthesis method or an isolated product obtained by extraction and purification from a material containing an off-taste suppressing compound. Examples of the material containing an off-taste suppressing compound include naturally occurring substances such as agricultural/livestock/aquatic products and the like; fermentation products such as culture medium, bacterial cells and the like obtained by culturing microorganisms; and processed products thereof, and the like.

In the present invention, a material containing an off-taste suppressing compound may be used as it is or purified to a desired degree and used in place of a chemically synthesized product or isolated product of the off-taste suppressing compound, or in addition to the chemically synthesized product or isolated product.

The amount of the off-taste suppressing compound contained in the agent of the present invention is generally not less than 0.001 wt%, preferably not less than 0.1 wt%, particularly preferably not less than 1 wt%, with respect to the agent of the present invention. The amount is generally not more than 100 wt%, preferably not more than 99 wt%, more preferably not more than 90 wt%, with respect to the agent of the present invention.

The form of the agent of the present invention is not particularly limited, and examples thereof include solid (including powder, granule, etc.), liquid (including slurry, etc.), gel, paste, and the like.

The agent of the present invention may consist only of an off-taste suppressing compound, or may further contain, in addition to the compound, a conventional base depending on the form of the agent of the present invention.

When the agent of the present invention is in the form of a solid, the base includes, for example, starch, dextrin, cyclodextrin, various saccharides such as sucrose and glucose, protein, peptide, salt, solid fat, silicon dioxide, mixtures thereof, yeast bacterial cell, various powder extracts, and the like.

When the agent of the present invention is in the form of a liquid, the base includes, for example, water, ethanol, glycerol, propylene glycol, various animal and vegetable oils, and the like.

The agent of the present invention may further contain, in addition to the off-taste suppressing compound, for example, excipient, antioxidant, thickening stabilizer, emulsifier, sweetener (e.g., sugar, etc.), salt, organic salts, nucleic acid, seasoning (e.g., *umami* seasoning such as sodium glutamate and the like, etc.), acidulant, colorant, food color former, and the like, as long as the object of the present invention is not impaired.

The agent of the present invention can be produced by a method known per se or a method analogous thereto.

The agent of the present invention can be used to suppress the off-taste of an oral product (e.g., food, oral medicine, etc.) to which an off-taste substance is added. In the present invention, the "off-taste substance" refers to a substance capable of exhibiting an off-taste (e.g., bitter taste, metallic taste, harsh taste, astringent taste, rough taste, etc.) in the mouth.

Specific examples of the off-taste substance include, but are not limited to, inorganic salt, amino acid or a salt thereof, high-intensity sweetener, vegetable protein, flavonoid compound, pH-adjusting or bacteriostatic agent, thickening polysaccharide, and the like.

The inorganic salt that may become an off-taste substance is not particularly limited as long as it is used in food, and examples thereof include inorganic chlorine compounds such as potassium chloride, magnesium chloride, and calcium chloride, and the like.

Examples of the amino acid that may become an off-taste substance include branched chain amino acid (valine, leucine, isoleucine), tryptophan, phenylalanine, arginine, cysteine, methionine, lysine, histidine, tyrosine, glycine, and the like. These amino acids may be in the form of salts. The salt of amino acid is not particularly limited as long as it can exhibit an off-taste, and examples thereof include salts with inorganic acids (e.g., chloride hydrogen, hydrogen bromide, sulfuric acid, phosphoric acid, etc.); salts with organic acids (e.g., acetic acid, lactic acid, citric acid, tartaric acid, maleic acid, fumaric acid, mono methylsulfuric acid, etc.); salts with inorganic bases (e.g., sodium, potassium, calcium, ammonia, etc.); and salts with organic bases (e.g., ethylenediamine, propylenediamine, ethanolamine, monoalkyl ethanolamine, dialkyl ethanolamine, diethanolamine, triethanolamine, etc.). The salt of amino acid may be hydrate (hydrate salt), and examples of the hydrate include 1 - 6 hydrates and the like.

In the present invention, the "high-intensity sweetener" is a generic term for non-carbohydrate sweeteners having higher sweetness as compared with sucrose (specifically, 10 times or more sweeter than sucrose). The high-intensity sweetener that may become an off-taste substance may be a natural sweetener or a synthetic sweetener, and examples thereof include acesulfame potassium, sucralose, aspartame, stevia (rebaudioside, stevioside), thaumatin, saccharin, saccharin sodium, licorice, neotame, advantame, and the like.

In the present invention, the "vegetable protein" means a product having an enhanced protein content obtained by processing plants (e.g., grain, vegetable, etc.) containing proteins. Examples of the vegetable protein that may become an off-taste substance include soy protein, pea protein, fava bean protein, chickpea protein, almond protein, sunflower protein, and the like. The form of the vegetable protein is not particularly limited, and it may be, for example, powder, granule, fiber, paste, or the like.

In the present invention, the "flavonoid compound" is a generic term for compounds having a flavonoid skeleton. Examples of the flavonoid compound that may become an off-taste substance include flavanol (catechin) compounds (e.g., catechin, epicatechin, epigallocatechin, epicatechin gallate, epigallocatechin gallate, etc.), flavanone compounds (e.g., naringin, hesperidin etc.), flavone compounds, flavol compounds, isoflavone compounds, and the like.

In the present invention, the "pH-adjusting or bacteriostatic agent" means a food additive having an action to adjust the degree of acidity or alkalinity for the purpose of preventing putrefaction or preventing discoloration, or an action to suppress bacterial proliferation, and is a concept encompassing pH adjusters and bacteriostatic agents. The pH-adjusting or bacteriostatic agent that may become an off-taste substance is not particularly limited as long as it can be used in foods, and examples thereof include acetic acid or a salt thereof (e.g., sodium acetate, etc.), phosphoric acid or a salt thereof (e.g., disodium phosphate, etc.), citric acid or a salt thereof, glycine, and the like.

Examples of the thickening polysaccharide that may become an off-taste substance include cellulose derivatives (e.g., methyl cellulose, carboxymethyl cellulose, hydroxypropyl methylcellulose, etc.), alginic acids (e.g., alginic acid, alginic acid salt, alginic acid ester, etc.), xanthan gum, guar gum, locust bean gum, tara gum, gellan gum, carrageenan, gum tragacanth, gum arabic, caraya gum, tamarind seed gum, psyllium seed gum, curdlan, pectin, and the like. As used herein, the "cellulose derivative" means a derivative in which a part or all of the hydroxy groups of cellulose is/are chemically modified (e.g., esterification, etherification, etc.).

The agent of the present invention can be preferably used to suppress an off-taste of an oral product (e.g., food, oral medicine, etc.) to which one selected from the group consisting of a inorganic salt, an amino acid or a salt thereof, a high-intensity sweetener, a vegetable protein, a flavonoid compound, a pH-adjusting or bacteriostatic agent, and a thickening polysaccharide has been added. Particularly, the agent of the present invention can be more preferably used to suppress an off-taste derived from one selected from the group consisting of an inorganic salt, an amino acid or a salt thereof, a high-intensity sweetener, a vegetable protein, a flavonoid compound, a pH-adjusting or bacteriostatic agent, and a thickening polysaccharide added to an oral product.

In one embodiment, the agent of the present invention can be preferably used to suppress an off-taste of an oral product (e.g., food, oral medicine, etc.) to which an inorganic salt (e.g., potassium chloride, etc.) has been added. Particularly, the agent of the present invention can be more preferably used to suppress an off-taste derived from an inorganic salt (e.g., potassium chloride, etc.) added to an oral product.

In one embodiment, the off-taste that may be suppressed by the agent of the present invention is preferably derived from an inorganic salt (e.g., potassium chloride, etc.), and examples of the specific kind thereof include bitter taste, metallic taste, harsh taste, astringent taste, and the like.

In one embodiment, the agent of the present invention can be preferably used to suppress an off-taste of an oral product (e.g., food, oral medicine, etc.) to which an amino acid (e.g., branched chain amino acid, etc.) or a salt thereof has been added. Particularly, the agent of the present invention can be more preferably used to suppress an off-taste derived from an amino acid (e.g., branched chain amino acid, etc.) or a salt thereof added to an oral product.

In one embodiment, the off-taste that may be suppressed by the agent of the present invention is preferably derived from an amino acid (e.g., branched chain amino acid, etc.) or a salt thereof, and examples of the specific kind thereof include bitter taste, harsh taste, and the like.

In one embodiment, the agent of the present invention can be preferably used to suppress an off-taste of an oral product (e.g., food, oral medicine, etc.) to which a high-intensity sweetener (e.g., acesulfame potassium, sucralose, aspartame, stevia, etc.) has been added. Particularly, the agent of the present invention can be more preferably used to suppress an off-taste derived from a high-intensity sweetener (e.g., acesulfame potassium, sucralose, aspartame, stevia, etc.) added to an oral product.

In one embodiment, the off-taste that may be suppressed by the agent of the present invention is preferably derived from a high-intensity sweetener (e.g., acesulfame potassium, sucralose, aspartame, stevia, etc.), and examples of the specific kind thereof include bitter taste, harsh taste, metallic taste, and the like.

In one embodiment, the agent of the present invention can be preferably used to suppress an off-taste of an oral product (e.g., food, oral medicine, etc.) to which a vegetable protein (e.g., soy protein, pea protein, fava bean protein, etc.) has been added. Particularly, the agent of the present invention can be more preferably used to suppress an off-taste derived from a vegetable protein (e.g., soy protein, pea protein, fava bean protein, etc.) added to an oral product.

In one embodiment, the off-taste that may be suppressed by the agent of the present invention is preferably derived from a vegetable protein (e.g., soy protein, pea protein, fava bean protein, etc.), and examples of the specific kind thereof include bitter taste, harsh taste, astringent taste, and the like.

In one embodiment, the agent of the present invention can be preferably used to suppress an off-taste of an oral product (e.g., food, oral medicine, etc.) to which a flavonoid compound (e.g., flavanol compound, etc.) has been added. Particularly, the agent of the present invention can be more preferably used to suppress an off-taste derived from a flavonoid compound (e.g., flavanol compound, etc.) added to an oral product.

In one embodiment, the off-taste that may be suppressed by the agent of the present invention is preferably derived from a flavonoid compound (e.g., flavanol compound, etc.), and examples of the specific kind thereof include bitter taste, rough taste, harsh taste, and the like.

In one embodiment, the agent of the present invention can be preferably used to suppress an off-taste of an oral product (e.g., food, oral medicine, etc.) to which a pH-adjusting or bacteriostatic agent (e.g., sodium acetate, disodium phosphate, glycine, etc.) has been added. Particularly, the agent of the present invention can be more preferably used to suppress an off-taste derived from a pH-adjusting or bacteriostatic agent (e.g., sodium acetate, disodium phosphate, etc.) added to an oral product.

In one embodiment, the off-taste that may be suppressed by the agent of the present invention is preferably derived from a pH-adjusting or bacteriostatic agent (e.g., sodium acetate, disodium phosphate, glycine, etc.), and examples of the specific kind thereof include bitter taste, harsh taste, astringent taste, and the like.

In one embodiment, the agent of the present invention can be preferably used to suppress an off-taste of an oral product (e.g., food, oral medicine, etc.) to which a thickening polysaccharide (e.g., cellulose derivative, etc.) has been added. Particularly, the agent of the present invention can be more preferably used to suppress an off-taste derived from a thickening polysaccharide (e.g., cellulose derivative, etc.) added to an oral product.

In one embodiment, the off-taste that may be suppressed by the agent of the present invention is preferably derived from a thickening polysaccharide (e.g., cellulose derivative, etc.), and examples of the specific kind thereof include bitter taste, harsh taste, astringent taste, and the like.

The oral product for which the agent of the present invention is used is preferably one to which an off-taste substance has been added. The agent of the present invention can be particularly preferably used for an oral product having an off-taste derived from an off-taste substance.

In the present invention, the "oral product" means a substance that can be ingested or taken orally, and specific examples thereof include food, oral medicine, and the like. In the present invention, the "food" broadly includes foods that can be ingested orally (excluding medicine), and unless otherwise specified, also includes so-called foods, beverages, seasonings, supplements, and the like. Food is a concept also including food compositions.

The oral product for which the agent of the present invention is used is preferably an oral product containing one selected from the group consisting of an inorganic salt, an amino acid or a salt thereof, a high-intensity sweetener, a vegetable protein, flavonoid compound, a pH-adjusting or bacteriostatic agent, and a thickening polysaccharide added thereto, more preferably an oral product containing one selected from the group consisting of potassium chloride, branched chain amino acid (leucine, isoleucine, valine), acesulfame potassium, sucralose, aspartame, stevia, soy protein, pea protein, fava bean protein, flavanol compound (e.g., catechin, etc.), sodium acetate, disodium phosphate, and cellulose derivative (e.g., methyl cellulose, etc.).

In one embodiment, the oral product for which the agent of the present invention is used is preferably an oral product containing at least an inorganic salt (e.g., potassium chloride, etc.) added thereto. The agent of the present invention can be particularly preferably used in an oral product having an off-taste derived from an inorganic salt (e.g., potassium chloride, etc.).

In one embodiment, the oral product for which the agent of the present invention is used is preferably an oral product containing at least an amino acid (e.g., branched chain amino acid, etc.) or a salt thereof added thereto. The agent of the present invention can be particularly preferably used in an oral product having an off-taste derived from an amino acid (e.g., branched chain amino acid, etc.) or a salt thereof.

In one embodiment, the oral product for which the agent of the present invention is used is preferably an oral product containing at least a high-intensity sweetener (e.g., acesulfame potassium, sucralose, aspartame, stevia, etc.) added thereto. The agent of the present invention can be particularly preferably used in an oral product having an off-taste derived from a high-intensity sweetener (e.g., acesulfame potassium, sucralose, aspartame, stevia, etc.).

In one embodiment, the oral product for which the agent of the present invention is used is preferably an oral product containing at least a vegetable protein (e.g., soy protein, pea protein, fava bean protein, etc.) added thereto. The agent of the present invention can be particularly preferably used in an oral product having an off-taste derived from a vegetable protein (e.g., soy protein, pea protein, fava bean protein, etc.).

In one embodiment, the oral product for which the agent of the present invention is used is preferably an oral product containing at least a flavonoid compound (e.g., flavanol compound, etc.) added thereto. The agent of the present invention can be particularly preferably used in an oral product having an off-taste derived from a flavonoid compound (e.g., flavanol compound, etc.).

In one embodiment, the oral product for which the agent of the present invention is used is preferably an oral product containing at least a pH-adjusting or bacteriostatic agent added thereto. The agent of the present invention can be particularly preferably used in an oral product having an off-taste derived from a pH-adjusting or bacteriostatic agent (e.g., sodium acetate, disodium phosphate, etc.).

In one embodiment, the oral product for which the agent of the present invention is used is preferably an oral product containing at least a thickening polysaccharide (e.g., cellulose derivative, etc.) added thereto. The agent of the present invention can be particularly preferably used in an oral product having an off-taste derived from a thickening polysaccharide (e.g., cellulose derivative, etc.).

When the oral product for which the agent of the present invention is used is an oral product containing at least a high-intensity sweetener (e.g., stevia, etc.) added thereto, the agent of the present invention may contain, as an off-taste suppressing compound, at least one compound selected from the group consisting of compound (I) (excluding furfural), cyclotene, and a fatty acid having 3 or 4 carbon atoms. In this case, the agent of the present invention preferably contains at least one compound selected from the group consisting of 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid, more preferably at least one compound selected from the group consisting of 2-acetylfuran, cyclotene, and propionic acid.

When the oral product for which the agent of the present invention is used is an oral product containing at least potassium chloride added thereto, the agent of the present invention may contain, as an off-taste suppressing compound, at least one compound selected from the group consisting of compound (I), cyclotene, and butyric acid. In this case, the agent of the present invention preferably contains at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, and butyric acid, more preferably at least one compound selected from the group consisting of furfural, 2-acetylfuran, and cyclotene.

In one embodiment, the agent of the present invention is an off-taste suppressing agent containing at least one compound selected from the group consisting of compound (I), cyclotene, and a fatty acid having 3 or 4 carbon atoms, and may be an off-taste suppressing agent for an oral product containing one selected from the group consisting of an inorganic salt, an amino acid or a salt thereof, a high-intensity sweetener, a vegetable protein, a flavonoid compound, a pH-adjusting or bacteriostatic agent, and a thickening polysaccharide added thereto.

In one embodiment, the agent of the present invention is an off-taste suppressing agent containing at least one compound selected from the group consisting of compound (I), cyclotene, and a fatty acid having 3 or 4 carbon atoms, and may be an off-taste suppressing agent for an oral product containing one selected from the group consisting of potassium chloride, branched chain amino acid (leucine, isoleucine, valine), acesulfame potassium, sucralose, aspartame, stevia, soy protein, pea protein, fava bean protein, a flavanol compound (e.g., catechin, etc.), sodium acetate, disodium phosphate, and a cellulose derivative (e.g., methyl cellulose, etc.) added thereto.

In one embodiment, the agent of the present invention is an off-taste suppressing agent containing at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid, and may be an off-taste suppressing agent for an oral product containing one selected from the group consisting of an inorganic salt, an amino acid or a salt thereof, a high-intensity sweetener, a vegetable protein, a flavonoid compound, a pH-adjusting or bacteriostatic agent, and a thickening polysaccharide added thereto.

In one embodiment, the agent of the present invention is an off-taste suppressing agent containing at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid, and may be an off-taste suppressing agent for an oral product containing one selected from the group consisting of potassium chloride, branched chain amino acid (leucine, isoleucine, valine), acesulfame potassium, sucralose, aspartame, stevia, soy protein, pea protein, fava bean protein, a flavanol compound (e.g., catechin etc.), sodium acetate, disodium phosphate, and a cellulose derivative (e.g., methyl cellulose etc.) added thereto.

In one embodiment, the agent of the present invention is an off-taste suppressing agent containing at least one compound selected from the group consisting of furfural, 2-acetylfuran, cyclotene, and propionic acid, and may be an off-taste suppressing agent for an oral product containing one selected from the group consisting of an inorganic salt, an amino acid or a salt thereof, a high-intensity sweetener, a vegetable protein, a flavonoid compound, a pH-adjusting or bacteriostatic agent, and a thickening polysaccharide added thereto.

In one embodiment, the agent of the present invention is an off-taste suppressing agent containing at least one compound selected from the group consisting of furfural, 2-acetylfuran, cyclotene, and propionic acid, and may be an off-taste suppressing agent for an oral product containing one selected from the group consisting of potassium chloride, branched chain amino acid (leucine, isoleucine, valine), acesulfame potassium, sucralose, aspartame, stevia, soy protein, pea protein, fava bean protein, a flavanol compound (e.g., catechin etc.), sodium acetate, disodium phosphate, and a cellulose derivative (e.g., methyl cellulose etc.) added thereto.

The food for which the agent of the present invention is used is preferably a food to which an off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) can be added. Examples thereof include, but are not limited to, corn soup, consomme soup (e.g., chicken, pork, beef, etc.), potage, chicken broth, soup with egg, soup with Wakame seaweed, soup with shark fin, Chinese-style soup, curry flavor soup, ramen noodle soup, Japanese-style clear soup, Miso soup and the like; meat processed foods such as ham, sausage, Gyoza dumpling, Shumai dumpling, hamburg steak, deep-fried food, pork cutlet and the like; marine processed foods such as steamed fish paste cake, tube shaped fish paste cake and the like; dairy products such as butter and the like; rice processed foods such as Chinese fried rice and the like; seasonings such as savory seasoning, flavor seasoning, menu seasoning, mayonnaise, dressing, sauce (e.g., demi-glace sauce, Japanese Worcestershire-style sauce, white sauce, cheese sauce, etc.) and the like; other processed foods such as noodles, gratin, croquette, pickles, hamburg steak-like food and the like; frozen foods (frozen products of the aforementioned foods (e.g., Gyoza dumpling, Shumai dumpling, Chinese fried rice, hamburg steak, deep-fried food, gratin, pork cutlet, croquette, etc.), etc.) and the like.

In the present specification, the "savory seasoning" refers to a seasoning produced from a natural substance as a material according to a method such as extraction, decomposition, heating, fermentation, and the like. Concrete examples thereof include various meat extracts such as chicken meat extract, beef meat extract, pork meat extract, sheep meat extract, and the like; various bone extracts such as chicken bone extract, beef bone extract, pork bone extract, and the like; various seafood extracts such as bonito extract, mackerel extract, croaker extract, scallop extract, crab extract, shrimp extract, dried sardine extract, dried adductor extract, and the like; various dried fish extracts such as dried bonito extract, dried mackerel extract, dried bullet mackerel extract, and the like; various vegetable extracts such as onion extract, Chinese cabbage extract, celery extract, and the like; various seaweed extracts such as kelp extract and the like; various spice extracts such as garlic extract, chili extract, pepper extract, cacao extract, and the like; yeast extracts; various protein hydrolysates; various fermentation seasonings such as soy sauce, fish sauce, shrimp sauce, Miso and the like, and the like, and mixtures thereof, processed product (e.g., soy sauce processed product such as Japanese noodle soup base, citrus seasoned soy sauce, and the like), and the like. The "flavor seasoning" refers to a seasoning used to impart aroma, flavor and taste of a flavor material to a food, and can be produced by, for example, adding sugar, salt and the like to a savory seasoning, or the like. Specific examples of the flavor seasoning include various meat flavor seasonings such as chicken flavor seasoning, beef flavor seasoning, pork flavor seasoning, and the like; various seafood flavor seasonings such as bonito flavor seasoning, dried sardine flavor seasoning, dried adductor flavor seasoning, crustacean flavor seasoning, and the like; various spicy vegetable flavor seasonings; kelp flavor seasoning and the like. The "menu seasoning" refers to a seasoning suitable for cooking a particular menu (Chinese-style menu, etc.). Concrete examples thereof include Chinese-style combined seasoning, combined seasoning, generic paste seasoning, seasoning mix for cooked rice mixed with ingredients, seasoning mix for Chinese fried rice, spice mix, and the like.

The food for which the agent of the present invention is used may be provided (sold, distributed) in a form suitable for eating, or may be provided in a form that requires a predetermined processing or cooking to have a form suitable for eating. For example, the food to which the agent of the present invention is used may be provided (sold, distributed) as a concentrate or the like that requires diluting with water, etc. to become a form suitable for eating.

The food for which the agent of the present invention is used may be provided, for example, as a food with health claims, a food for specified health uses, a food with nutrient function claims, a dietary supplement, a nutritional supplementary food, a health supplementary food, a food for medical use, a medical food, or the like.

In one embodiment, the food for which the agent of the present invention is used may be a salt-reduced food. In the present invention, the "salt-reduced food" refers to a food whose salt concentration (salt content) at the time of eating is adjusted to be lower than the general salt concentration of the food. Potassium chloride can be used in salt-reduced foods for the purpose of, for example, compensating for the lack of salty taste of salt-reduced foods.

Examples of the oral medicine to which the agent of the present invention is used include tablet, granule, powder, capsule (including soft capsule), elixir, syrup, microcapsule, drink, emulsion, suspension, and the like.

In the present invention, a production method of the off-taste substance (e.g., potassium chloride, amino acid or a salt thereof, high-intensity sweetener, vegetable protein, flavonoid compound, pH-adjusting or bacteriostatic agent, thickening polysaccharide, etc.) that can be contained in the oral product is not particularly limited as long as it can be orally ingested, and an off-taste substance produced by a method known per se or a method analogous thereto may be used. The off-taste substance may be a commercially available product.

In the present invention, one embodiment of the off-taste substance (e.g., potassium chloride, amino acid or a salt thereof, high-intensity sweetener, vegetable protein, flavonoid compound, pH-adjusting or bacteriostatic agent, thickening polysaccharide, etc.) that can be contained in the oral product may be a chemically synthesized product produced by a chemical synthesis method, or an isolated product extracted and purified from a material containing an off-taste substance. In addition, a material containing an off-taste substance may be used as it is or after purification to a desired degree.

The method and conditions for adding the agent of the present invention to an oral product (e.g., food, oral medicine, etc.) are not particularly limited, and addition can be performed by a method known per se or a method analogous thereto, according to the form of the agent of the present invention, the kind of the oral product to which the agent of the present invention is added, and the like. The time when the agent of the present invention is added to an oral product is not particularly limited, and the agent can be added, for example, during the production of the oral product, after the production of the oral product, or the like. The agent of the present invention may be added to a raw material before producing the oral product.

The agent of the present invention can be used such that an off-taste suppressing compound in a specific amount is added to an oral product.

In the present invention, the amount of the off-taste suppressing compound to be added to the oral product can be set according to the amount of an off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) to be added to the oral product.

For example, in one embodiment, when additional addition of an off-taste substance to "an oral product containing an off-taste substance but not exhibiting an unacceptable off-taste" (that is, increasing the amount of the off-taste substance contained in the oral product) causes an unacceptable off-taste of the composition, the amount of the off-taste suppressing compound to be added to the oral product may be set according to the amount (increased amount) of the additionally added off-taste substance. It is not necessary to consider the amount of an off-taste substance originally contained in the oral product (oral product that does not exhibit an unacceptable off-taste) before the additional addition of the off-taste substance.

In another embodiment, when an oral product produced by adding an off-taste substance as one of the materials exhibits an off-taste, the amount of the off-taste suppressing compound to be added to the oral product can be set according to the amount of the off-taste substance used as the material.

In still another embodiment, when an off-taste substance is additionally added to an oral product having an off-taste produced by adding an off-taste substance as one of the materials, the amount of the off-taste suppressing compound to be added to the oral product can be set according to the total amount of the off-taste substance used as the material and the amount of the off-taste substance added additionally.

Specifically, the agent of the present invention is preferably used such that the addition amount of the off-taste suppressing compound to the oral product (amount of the off-taste suppressing compound to be added to the oral product) is not less than 0.005 weight ppm (more preferably not less than 0.01 weight ppm, further preferably not less than 0.05 weight ppm, particularly preferably not less than 0.1 weight ppm) with respect to the addition amount of the off-taste substance to the oral product (amount of the off-taste substance added to the oral product). The agent of the present invention is preferably used such that an addition amount of the off-taste suppressing compound to the oral product is not more than 8000 weight ppm (more preferably not more than 5000 weight ppm, still more preferably not more than 1000 weight ppm, further preferably not more than 500 weight ppm, particularly preferably not more than 250 weight ppm) with respect to the addition amount of the off-taste substance to the oral product.

In one embodiment, when the off-taste suppressing compound contains compound (I), the agent of the present invention is preferably used such that an addition amount of the compound (I) to the oral product is not less than 0.005 weight ppm (more preferably not less than 0.01 weight ppm, further preferably not less than 0.05 weight ppm, particularly preferably not less than 0.1 weight ppm) with respect to the addition amount of the off-taste substance to the oral product. In this case, the agent of the present invention is preferably used such that an addition amount of the compound (I) to the oral product is not more than 8000 weight ppm (more preferably not more than 5000 weight ppm, further preferably not more than 500 weight ppm, particularly preferably not more than 250 weight ppm) with respect to the addition amount of the off-taste substance to the oral product.

In one embodiment, when the off-taste suppressing compound contains furfural, the agent of the present invention is preferably used such that an addition amount of the furfural to the oral product is not less than 0.005 weight ppm (more preferably not less than 0.01 weight ppm, further preferably not less than 0.05 weight ppm, particularly preferably not less than 0.1 weight ppm) with respect to the addition amount of the off-taste substance to the oral product. In this case, the agent of the present invention is preferably used such that an addition amount of the furfural to the oral product is not more than 8000 weight ppm (more preferably not more than 1000 weight ppm, further preferably not more than 50 weight ppm, particularly preferably not more than 15 weight ppm) with respect to the addition amount of the off-taste substance to the oral product.

In one embodiment, when the off-taste suppressing compound contains 2-acetylfuran, the agent of the present invention is preferably used such that an addition amount of the 2-acetylfuran to the oral product is not less than 0.01 weight ppm (more preferably not less than 0.05 weight ppm, further preferably not less than 0.1 weight ppm, particularly preferably not less than 3 weight ppm) with respect to the addition amount of the off-taste substance to the oral product. In this case, the agent of the present invention is preferably used such that an addition amount of the 2-acetylfuran to the oral product is not more than 8000 weight ppm (more preferably not more than 1000 weight ppm, further preferably not more than 100 weight ppm, particularly preferably not more than 50 weight ppm) with respect to the addition amount of the off-taste substance to the oral product.

In one embodiment, when the off-taste suppressing compound contains cyclotene, the agent of the present invention is preferably used such that an addition amount of the cyclotene to the oral product is not less than 0.005 weight ppm (more preferably not less than 0.01 weight ppm, further preferably not less than 0.05 weight ppm, particularly preferably not less than 0.1 weight ppm) with respect to the addition amount of the off-taste substance to the oral product. In this case, the agent of the present invention is preferably used such that an addition amount of the cyclotene to the oral product is not more than 8000 weight ppm (more preferably not more than 2000 weight ppm, further preferably not more than 1000 weight ppm, particularly preferably not more than 50 weight ppm) with respect to the addition amount of the off-taste substance to the oral product.

In one embodiment, when the off-taste suppressing compound contains a fatty acid having 3 or 4 carbon atoms (e.g., propionic acid, butyric acid, etc.), the agent of the present invention is preferably used such that an addition amount of the fatty acid having 3 or 4 carbon atoms to the oral product is not less than 0.05 weight ppm (more preferably not less than 0.1 weight ppm, further preferably not less than 0.5 weight ppm, particularly preferably not less than 1 weight ppm) with respect to the addition amount of the off-taste substance to the oral product. In this case, the agent of the present invention is preferably used such that an addition amount of the fatty acid having 3 or 4 carbon atoms to the oral product is not more than 8000 weight ppm (more preferably not more than 5000 weight ppm, further preferably not more than 1000 weight ppm, particularly preferably not more than 500 weight ppm) with respect to the addition amount of the off-taste substance to the oral product.

In one embodiment, when the off-taste substance added to the oral product contains an inorganic salt (e.g., potassium chloride, etc.), the agent of the present invention is preferably used such that an addition amount of the off-taste suppressing compound to the oral product (amount of the off-taste suppressing compound to be added to the oral product) is not less than 0.05 weight ppm (more preferably not less than 0.07 weight ppm, still more preferably not less than 0.09 weight ppm, further preferably not less than 0.1 weight ppm, particularly preferably not less than 0.5 weight ppm) with respect to the addition amount of the inorganic salt to the oral product (amount of the inorganic salt added to the oral product), because the agent of the present invention can effectively suppress an off-taste derived from the inorganic salt (e.g., potassium chloride, etc.). The agent of the present invention is preferably used such that an addition amount of the off-taste suppressing compound to the oral product is not more than 5000 weight ppm (more preferably not more than 4000 weight ppm, further preferably not more than 3000 weight ppm, particularly preferably not more than 2500 weight ppm) with respect to the addition amount of the inorganic salt to the oral product, because the agent of the present invention can more effectively suppress an off-taste derived from the inorganic salt (e.g., potassium chloride, etc.).

In one embodiment, when the off-taste substance added to the oral product contains an inorganic salt (e.g., potassium chloride, etc.), and the off-taste suppressing compound contains compound (I), the agent of the present invention is preferably used such that an addition amount of the compound (I) to the oral product is not less than 0.05 weight ppm (more preferably not less than 0.07 weight ppm, still more preferably not less than 0.09 weight ppm, further preferably not less than 0.1 weight ppm, particularly preferably not less than 0.5 weight ppm) with respect to the addition amount of the inorganic salt to the oral product, because the agent of the present invention can more effectively suppress an off-taste derived from the inorganic salt (e.g., potassium chloride, etc.). In this case, the agent of the present invention is preferably used such that an addition amount of the compound (I) to the oral product is not more than 5000 weight ppm (more preferably not more than 4000 weight ppm, further preferably not more than 3000 weight ppm, particularly preferably not more than 2500 weight ppm) with respect to the addition amount of the inorganic salt to the oral product, because the agent of the present invention can particularly effectively suppress an off-taste derived from the inorganic salt (e.g., potassium chloride, etc.).

In one embodiment, when the off-taste substance added to the oral product contains an inorganic salt (e.g., potassium chloride, etc.), and the off-taste suppressing compound contains furfural, the agent of the present invention is preferably used such that an addition amount of the furfural to the oral product is not less than 0.3 weight ppm (more preferably not less than 0.5 weight ppm, particularly preferably not less than 1 weight ppm) with respect to the addition amount of the inorganic salt to the oral product, because the agent of the present invention can more effectively suppress an off-taste derived from the inorganic salt (e.g., potassium chloride, etc.). In this case, the agent of the present invention is preferably used such that an addition amount of the furfural to the oral product is not more than 1000 weight ppm (more preferably not more than 500 weight ppm, still more preferably not more than 300 weight ppm, further preferably not more than 200 weight ppm, particularly preferably not more than 40 weight ppm, most preferably not more than 8 weight ppm) with respect to the addition amount of the inorganic salt to the oral product, because the agent of the present invention can particularly effectively suppress an off-taste derived from the inorganic salt (e.g., potassium chloride, etc.).

In one embodiment, when the off-taste substance added to the oral product contains an inorganic salt (e.g., potassium chloride, etc.), and the off-taste suppressing compound contains 2-acetylfuran, the agent of the present invention is preferably used such that an addition amount of the 2-acetylfuran to the oral product is not less than 3 weight ppm (more preferably not less than 5 weight ppm, particularly preferably not less than 10 weight ppm) with respect to the addition amount of the inorganic salt to the oral product, because the agent of the present invention can more effectively suppress an off-taste derived from the inorganic salt (e.g., potassium chloride, etc.). In this case, the agent of the present invention is preferably used such that an addition amount of the 2-acetylfuran to the oral product is not more than 1000 weight ppm (more preferably not more than 750 weight ppm, still more preferably not more than 500 weight ppm, further preferably not more than 250 weight ppm, particularly preferably not more than 30 weight ppm) with respect to the addition amount of the inorganic salt to the oral product, because the agent of the present invention can particularly effectively suppress an off-taste derived from the inorganic salt (e.g., potassium chloride, etc.).

In one embodiment, when the off-taste substance added to the oral product contains an inorganic salt (e.g., potassium chloride, etc.), and the off-taste suppressing compound contains cyclotene, the agent of the present invention is preferably used such that an addition amount of the cyclotene to the oral product is not less than 0.05 weight ppm (more preferably not less than 0.1 weight ppm, further preferably not less than 0.2 weight ppm, particularly preferably not less than 0.3 weight ppm) with respect to the addition amount of the inorganic salt to the oral product, because the agent of the present invention can more effectively suppress an off-taste derived from the inorganic salt (e.g., potassium chloride, etc.). In this case, the agent of the present invention is preferably used such that an addition amount of the cyclotene to the oral product is not more than 2000 weight ppm (more preferably not more than 1000 weight ppm, still more preferably not more than 750 weight ppm, further preferably not more than 500 weight ppm, particularly preferably not more than 30 weight ppm) with respect to the addition amount of the inorganic salt to the oral product, because the agent of the present invention can particularly effectively suppress an off-taste derived from the inorganic salt (e.g., potassium chloride, etc.).

In one embodiment, when the off-taste substance added to the oral product contains an inorganic salt (e.g., potassium chloride, etc.), and the off-taste suppressing compound contains a fatty acid having 3 or 4 carbon atoms (e.g., propionic acid, butyric acid, etc.), the agent of the present invention is preferably used such that an addition amount of the fatty acid having 3 or 4 carbon atoms to the oral product is not less than 10 weight ppm (more preferably not less than 50 weight ppm, further preferably not less than 75 weight ppm, particularly preferably not less than 100 weight ppm) with respect to the addition amount of the inorganic salt to the oral product, because the agent of the present invention can more effectively suppress an off-taste derived from the inorganic salt (e.g., potassium chloride, etc.). In this case, the agent of the present invention is preferably used such that an addition amount of the fatty acid having 3 or 4 carbon atoms to the oral product is not more than 5000 weight ppm (more preferably not more than 4000 weight ppm, further preferably not more than 3000 weight ppm, particularly preferably not more than 2500 weight ppm) with respect to the addition amount of the inorganic salt to the oral product, because the agent of the present invention can particularly effectively suppress an off-taste derived from the inorganic salt (e.g., potassium chloride, etc.).

In one embodiment, when the off-taste substance added to the oral product contains an amino acid or a salt thereof, the agent of the present invention is preferably used such that an addition amount of the off-taste suppressing compound to the oral product (amount of the off-taste suppressing compound to be added to the oral product) is not less than 0.005 weight ppm (more preferably not less than 0.01 weight ppm, particularly preferably not less than 0.05 weight ppm) with respect to the addition amount of the amino acid or a salt thereof to the oral product (amount of the amino acid or a salt thereof added to the oral product), because the agent of the present invention can effectively suppress an off-taste derived from the amino acid or a salt thereof. In addition, the agent of the present invention is preferably used such that an addition amount of the off-taste suppressing compound to the oral product is not more than 1000 weight ppm (more preferably not more than 500 weight ppm, still more preferably not more than 300 weight ppm, further preferably not more than 100 weight ppm, particularly preferably not more than 50 ppm) with respect to the addition amount of the amino acid or a salt thereof to the oral product, because the agent of the present invention can more effectively suppress an off-taste derived from the amino acid or a salt thereof.

In one embodiment, when the off-taste substance added to the oral product contains an amino acid or a salt thereof, and the off-taste suppressing compound contains compound (I), the agent of the present invention is preferably used such that an addition amount of the compound (I) to the oral product is not less than 0.005 weight ppm (more preferably not less than 0.01 weight ppm, particularly preferably not less than 0.05 weight ppm) with respect to the addition amount of the amino acid or a salt thereof to the oral product, because the agent of the present invention can more effectively suppress an off-taste derived from the amino acid or a salt thereof. In this case, the agent of the present invention is preferably used such that an addition amount of the compound (I) to the oral product is not more than 100 weight ppm (more preferably not more than 50 weight ppm, particularly preferably not more than 30 weight ppm) with respect to the addition amount of the amino acid or a salt thereof to the oral product, because the agent of the present invention can particularly effectively suppress an off-taste derived from the amino acid or a salt thereof.

In one embodiment, when the off-taste substance added to the oral product contains an amino acid or a salt thereof, and the off-taste suppressing compound contains furfural, the agent of the present invention is preferably used such that an addition amount of the furfural to the oral product is not less than 0.005 weight ppm (more preferably not less than 0.01 weight ppm, particularly preferably not less than 0.05 weight ppm) with respect to the addition amount of the amino acid or a salt thereof to the oral product, because the agent of the present invention can more effectively suppress an off-taste derived from the amino acid or a salt thereof. In this case, the agent of the present invention is preferably used such that an addition amount of the furfural to the oral product is not more than 50 weight ppm (more preferably not more than 25 weight ppm, particularly preferably not more than 15 weight ppm) with respect to the addition amount of the amino acid or a salt thereof to the oral product, because the agent of the present invention can particularly effectively suppress an off-taste derived from the amino acid or a salt thereof.

In one embodiment, when the off-taste substance added to the oral product contains an amino acid or a salt thereof, and the off-taste suppressing compound contains 2-acetylfuran, the agent of the present invention is preferably used such that an addition amount of the 2-acetylfuran to the oral product is not less than 0.05 weight ppm (more preferably not less than 0.1 weight ppm, particularly preferably not less than 0.5 weight ppm) with respect to the addition amount of the amino acid or a salt thereof to the oral product, because the agent of the present invention can more effectively suppress an off-taste derived from the amino acid or a salt thereof. In this case, the agent of the present invention is preferably used such that an addition amount of the 2-acetylfuran to the oral product is not more than 100 weight ppm (more preferably not more than 50 weight ppm, particularly preferably not more than 30 weight ppm) with respect to the addition amount of the amino acid or a salt thereof to the oral product, because the agent of the present invention can particularly effectively suppress an off-taste derived from the amino acid or a salt thereof.

In one embodiment, when the off-taste substance added to the oral product contains an amino acid or a salt thereof, and the off-taste suppressing compound contains cyclotene, the agent of the present invention is preferably used such that an addition amount of the cyclotene to the oral product is not less than 0.005 weight ppm (more preferably not less than 0.01 weight ppm, particularly preferably not less than 0.05 weight ppm) with respect to the addition amount of the amino acid or a salt thereof to the oral product, because the agent of the present invention can more effectively suppress an off-taste derived from the amino acid or a salt thereof. In this case, the agent of the present invention is preferably used such that an addition amount of the cyclotene to the oral product is not more than 50 weight ppm (more preferably not more than 25 weight ppm, particularly preferably not more than 15 weight ppm) with respect to the addition amount of the amino acid or a salt thereof to the oral product, because the agent of the present invention can particularly effectively suppress an off-taste derived from the amino acid or a salt thereof.

In one embodiment, when the off-taste substance added to the oral product contains an amino acid or a salt thereof, and the off-taste suppressing compound contains a fatty acid having 3 or 4 carbon atoms (e.g., propionic acid, butyric acid, etc.), the agent of the present invention is preferably used such that an addition amount of the fatty acid having 3 or 4 carbon atoms to the oral product is not less than 0.5 weight ppm (more preferably not less than 1 weight ppm, particularly preferably not less than 5 weight ppm) with respect to the addition amount of the amino acid or a salt thereof to the oral product, because the agent of the present invention can more effectively suppress an off-taste derived from the amino acid or a salt thereof. In this case, the agent of the present invention is preferably used such that an addition amount of the fatty acid having 3 or 4 carbon atoms to the oral product is not more than 1000 weight ppm (more preferably not more than 500 weight ppm, particularly preferably not more than 300 weight ppm) with respect to the addition amount of the amino acid or a salt thereof to the oral product, because the agent of the present invention can particularly effectively suppress an off-taste derived from the amino acid or a salt thereof.

In one embodiment, when the off-taste substance added to the oral product contains a high-intensity sweetener, the agent of the present invention is preferably used such that an addition amount of the off-taste suppressing compound to the oral product (amount of the off-taste suppressing compound to be added to the oral product) is not less than 0.1 weight ppm (more preferably not less than 1 weight ppm, still more preferably not less than 5 weight ppm, further preferably not less than 10 weight ppm, particularly preferably not less than 50 weight ppm) with respect to the addition amount of the high-intensity sweetener to the oral product (amount of the high-intensity sweetener added to the oral product), because the agent of the present invention can effectively suppress an off-taste derived from the high-intensity sweetener. In addition, the agent of the present invention is preferably used such that an addition amount of the off-taste suppressing compound to the oral product is not more than 8000 weight ppm (more preferably not more than 4000 weight ppm, still more preferably not more than 2000 weight ppm, further preferably not more than 1000 weight ppm, particularly preferably not more than 250 weight ppm) with respect to the addition amount of the high-intensity sweetener to the oral product, because the agent of the present invention can more effectively suppress an off-taste derived from the high-intensity sweetener.

In one embodiment, when the off-taste substance added to the oral product contains a high-intensity sweetener, and the off-taste suppressing compound contains compound (I), the agent of the present invention is preferably used such that an addition amount of the compound (I) to the oral product is not less than 0.1 weight ppm (more preferably not less than 1 weight ppm, still more preferably not less than 5 weight ppm, further preferably not less than 10 weight ppm, particularly preferably not less than 50 weight ppm) with respect to the addition amount of the high-intensity sweetener to the oral product, because the agent of the present invention can more effectively suppress an off-taste derived from the high-intensity sweetener. In this case, the agent of the present invention is preferably used such that an addition amount of the compound (I) to the oral product is not more than 8000 weight ppm (more preferably not more than 4000 weight ppm, still more preferably not more than 2000 weight ppm, further preferably not more than 1000 weight ppm, particularly preferably not more than 250 weight ppm) with respect to the addition amount of the high-intensity sweetener to the oral product, because the agent of the present invention can particularly effectively suppress an off-taste derived from the high-intensity sweetener.

In one embodiment, when the off-taste substance added to the oral product contains a high-intensity sweetener, and the off-taste suppressing compound comprises cyclotene, the agent of the present invention is preferably used such that an addition amount of the cyclotene to the oral product is not less than 0.1 weight ppm (more preferably not less than 1 weight ppm, still more preferably not less than 5 weight ppm, further preferably not less than 10 weight ppm, particularly preferably not less than 50 weight ppm) with respect to the addition amount of the high-intensity sweetener to the oral product, because the agent of the present invention can more effectively suppress an off-taste derived from the high-intensity sweetener. In this case, the agent of the present invention is preferably used such that an addition amount of the cyclotene to the oral product is not more than 8000 weight ppm (more preferably not more than 4000 weight ppm, still more preferably not more than 2000 weight ppm, further preferably not more than 1000 weight ppm, particularly preferably not more than 250 weight ppm) with respect to the addition amount of the high-intensity sweetener to the oral product, because the agent of the present invention can particularly effectively suppress an off-taste derived from the high-intensity sweetener.

In one embodiment, when the off-taste substance added to the oral product contains a high-intensity sweetener, and the off-taste suppressing compound contains a fatty acid having 3 or 4 carbon atoms (e.g., propionic acid, butyric acid, etc.), the agent of the present invention is preferably used such that an addition amount of the fatty acid having 3 or 4 carbon atoms to the oral product is not less than 1 weight ppm (more preferably not less than 5 weight ppm, still more preferably not less than 10 weight ppm, further preferably not less than 50 weight ppm, particularly preferably not less than 100 weight ppm) with respect to the addition amount of the high-intensity sweetener to the oral product, because the agent of the present invention can more effectively suppress an off-taste derived from the high-intensity sweetener. In this case, the agent of the present invention is preferably used such that an addition amount of the fatty acid having 3 or 4 carbon atoms to the oral product is not more than 8000 weight ppm (more preferably not more than 4000 weight ppm, further preferably not more than 2000 weight ppm, particularly preferably not more than 1000 weight ppm) with respect to the addition amount of the high-intensity sweetener to the oral product, because the agent of the present invention can particularly effectively suppress an off-taste derived from the high-intensity sweetener.

In one embodiment, when the off-taste substance added to the oral product contains a vegetable protein, the agent of the present invention is preferably used such that an addition amount of the off-taste suppressing compound to the oral product (amount of the off-taste suppressing compound to be added to the oral product) is not less than 0.01 weight ppm (more preferably not less than 0.02 weight ppm, particularly preferably not less than 0.1 weight ppm) with respect to the addition amount of the vegetable protein to the oral product (amount of the vegetable protein added to the oral product), because the agent of the present invention can effectively suppress an off-taste derived from the vegetable protein. In addition, the agent of the present invention is preferably used such that an addition amount of the off-taste suppressing compound to the oral product is not more than 250 weight ppm (more preferably not more than 150 weight ppm, still more preferably not more than 100 weight ppm, further preferably not more than 50 weight ppm, particularly preferably not more than 25 weight ppm) with respect to the addition amount of the vegetable protein to the oral product, because the agent of the present invention can more effectively suppress an off-taste derived from the vegetable protein.

In one embodiment, when the off-taste substance added to the oral product contains a vegetable protein, and the off-taste suppressing compound contains compound (I), the agent of the present invention is preferably used such that an addition amount of the compound (I) to the oral product is not less than 0.01 weight ppm (more preferably not less than 0.02 weight ppm, particularly preferably not less than 0.1 weight ppm) with respect to the addition amount of the vegetable protein to the oral product, because the agent of the present invention can more effectively suppress an off-taste derived from the vegetable protein. In this case, the agent of the present invention is preferably used such that an addition amount of the compound (I) to the oral product is not more than 250 weight ppm (more preferably not more than 150 weight ppm, still more preferably not more than 100 weight ppm, further preferably not more than 50 weight ppm, particularly preferably not more than 25 weight ppm) with respect to the addition amount of the vegetable protein to the oral product, because the agent of the present invention can particularly effectively suppress an off-taste derived from the vegetable protein.

In one embodiment, when the off-taste substance added to the oral product contains a vegetable protein, and the off-taste suppressing compound contains furfural, the agent of the present invention is preferably used such that an addition amount of the furfural to the oral product is not less than 0.01 weight ppm (more preferably not less than 0.02 weight ppm, particularly preferably not less than 0.1 weight ppm) with respect to the addition amount of the vegetable protein to the oral product, because the agent of the present invention can more effectively suppress an off-taste derived from the vegetable protein. In this case, the agent of the present invention is preferably used such that an addition amount of the furfural to the oral product is not more than 15 weight ppm (more preferably not more than 10 weight ppm, particularly preferably not more than 5 weight ppm) with respect to the addition amount of the vegetable protein to the oral product, because the agent of the present invention can particularly effectively suppress an off-taste derived from the vegetable protein.

In one embodiment, when the off-taste substance added to the oral product contains a vegetable protein, and the off-taste suppressing compound contains 2-acetylfuran, the agent of the present invention is preferably used such that an addition amount of the 2-acetylfuran to the oral product is not less than 0.01 weight ppm (more preferably not less than 0.02 weight ppm, particularly preferably not less than 0.1 weight ppm) with respect to the addition amount of the vegetable protein to the oral product, because the agent of the present invention can more effectively suppress an off-taste derived from the vegetable protein. In this case, the agent of the present invention is preferably used such that an addition amount of the 2-acetylfuran to the oral product is not more than 25 weight ppm (more preferably not more than 15 weight ppm, particularly preferably not more than 10 weight ppm) with respect to the addition amount of the vegetable protein to the oral product, because the agent of the present invention can particularly effectively suppress an off-taste derived from the vegetable protein.

In one embodiment, when the off-taste substance added to the oral product contains a vegetable protein, and the off-taste suppressing compound contains cyclotene, the agent of the present invention is preferably used such that an addition amount of the cyclotene to the oral product is not less than 0.01 weight ppm (more preferably not less than 0.02 weight ppm, particularly preferably not less than 0.1 weight ppm) with respect to the addition amount of the vegetable protein to the oral product, because the agent of the present invention can more effectively suppress an off-taste derived from the vegetable protein. In this case, the agent of the present invention is preferably used such that an addition amount of the cyclotene to the oral product is not more than 15 weight ppm (more preferably not more than 10 weight ppm, particularly preferably not more than 5 weight ppm) with respect to the addition amount of the vegetable protein to the oral product, because the agent of the present invention can particularly effectively suppress an off-taste derived from the vegetable protein.

In one embodiment, when the off-taste substance added to the oral product contains a vegetable protein, and the off-taste suppressing compound contains a fatty acid having 3 or 4 carbon atoms (e.g., propionic acid, butyric acid, etc.), the agent of the present invention is preferably used such that an addition amount of the fatty acid having 3 or 4 carbon atoms to the oral product is not less than 0.05 weight ppm (more preferably not less than 0.1 weight ppm, particularly preferably not less than 0.5 weight ppm) with respect to the addition amount of the vegetable protein to the oral product, because the agent of the present invention can more effectively suppress an off-taste derived from the vegetable protein. In this case, the agent of the present invention is preferably used such that an addition amount of the fatty acid having 3 or 4 carbon atoms to the oral product is not more than 250 weight ppm (more preferably not more than 150 weight ppm, still more preferably not more than 100 weight ppm, further preferably not more than 50 weight ppm, particularly preferably not more than 25 weight ppm) with respect to the addition amount of the vegetable protein to the oral product, because the agent of the present invention can particularly effectively suppress an off-taste derived from the vegetable protein.

In one embodiment, when the off-taste substance added to the oral product contains a flavonoid compound, the agent of the present invention is preferably used such that an addition amount of the off-taste suppressing compound to the oral product (amount of the off-taste suppressing compound to be added to the oral product) is not less than 0.1 weight ppm (more preferably not less than 0.5 weight ppm, particularly preferably not less than 1 weight ppm) with respect to the addition amount of the flavonoid compound to the oral product (amount of the flavonoid compound added to the oral product), because the agent of the present invention can effectively suppress an off-taste derived from the flavonoid compound. In addition, the agent of the present invention is preferably used such that an addition amount of the off-taste suppressing compound to the oral product is not more than 8000 weight ppm (more preferably not more than 4000 weight ppm, still more preferably not more than 2000 weight ppm, further preferably not more than 1000 weight ppm, particularly preferably not more than 100 weight ppm) with respect to the addition amount of the flavonoid compound to the oral product, because the agent of the present invention can more effectively suppress an off-taste derived from the flavonoid compound.

In one embodiment, when the off-taste substance added to the oral product contains a flavonoid compound, and the off-taste suppressing compound contains compound (I), the agent of the present invention is preferably used such that an addition amount of the compound (I) to the oral product is not less than 0.1 weight ppm (more preferably not less than 0.5 weight ppm, particularly preferably not less than 1 weight ppm) with respect to the addition amount of the flavonoid compound to the oral product, because the agent of the present invention can more effectively suppress an off-taste derived from the flavonoid compound. In this case, the agent of the present invention is preferably used such that an addition amount of the compound (I) to the oral product is not more than 8000 weight ppm (more preferably not more than 4000 weight ppm, still more preferably not more than 2000 weight ppm, further preferably not more than 1000 weight ppm, particularly preferably not more than 100 weight ppm) with respect to the addition amount of the flavonoid compound to the oral product, because the agent of the present invention can particularly effectively suppress an off-taste derived from the flavonoid compound.

In one embodiment, when the off-taste substance added to the oral product contains a flavonoid compound, and the off-taste suppressing compound contains furfural or 2-acetylfuran, the agent of the present invention is preferably used such that an addition amount of the furfural or 2-acetylfuran to the oral product is not less than 0.1 weight ppm (more preferably not less than 0.5 weight ppm, particularly preferably not less than 1 weight ppm) with respect to the addition amount of the flavonoid compound to the oral product, because the agent of the present invention can more effectively suppress an off-taste derived from the flavonoid compound. In this case, the agent of the present invention is preferably used such that an addition amount of the furfural or 2-acetylfuran to the oral product is not more than 1000 weight ppm (more preferably not more than 500 weight ppm, particularly preferably not more than 100 weight ppm) with respect to the addition amount of the flavonoid compound to the oral product, because the agent of the present invention can particularly effectively suppress an off-taste derived from the flavonoid compound.

In one embodiment, when the off-taste substance added to the oral product contains a flavonoid compound, and the off-taste suppressing compound contains cyclotene, the agent of the present invention is preferably used such that an addition amount of the cyclotene to the oral product is not less than 0.1 weight ppm (more preferably not less than 0.5 weight ppm, particularly preferably not less than 1 weight ppm) with respect to the addition amount of the flavonoid compound to the oral product, because the agent of the present invention can more effectively suppress an off-taste derived from the flavonoid compound. In this case, the agent of the present invention is preferably used such that an addition amount of the cyclotene to the oral product is not more than 1000 weight ppm (more preferably not more than 500 weight ppm, particularly preferably not more than 100 weight ppm) with respect to the addition amount of the flavonoid compound to the oral product, because the agent of the present invention can particularly effectively suppress an off-taste derived from the flavonoid compound.

In one embodiment, when the off-taste substance added to the oral product contains a flavonoid compound, and the off-taste suppressing compound contains a fatty acid having 3 or 4 carbon atoms (e.g., propionic acid, butyric acid, etc.), the agent of the present invention is preferably used such that an addition amount of the fatty acid having 3 or 4 carbon atoms to the oral product is not less than 1 weight ppm (more preferably not less than 5 weight ppm, particularly preferably not less than 10 weight ppm) with respect to the addition amount of the flavonoid compound to the oral product, because the agent of the present invention can more effectively suppress an off-taste derived from the flavonoid compound. In this case, the agent of the present invention is preferably used such that an addition amount of the fatty acid having 3 or 4 carbon atoms to the oral product is not more than 8000 weight ppm (more preferably not more than 4000 weight ppm, further preferably not more than 2000 weight ppm, particularly preferably not more than 1000 weight ppm) with respect to the addition amount of the flavonoid compound to the oral product, because the agent of the present invention can particularly effectively suppress an off-taste derived from the flavonoid compound.

In one embodiment, when the off-taste substance added to the oral product contains a pH-adjusting or bacteriostatic agent, the agent of the present invention is preferably used such that an addition amount of the off-taste suppressing compound to the oral product (amount of the off-taste suppressing compound to be added to the oral product) is not less than 0.01 weight ppm (more preferably not less than 0.05 weight ppm, particularly preferably not less than 0.1 weight ppm) with respect to the addition amount of the pH-adjusting or bacteriostatic agent to the oral product (amount of the pH-adjusting or bacteriostatic agent added to the oral product), because the agent of the present invention can effectively suppress an off-taste derived from the pH-adjusting or bacteriostatic agent. In addition, the agent of the present invention is preferably used such that an addition amount of the off-taste suppressing compound to the oral product is not more than 500 weight ppm (more preferably not more than 300 weight ppm, still more preferably not more than 150 weight ppm, further preferably not more than 50 weight ppm, particularly preferably not more than 30 weight ppm) with respect to the addition amount of the pH-adjusting or bacteriostatic agent to the oral product, because the agent of the present invention can more effectively suppress an off-taste derived from the pH-adjusting or bacteriostatic agent.

In one embodiment, when the off-taste substance added to the oral product contains a pH-adjusting or bacteriostatic agent, and the off-taste suppressing compound contains compound (I), the agent of the present invention is preferably used such that an addition amount of the compound (I) to the oral product is not less than 0.01 weight ppm (more preferably not less than 0.05 weight ppm, particularly preferably not less than 0.1 weight ppm) with respect to the addition amount of the pH-adjusting or bacteriostatic agent to the oral product, because the agent of the present invention can more effectively suppress an off-taste derived from the pH-adjusting or bacteriostatic agent. In this case, the agent of the present invention is preferably used such that an addition amount of the compound (I) to the oral product is not more than 500 weight ppm (more preferably not more than 300 weight ppm, still more preferably not more than 150 weight ppm, further preferably not more than 50 weight ppm, particularly preferably not more than 30 weight ppm) with respect to the addition amount of the pH-adjusting or bacteriostatic agent to the oral product, because the agent of the present invention can particularly effectively suppress an off-taste derived from the pH-adjusting or bacteriostatic agent.

In one embodiment, when the off-taste substance added to the oral product contains a pH-adjusting or bacteriostatic agent, and the off-taste suppressing compound contains furfural or 2-acetylfuran, the agent of the present invention is preferably used such that an addition amount of the furfural or 2-acetylfuran to the oral product is not less than 0.01 weight ppm (more preferably not less than 0.05 weight ppm, particularly preferably not less than 0.1 weight ppm) with respect to the addition amount of the pH-adjusting or bacteriostatic agent to the oral product, because the agent of the present invention can more effectively suppress an off-taste derived from the pH-adjusting or bacteriostatic agent. In this case, the agent of the present invention is preferably used such that an addition amount of the furfural or 2-acetylfuran to the oral product is not more than 50 weight ppm (more preferably not more than 30 weight ppm, particularly preferably not more than 15 weight ppm) with respect to the addition amount of the pH-adjusting or bacteriostatic agent to the oral product, because the agent of the present invention can particularly effectively suppress an off-taste derived from the pH-adjusting or bacteriostatic agent.

In one embodiment, when the off-taste substance added to the oral product contains a pH-adjusting or bacteriostatic agent, and the off-taste suppressing compound contains cyclotene, the agent of the present invention is preferably used such that an addition amount of the cyclotene to the oral product is not less than 0.01 weight ppm (more preferably not less than 0.05 weight ppm, particularly preferably not less than 0.1 weight ppm) with respect to the addition amount of the pH-adjusting or bacteriostatic agent to the oral product, because the agent of the present invention can more effectively suppress an off-taste derived from the pH-adjusting or bacteriostatic agent. In this case, the agent of the present invention is preferably used such that an addition amount of the cyclotene to the oral product is not more than 50 weight ppm (more preferably not more than 30 weight ppm, particularly preferably not more than 15 weight ppm) with respect to the addition amount of the pH-adjusting or bacteriostatic agent to the oral product, because the agent of the present invention can particularly effectively suppress an off-taste derived from the pH-adjusting or bacteriostatic agent.

In one embodiment, when the off-taste substance added to the oral product contains a pH-adjusting or bacteriostatic agent, and the off-taste suppressing compound contains a fatty acid having 3 or 4 carbon atoms (e.g., propionic acid, butyric acid, etc.), the agent of the present invention is preferably used such that an addition amount of the fatty acid having 3 or 4 carbon atoms to the oral product is not less than 0.1 weight ppm (more preferably not less than 0.5 weight ppm, particularly preferably not less than 1 weight ppm) with respect to the addition amount of the pH-adjusting or bacteriostatic agent to the oral product, because the agent of the present invention can more effectively suppress an off-taste derived from the pH-adjusting or bacteriostatic agent. In this case, the agent of the present invention is preferably used such that an addition amount of the fatty acid having 3 or 4 carbon atoms to the oral product is not more than 500 weight ppm (more preferably not more than 300 weight ppm, particularly preferably not more than 150 weight ppm) with respect to the addition amount of the pH-adjusting or bacteriostatic agent to the oral product, because the agent of the present invention can particularly effectively suppress an off-taste derived from the pH-adjusting or bacteriostatic agent.

In one embodiment, when the off-taste substance added to the oral product contains a thickening polysaccharide, the agent of the present invention is preferably used such that an addition amount of the off-taste suppressing compound to the oral product (amount of the off-taste suppressing compound to be added to the oral product) is not less than 0.05 weight ppm (more preferably not less than 0.1 weight ppm, particularly preferably not less than 0.5 weight ppm) with respect to the addition amount of the thickening polysaccharide to the oral product (amount of the thickening polysaccharide added to the oral product), because the agent of the present invention can effectively suppress an off-taste derived from the thickening polysaccharide. In addition, the agent of the present invention is preferably used such that an addition amount of the off-taste suppressing compound to the oral product is not more than 500 weight ppm (more preferably not more than 300 weight ppm, still more preferably not more than 150 weight ppm, further preferably not more than 50 weight ppm, particularly preferably not more than 30 weight ppm) with respect to the addition amount of the thickening polysaccharide to the oral product, because the agent of the present invention can more effectively suppress an off-taste derived from the thickening polysaccharide.

In one embodiment, when the off-taste substance added to the oral product contains a thickening polysaccharide, and the off-taste suppressing compound comprises compound (I), the agent of the present invention is preferably used such that an addition amount of the compound (I) to the oral product is not less than 0.05 weight ppm (more preferably not less than 0.1 weight ppm, particularly preferably not less than 0.5 weight ppm) with respect to the addition amount of the thickening polysaccharide to the oral product, because the agent of the present invention can more effectively suppress an off-taste derived from the thickening polysaccharide. In this case, the agent of the present invention is preferably used such that an addition amount of the compound (I) to the oral product is not more than 500 weight ppm (more preferably not more than 300 weight ppm, still more preferably not more than 150 weight ppm, further preferably not more than 50 weight ppm, particularly preferably not more than 30 weight ppm) with respect to the addition amount of the thickening polysaccharide to the oral product, because the agent of the present invention can particularly effectively suppress an off-taste derived from the thickening polysaccharide.

In one embodiment, when the off-taste substance added to the oral product contains a thickening polysaccharide, and the off-taste suppressing compound contains furfural or 2-acetylfuran, the agent of the present invention is preferably used such that an addition amount of the furfural or 2-acetylfuran to the oral product is not less than 0.05 weight ppm (more preferably not less than 0.1 weight ppm, particularly preferably not less than 0.5 weight ppm) with respect to the addition amount of the thickening polysaccharide to the oral product, because the agent of the present invention can more effectively suppress an off-taste derived from the thickening polysaccharide. In this case, the agent of the present invention is preferably used such that an addition amount of the furfural or 2-acetylfuran to the oral product is not more than 50 weight ppm (more preferably not more than 30 weight ppm, particularly preferably not more than 15 weight ppm) with respect to the addition amount of the thickening polysaccharide to the oral product, because the agent of the present invention can particularly effectively suppress an off-taste derived from the thickening polysaccharide.

In one embodiment, when the off-taste substance added to the oral product contains a thickening polysaccharide, and the off-taste suppressing compound contains cyclotene, the agent of the present invention is preferably used such that an addition amount of the cyclotene to the oral product is not less than 0.05 weight ppm (more preferably not less than 0.1 weight ppm, particularly preferably not less than 0.5 weight ppm) with respect to the addition amount of the thickening polysaccharide to the oral product, because the agent of the present invention can more effectively suppress an off-taste derived from the thickening polysaccharide. In this case, the agent of the present invention is preferably used such that an addition amount of the cyclotene to the oral product is not more than 50 weight ppm (more preferably not more than 30 weight ppm, particularly preferably not more than 15 weight ppm) with respect to the addition amount of the thickening polysaccharide to the oral product, because the agent of the present invention can particularly effectively suppress an off-taste derived from the thickening polysaccharide.

In one embodiment, when the off-taste substance added to the oral product contains a thickening polysaccharide, and the off-taste suppressing compound contains a fatty acid having 3 or 4 carbon atoms (e.g., propionic acid, butyric acid, etc.), the agent of the present invention is preferably used such that an addition amount of the fatty acid having 3 or 4 carbon atoms to the oral product is not less than 0.5 weight ppm (more preferably not less than 1 weight ppm, particularly preferably not less than 5 weight ppm) with respect to the addition amount of the thickening polysaccharide to the oral product, because the agent of the present invention can more effectively suppress an off-taste derived from the thickening polysaccharide. In this case, the agent of the present invention is preferably used such that an addition amount of the fatty acid having 3 or 4 carbon atoms to the oral product is not more than 500 weight ppm (more preferably not more than 300 weight ppm, particularly preferably not more than 150 weight ppm) with respect to the addition amount of the thickening polysaccharide to the oral product, because the agent of the present invention can particularly effectively suppress an off-taste derived from the thickening polysaccharide.

The amount of the off-taste substance (e.g., potassium chloride, amino acid or a salt thereof, high-intensity sweetener, vegetable protein, flavonoid compound, pH-adjusting or bacteriostatic agent, thickening polysaccharide, etc.) to be added to the oral product may be appropriately set according to the purpose of the addition (e.g., substitute for salt, etc.) and is not particularly limited.

By adding the agent of the present invention to an oral product (e.g., food, oral medicine, etc.) containing an off-taste substance (e.g., potassium chloride, amino acid or a salt thereof, high-intensity sweetener, vegetable protein, flavonoid compound, pH-adjusting or bacteriostatic agent, thickening polysaccharide, etc.), the off-taste (particularly, bitter taste, metallic taste, harsh taste, astringent taste, etc. derived from off-taste substances such as potassium chloride, amino acid or a salt thereof, high-intensity sweetener, vegetable protein, flavonoid compound, pH-adjusting or bacteriostatic agent, thickening polysaccharide, or the like) of the oral product can be suppressed.

According to the present invention, an oral product containing the agent of the present invention and an off-taste substance (e.g., potassium chloride, amino acid or a salt thereof, high-intensity sweetener, vegetable protein, flavonoid compound, pH-adjusting or bacteriostatic agent, thickening polysaccharide, etc.) can also be provided.

### 2. Production method of oral product

The present invention also provides a production method of an oral product (simply referred to as "the production method of the present invention" at times in the present specification), including adding at least one compound selected from the group consisting of a compound represented by the following formula (I):

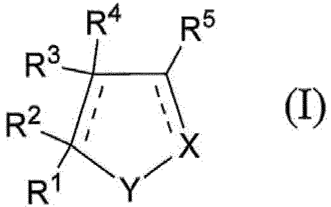

wherein
R¹ and R³ are each independently a hydrogen atom, a hydroxy group, a methyl group, a formyl group, an acetyl group, or an acetoxy group;
R² and R⁴ are each a hydrogen atom, or are absent when a carbon atom bonded to R¹ and a carbon atom bonded to R³ are bonded to each other to form a double bond;
R⁵ is a hydrogen atom or an oxo group;
one of X and Y is an oxy group, and the other is a group represented by the following formula (II):

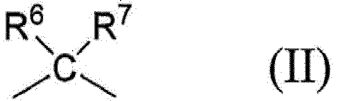

wherein R⁶ is a hydrogen atom or a methyl group;
R⁷ is a hydrogen atom, or is absent when a carbon atom bonded to R⁵ and a carbon atom bonded to R⁶ are bonded to each other to form a double bond; and
a doublet consisting of a solid line and a broken line is a single bond or a double bond,
provided that R⁵ is an oxo group when R¹ and R³ are simultaneously hydrogen atoms,

cyclotene, and
a fatty acid having 3 or 4 carbon atoms
(referred to as "off-taste suppressing compound" at times in the present specification) and an off-taste substance (e.g., inorganic salts such as potassium chloride and the like, amino
acid or a salt thereof, high-intensity sweetener, vegetable protein, flavonoid compound, pH-adjusting or bacteriostatic agent, thickening polysaccharide, etc.).

The off-taste suppressing compound and the off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) that may be used in the production method of the present invention are the same as the off-taste suppressing compound and the off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) explained in the aforementioned "1. Off-taste suppressing agent", and preferred embodiments are also the same.

In one embodiment, the production method of the present invention includes adding at least one compound selected from the group consisting of compound (I), cyclotene, and a fatty acid having 3 or 4 carbon atoms as an off-taste suppressing compound, and may include adding one selected from the group consisting of inorganic salt, amino acid or a salt thereof, high-intensity sweetener, vegetable protein, flavonoid compound, pH-adjusting or bacteriostatic agent, and thickening polysaccharide as an off-taste substance.

In one embodiment, the production method of the present invention includes adding at least one compound selected from the group consisting of compound (I), cyclotene, and a fatty acid having 3 or 4 carbon atoms as an off-taste suppressing compound, and may include adding one selected from the group consisting of potassium chloride, branched chain amino acid (leucine, isoleucine, valine), acesulfame potassium, sucralose, aspartame, stevia, soy protein, pea protein, fava bean protein, flavanol compound (e.g., catechin, etc.), sodium acetate, disodium phosphate, and cellulose derivative (e.g., methyl cellulose, etc.) as an off-taste substance.

In one embodiment, the production method of the present invention includes adding at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid as an off-taste suppressing compound, and may include adding one selected from the group consisting of inorganic salt, amino acid or a salt thereof, high-intensity sweetener, vegetable protein, flavonoid compound, pH-adjusting or bacteriostatic agent, and thickening polysaccharide as an off-taste substance.

In one embodiment, the production method of the present invention includes adding at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid as an off-taste suppressing compound, and may include adding one selected from the group consisting of potassium chloride, branched chain amino acid (leucine, isoleucine, valine), acesulfame potassium, sucralose, aspartame, stevia, soy protein, pea protein, fava bean protein, flavanol compound (e.g., catechin, etc.), sodium acetate, disodium phosphate, cellulose derivative (e.g., methyl cellulose, etc.) as an off-taste substance.

In one embodiment, the production method of the present invention includes adding at least one compound selected from the group consisting of furfural, 2-acetylfuran, cyclotene, and propionic acid as an off-taste suppressing compound, and may include adding at least one selected from the group consisting of inorganic salt, amino acid or a salt thereof, high-intensity sweetener, vegetable protein, flavonoid compound, pH-adjusting or bacteriostatic agent, and thickening polysaccharide as an off-taste substance.

In one embodiment, the production method of the present invention includes adding at least one compound selected from the group consisting of furfural, 2-acetylfuran, cyclotene, and propionic acid as an off-taste suppressing compound, and may include adding one selected from the group consisting of potassium chloride, branched chain amino acid (leucine, isoleucine, valine), acesulfame potassium, sucralose, aspartame, stevia, soy protein, pea protein, fava bean protein, flavanol compound (e.g., catechin, etc.), sodium acetate, disodium phosphate, cellulose derivative (e.g., methyl cellulose, etc.) as an off-taste substance.

When the production method of the present invention includes adding at least a high-intensity sweetener (e.g., stevia, etc.) as an off-taste substance, the off-taste suppressing compound used in the production method of the present invention may be one compound selected from the group consisting of compound (I) (excluding furfural), cyclotene, and a fatty acid having 3 or 4 carbon atoms. In this case, the off-taste suppressing compound used in the production method of the present invention is preferably at least one compound selected from the group consisting of 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid, more preferably at least one compound selected from the group consisting of 2-acetylfuran, cyclotene, and propionic acid.

When the production method of the present invention includes adding at least potassium chloride as the off-taste substance, the off-taste suppressing compound used in the production method of the present invention may be at least one compound selected from the group consisting of compound (I), cyclotene, and butyric acid. In this case, the off-taste suppressing compound used in the production method of the present invention is preferably at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, and butyric acid, more preferably at least one compound selected from the group consisting of furfural, 2-acetylfuran, and cyclotene.

The addition amount of the off-taste suppressing compound to the oral product (amount of the off-taste suppressing compound to be added to the oral product) in the production method of the present invention is the same as the addition amount (mentioned above) of the off-taste suppressing compound to the oral product when the agent of the present invention is added to the oral product, and the preferable range is also the same.

The addition amount of the off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) to the oral product (amount of the off-taste substance to be added to the oral product) in the production method of the present invention may be appropriately set according to the purpose of the addition (e.g., substitute for salt, etc.) and is not particularly limited.

The method and conditions for adding the off-taste suppressing compound and the off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) to the oral product are not particularly limited and can be appropriately set according to the kind of the oral product, and the like. The time when the off-taste suppressing compound and the off-taste substance are added to an oral product is not particularly limited, and, for example, the off-taste suppressing compound and the off-taste substance may be added to the materials before production of an oral product.

The order of addition of the off-taste suppressing compound and the off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) to the oral product is not particularly limited, and they may be added in the order of, for example, the off-taste substance and then the off-taste suppressing compound, or may be added in the reverse order. Alternatively, the off-taste suppressing compound and the off-taste substance may be simultaneously added to the oral product.

The production method of the present invention may appropriately include, in addition to the addition of an off-taste suppressing compound and an off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) to an oral product, a treatment step, a production step, and a cooking step, which are conventionally used in the production of oral products, according to the kind of the oral product to be produced, and the like.

Examples of the oral product to be produced by the production method of the present invention include those similar to the oral products exemplified in the description of the oral product to which the agent of the present invention may be added (mentioned above).

According to the production method of the present invention, an oral product (e.g., food, oral medicament, etc.) in which an off-taste (particularly, bitter taste, metallic taste, harsh taste, astringent taste, etc. derived from off-taste substances such as inorganic salts such as potassium chloride and the like, amino acid or a salt thereof, high-intensity sweetener, vegetable protein, flavonoid compound, pH-adjusting or bacteriostatic agent, thickening polysaccharide, and the like) is suppressed can be produced.

### 3. Off-taste suppressing method

The present invention also provides a method for suppressing an off-taste of an oral product (simply referred to as "the suppression method of the present invention" at times in the present specification), including adding at least one compound selected from the group consisting of a compound represented by the following formula (I):

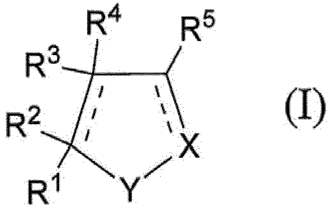

wherein
R¹ and R³ are each independently a hydrogen atom, a hydroxy group, a methyl group, a formyl group, an acetyl group, or an acetoxy group;
R² and R⁴ are each a hydrogen atom, or are absent when a carbon atom bonded to R¹ and a carbon atom bonded to R³ are bonded to each other to form a double bond;
R⁵ is a hydrogen atom or an oxo group;
one of X and Y is an oxy group, and the other is a group represented by the following formula (II):

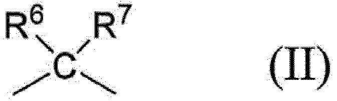

   wherein R⁶ is a hydrogen atom or a methyl group;
R⁷ is a hydrogen atom, or is absent when a carbon atom bonded to R⁵ and a carbon atom bonded to R⁶ are bonded to each other to form a double bond; and
a doublet consisting of a solid line and a broken line is a single bond or a double bond,
provided that R⁵ is an oxo group when R¹ and R³ are simultaneously hydrogen atoms,

cyclotene, and
a fatty acid having 3 or 4 carbon atoms
(referred to as "off-taste suppressing compound" at times in the present specification).

The off-taste suppressing compound that may be used in the suppression method of the present invention is the same as the off-taste suppressing compound described in the aforementioned "1. off-taste suppressing agent", and preferred embodiments are also the same.

The addition amount of the off-taste suppressing compound to the oral product (amount of the off-taste suppressing compound to be added to the oral product) in the suppression method of the present invention is the same as the addition amount (mentioned above) of the off-taste suppressing compound to the oral product when the agent of the present invention is added to the oral product, and the preferable range is also the same.

The method and conditions for adding the off-taste suppressing compound to an oral product are not particularly limited, and can be appropriately set according to the kind of the oral product, and the like. The time when the off-taste suppressing compound is added to an oral product is not particularly limited, and, for example, during production of an oral product, after completion of the oral product, or the like can be mentioned. The off-taste suppressing compound and the off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) may be added to the materials before production of an oral product.

Examples of the oral product to be produced by the production method of the present invention include those similar to the oral products exemplified in the description of the oral product to which the agent of the present invention may be added (mentioned above).

According to the suppression method of the present invention, the off-taste (particularly, bitter taste, metallic taste, harsh taste, astringent taste, etc. derived from off-taste substances such as potassium chloride, amino acid or a salt thereof, high-intensity sweetener, vegetable protein, flavonoid compound, pH-adjusting or bacteriostatic agent, thickening polysaccharide, and the like) of an oral product (e.g., food, oral medicine, etc.) containing an off-taste substance (e.g., inorganic salts such as potassium chloride and the like, amino acid or a salt thereof, high-intensity sweetener, vegetable protein, flavonoid compound, pH-adjusting or bacteriostatic agent, thickening polysaccharide, etc.) can be suppressed.

The present invention is described in more detail in the following Examples; however, the present invention is not limited by these examples in any way.

When "%", "ppm", "ppb" are indicated in the present specification, they mean "wt%", "weight ppm", and "weight ppb", respectively, unless otherwise specified.

### [Example]

Unless otherwise specified, the materials, reagents, compounds, and the like used in the Examples can be easily obtained or prepared according to methods generally employed in the art, or are commercially available.

### [Experimental Example 1]

### (preparation of evaluation sample)

Each compound shown in the following Tables 1 to 13 was added to a 0.8 wt% potassium chloride aqueous solution at the concentration (addition concentration) shown in the following Tables 1 to 13 to prepare each evaluation sample.

### (evaluation of off-taste suppressing effect)

Based on the following evaluation criteria, a panel of two experts determined by consensus the intensity of off-tastes (bitter taste, metallic taste, harsh taste, astringent taste) derived from potassium chloride in each evaluation sample, by reference to each potassium chloride aqueous solution adjusted to 0.8 wt%, 0.75 wt%, 0.7 wt%, or 0.65 wt%.

### [evaluation criteria]

- : intensity of the same level as potassium chloride aqueous solution with potassium chloride concentration of not less than 0.8 wt%
+ : intensity of the same level as potassium chloride aqueous solution with potassium chloride concentration of not less than 0.75 wt% and less than 0.8 wt%
++ : intensity of the same level as potassium chloride aqueous solution with potassium chloride concentration of not less than 0.7 wt% and less than 0.75 wt%
+++: intensity of the same level as potassium chloride aqueous solution with potassium chloride concentration of not less than 0.65 wt% and less than 0.7 wt%

The results are shown in the following Tables 1 - 13.

**[Table 1]**

| | | | | |
|---|---|---|---|---|
| compound name: furfural | | | | |
| addition concentration (weight ppb) | 5 | 10 | 50 | 100 |
| addition amount of compound (weight ppm) with respect to potassium chloride contained in potassium chloride aqueous solution | 0.625 | 1.25 | 6.25 | 12.5 |
| off-taste suppressing effect | + | +++ | +++ | + |

**[Table 2]**

| | | | |
|---|---|---|---|
| compound name: 2-acetylfuran | | | |
| addition concentration (weight ppb) | 50 | 100 | 500 |
| addition amount of compound (weight ppm) with respect to potassium chloride contained in potassium chloride aqueous solution | 6.25 | 12.5 | 62.5 |
| off-taste suppressing effect | ++ | +++ | + |

**[Table 3]**

| | | | | | |
|---|---|---|---|---|---|
| compound name: cyclotene | | | | | |
| addition concentration (weight ppb) | 1 | 5 | 10 | 50 | 100 |
| addition amount of compound (weight ppm) with respect to potassium chloride contained in potassium chloride aqueous solution | 0.125 | 0.625 | 1.25 | 6.25 | 12.5 |
| off-taste suppressing effect | + | ++ | +++ | +++ | ++ |

**[Table 4]**

| | | | | |
|---|---|---|---|---|
| compound name: 2-acetyl-5-methylfuran | | | | |
| addition concentration (weight ppb) | 100 | 500 | 1000 | 2000 |
| addition amount of compound (weight ppm) with respect to potassium chloride contained in potassium chloride aqueous solution | 12.5 | 62.5 | 125 | 250 |
| off-taste suppressing effect | + | ++ | + | + |

**[Table 5]**

| | | | |
|---|---|---|---|
| compound name: 3-acetyl-2,5-dimethylfuran | | | |
| addition concentration (weight ppb) | 1 | 5 | 10 |
| addition amount of compound (weight ppm) with respect to potassium chloride contained in potassium chloride aqueous solution | 0.125 | 0.625 | 1.25 |
| off-taste suppressing effect | + | ++ | + |

**[Table 6]**

| | | | | | | | |
|---|---|---|---|---|---|---|---|
| compound name: 4,5-dimethyl-3-hydroxy-2(5H)-furanone | | | | | | | |
| addition concentration (weight ppb) | 1 | 5 | 10 | 50 | 100 | 500 | 1000 |
| addition amount of compound (weight ppm) with respect to potassium chloride contained in potassium chloride aqueous solution | 0.125 | 0.625 | 1.25 | 6.25 | 12.5 | 62.5 | 125 |
| off-taste suppressing effect | + | ++ | ++ | + | + | + | + |

**[Table 7]**

| | | | | |
|---|---|---|---|---|
| compound name: 2-methyltetrahydrofuran-3-one | | | | |
| addition concentration (weight ppb) | 10 | 50 | 100 | 500 |
| addition amount of compound (weight ppm) with respect to potassium chloride contained in potassium chloride aqueous solution | 1.25 | 6.25 | 12.5 | 62.5 |
| off-taste suppressing effect | ++ | ++ | ++ | + |

**[Table 8]**

| | | | | | | |
|---|---|---|---|---|---|---|
| compound name: 4-hydroxy-5-methyl-3(2H)-furanone | | | | | | |
| addition concentration (weight ppb) | 1 | 5 | 10 | 50 | 100 | 500 |
| addition amount of compound (weight ppm) with respect to potassium chloride contained in potassium chloride aqueous solution | 0.125 | 0.625 | 1.25 | 6.25 | 12.5 | 62.5 |
| off-taste suppressing effect | + | + | + | ++ | ++ | + |

**[Table 9]**

| | | | | | |
|---|---|---|---|---|---|
| compound name: 4-hydroxy-2,5-dimethyl-3(2H)-furanone | | | | | |
| addition concentration (weight ppb) | 1 | 5 | 10 | 50 | 100 |
| addition amount of compound (weight ppm) with respect to potassium chloride contained in potassium chloride aqueous solution | 0.125 | 0.625 | 1.25 | 6.25 | 12.5 |
| off-taste suppressing effect | + | + | ++ | ++ | ++ |

**[Table 10]**

| | | | |
|---|---|---|---|
| compound name: 4-acetoxy-2,5-dimethyl-3(2H)-furanone | | | |
| addition concentration (weight ppb) | 50 | 100 | 500 |
| addition amount of compound (weight ppm) with respect to potassium chloride contained in potassium chloride aqueous solution | 6.25 | 12.5 | 62.5 |
| off-taste suppressing effect | + | ++ | + |

**[Table 11]**

| compound name: 5-ethyl-3-hydroxy-4-methyl-2(5H)-furanone | | | | | | | |
|---|---|---|---|---|---|---|---|
| addition concentration (weight ppb) | 1 | 5 | 10 | 50 | 100 | 500 | 1000 |
| addition amount of compound (weight ppm) with respect to potassium chloride contained in potassium chloride aqueous solution | 0.125 | 0.625 | 1.25 | 6.25 | 12.5 | 62.5 | 125 |
| off-taste suppressing effect | - | + | + | - | - | - | - |

**[Table 12]**

| compound name: 5-ethyl-4-hydroxy-2-methyl-3(2H)-furanone (HEMF) | | | |
|---|---|---|---|
| addition concentration (weight ppb) | 10 | 50 | 100 |
| addition amount of compound (weight ppm) with respect to potassium chloride contained in potassium chloride aqueous solution | 1.25 | 6.25 | 12.5 |
| off-taste suppressing effect | - | + | - |

**[Table 13]**

| compound name | addition concentration (weight ppb) | addition amount of compound (weight ppm) with respect to potassium chloride contained in potassium chloride aqueous solution | off-taste suppressing effect |
|---|---|---|---|
| 2-ethylfuran | 100 | 12.5 | - |
| 2-pentylfuran | 100 | 12.5 | - |

As is clear from the results shown in Tables 1 to 13, the intensity of off-tastes (bitter taste, metallic taste, harsh taste, astringent taste) derived from potassium chloride decreased in potassium chloride aqueous solutions to which furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, and cyclotene were added. Therefore, it was confirmed that these compounds have an effect of suppressing off-tastes derived from potassium chloride. Among these, furfural, 2-acetylfuran, and cyclotene each had a high off-taste suppressing effect.

On the other hand, an off-taste suppressing effect could be hardly confirmed in 5-ethyl-3-hydroxy-4-methyl-2(5H)-furanone and 5-ethyl-4-hydroxy-2-methyl-3(2H)-furanone (HEMF), and even if the effect could be confirmed, it was weaker than in the above-mentioned compounds.

In addition, the potassium chloride aqueous solutions to which 2-ethylfuran and 2-pentylfuran were added did not show changes in the intensity of the off-tastes derived from potassium chloride, and an off-taste suppressing effect could not be confirmed in these compounds.

### [Experimental Example 2]

### (preparation of evaluation sample)

Each compound shown in the following Table 14 was added to a 0.8 wt% potassium chloride aqueous solution at the concentration (addition concentration) shown in the following Table 14 to prepare each evaluation sample.

### (evaluation of off-taste suppressing effect)

By a method similar to that in Experimental Example 1, a panel of two experts determined the intensity of off-tastes (bitter taste, metallic taste, harsh taste, astringent taste) derived from potassium chloride in each evaluation sample.

The results are shown in the following Table 14.

**[Table 14]**

| | | | | | |
|---|---|---|---|---|---|
| compound name | addition concentration (weight ppb) | 100 | 500 | 1000 | 2000 |
| | addition amount of compound (weight ppm) with respect to potassium chloride contained in potassium chloride aqueous solution | 12.5 | 62.5 | 125 | 250 |
| formic acid | off-taste suppressing effect | | | - | |
| acetic acid | | | | - | |
| propionic acid | | + | ++ | ++ | ++ |
| butyric acid | | - | + | + | |
| pentanoic acid | | | | - | |
| hexanoic acid | | | | - | |

As is clear from the results shown in Table 14, the intensity of off-tastes (bitter taste, metallic taste, harsh taste, astringent taste) derived from potassium chloride decreased in potassium chloride aqueous solutions to which butyric acid or propionic acid was added. Therefore, it was confirmed that these compounds have an effect of suppressing off-tastes derived from potassium chloride. In particular, propionic acid had a high off-taste suppressing effect.

On the other hand, the potassium chloride aqueous solutions to which formic acid, acetic acid, pentanoic acid, or hexanoic acid was added did not show changes in the intensity of the off-tastes derived from potassium chloride, and an off-taste suppressing effect could not be confirmed in these compounds.

### [Experimental Example 3]

### (preparation of base solution)

As shown in the following (1) to (3) below, 0.8 wt% of potassium chloride was added to a food base powder corresponding to 0.5 wt% of sodium chloride to prepare each base solution having an off-taste derived from potassium chloride. When each base solution is prepared without adding potassium chloride, it does not exhibit an off-taste (bitter taste, metallic taste, harsh taste, astringent taste).

### (1) ramen noodle soup solution

Potassium chloride (0.8 g) was added to a soup powder (1.1 g) of a commercially available instant ramen noodle (manufactured by SANYO FOODS Co., Ltd., trade name "Sapporo Ichiban Shouyuaji"), hot water (98.1 g) was added to dissolve the mixture to prepare a base solution (ramen noodle soup solution).

### (2) chicken broth solution

Potassium chloride (0.8 g) was added to a commercially available powdered chicken broth mix (manufactured by Ajinomoto Co., Inc., trade name "Marutorigara Soup") (1.0 g), hot water (98.2 g) was added to dissolve the mixture to prepare a base solution (chicken broth soup solution).

### (3) potage solution

Potassium chloride (0.8 g) was added to a commercially available powdered instant potage (manufactured by Ajinomoto Co., Inc., trade name "Knorr (registered trade mark) Cup Soup Potage") (7.1 g), hot water (92.1 g) was added to dissolve the mixture to prepare a base solution (potage solution).

### (preparation of evaluation sample)

Each compound shown in the following Tables 15 to 17 was added to each base solution (ramen noodle soup solution, chicken broth solution, potage solution) so as to achieve the concentration (addition concentration) shown in the following Tables 15 to 17 to prepare each evaluation sample.

### (evaluation of off-taste suppressing effect)

By a method similar to that in Experimental Example 1, a panel of two experts determined the intensity of off-tastes (bitter taste, metallic taste, harsh taste, astringent taste) derived from potassium chloride in each evaluation sample.

The results are shown in the following Tables 15 to 17.

**[Table 15]**

| compound name | Ramen noodle soup solution | | |
|---|---|---|---|
| | addition concentration | addition amount of compound (weight ppm) with respect to potassium chloride added to base solution | off-taste suppressing effect |
| cyclotene | 10 ppb | 1.25 | +++ |
| propionic acid | 1 ppm | 125 | ++ |
| furfural | 10 ppb | 1.25 | ++ |
| 2-acetylfuran | 100 ppb | 12.5 | +++ |
| 4,5-dimethyl-3-hydroxy-2 (5H)-furanone | 10 ppb | 1.25 | ++ |
| 4-hydroxy-2,5-dimethyl-3 (2H)-furanone | 10 ppb | 1.25 | ++ |
| 4-hydroxy-5-methyl-3(2H)-furanone | 100 ppb | 12.5 | ++ |

**[Table 16]**

| compound name | chicken broth solution | | |
|---|---|---|---|
| | addition concentration | addition amount of compound (weight ppm) with respect to potassium chloride added to base solution | off-taste suppressing effect |
| cyclotene | 10 ppb | 1.25 | +++ |
| propionic acid | 1 ppm | 125 | +++ |
| furfural | 10 ppb | 1.25 | +++ |
| 2-acetylfuran | 100 ppb | 12.5 | ++ |
| 4,5-dimethyl-3-hydroxy-2 (5H)-furanone | 10 ppb | 1.25 | ++ |
| 4-hydroxy-2,5-dimethyl-3 (2H)-furanone | 10 ppb | 1.25 | ++ |
| 4-hydroxy-5-methyl-3(2H)-furanone | 100 ppb | 12.5 | ++ |

**[Table 17]**

| compound name | Potage solution | | |
|---|---|---|---|
| | addition concentration | addition amount of compound (weight ppm) with respect to potassium chloride added to base solution | off-taste suppressing effect |
| cyclotene | 10 ppb | 1.25 | +++ |
| propionic acid | 1 ppm | 125 | ++ |
| furfural | 10 ppb | 1.25 | ++ |
| 2-acetylfuran | 100 ppb | 12.5 | ++ |
| 4,5-dimethyl-3-hydroxy-2 (5H)-furanone | 10 ppb | 1.25 | ++ |
| 4-hydroxy-2,5-dimethyl-3 (2H)-furanone | 10 ppb | 1.25 | ++ |
| 4-hydroxy-5-methyl-3(2H)-furanone | 100 ppb | 12.5 | ++ |

As is clear from the results shown in Tables 15 to 17, the intensity of off-tastes (bitter taste, metallic taste, harsh taste, astringent taste) derived from potassium chloride decreased in the base solutions to which cyclotene, propionic acid, furfural, 2-acetylfuran, 4,5-dimethyl-3-hydroxy-2(5H)-furanone, 4-hydroxy-2,5-dimethyl-3(2H)-furanone, or 4-hydroxy-5-methyl-3(2H)-furanone was added. Therefore, it was confirmed that these compounds can suppress off-tastes derived from potassium chloride even in actual foods.

### [Experimental Example 4]

### (preparation of base solution)

Potassium chloride (0.1 g) was added to a commercially available Japanese noodle soup base (manufactured by Yamaki Co., Ltd.) (11.1 g), and dissolved by adding hot water (88.8 g) to prepare a base solution. When the base solution is prepared without adding potassium chloride, it does not exhibit an off-taste (bitter taste, metallic taste, harsh taste, astringent taste).

### (preparation of evaluation sample)

Each compound shown in the following Table 18 was added to the base solution prepared above so as to achieve the concentration (addition concentration) shown in the following Table 18 to prepare each evaluation sample.

### (evaluation of off-taste suppressing effect)

Based on the following evaluation criteria, a panel of two experts determined by consensus the intensity of off-tastes (bitter taste, metallic taste, harsh taste, astringent taste) derived from potassium chloride in each evaluation sample, by reference to each potassium chloride aqueous solution adjusted to 0.1 wt% or 0.05 wt%.

### [evaluation criteria]

- : intensity of the same level as potassium chloride aqueous solution with potassium chloride concentration of not less than 0.1 wt%
+ : intensity of the same level as potassium chloride aqueous solution with potassium chloride concentration of not less than 0.05 wt% and less than 0.1 wt%
++ : intensity of the same level as potassium chloride aqueous solution with potassium chloride concentration of less than 0.05 wt%

The results are shown in the following Table 18.

**[Table 18]**

| compound name | addition concentration (weight ppb) | addition amount of compound (weight ppm) with respect to potassium chloride added to base solution | off-taste suppressing effect |
|---|---|---|---|
| propionic acid | 1000 | 1000 | + |
| | 2000 | 2000 | ++ |
| 2-acetyl-5-methylfuran | 1000 | 1000 | + |
| | 2000 | 2000 | ++ |

As is clear from the results shown in Table 18, the intensity of off-tastes (bitter taste, metallic taste, harsh taste, astringent taste) derived from potassium chloride decreased in the base solutions to which propionic acid or 2-acetyl-5-methylfuran was added. Therefore, it was confirmed that these compounds can suppress off-tastes derived from potassium chloride even in actual foods.

### [Experimental Example 5]

### (preparation of base solution)

Potassium chloride (0.2 g) was added to a commercially available Japanese noodle soup base (manufactured by Yamaki Co., Ltd.) (11.1 g), and dissolved by adding hot water (88.7 g) to prepare a base solution. When the base solution is prepared without adding potassium chloride, it does not exhibit an off-taste (bitter taste, metallic taste, harsh taste, astringent taste).

### (preparation of evaluation sample)

Each compound shown in the following Table 19 was added to the base solution prepared above so as to achieve the concentration (addition concentration) shown in the following Table 19 to prepare each evaluation sample.

### (evaluation of off-taste suppressing effect)

Based on the following evaluation criteria, a panel of two experts determined by consensus the intensity of off-tastes (bitter taste, metallic taste, harsh taste, astringent taste) derived from potassium chloride in each evaluation sample, by reference to each potassium chloride aqueous solution adjusted to 0.2 wt%, 0.15 wt% or 0.1 wt%.

### [evaluation criteria]

- : intensity of the same level as potassium chloride aqueous solution with potassium chloride concentration of not less than 0.2 wt%
+ : intensity of the same level as potassium chloride aqueous solution with potassium chloride concentration of not less than 0.15 wt% and less than 0.2 wt%
++ : intensity of the same level as potassium chloride aqueous solution with potassium chloride concentration of not less than 0.1 wt% and less than 0.15 wt%
+++ : intensity of the same level as potassium chloride aqueous solution with potassium chloride concentration of less than 0.1 wt%

The results are shown in the following Table 19.

**[Table 19]**

| compound name | addition concentration (weight ppb) | addition amount of compound (weight ppm) with respect to potassium chloride added to base solution | off-taste suppressing effect |
|---|---|---|---|
| cyclotene | 25 | 12.5 | +++ |
| propionic acid | 1000 | 500 | ++ |
| furfural | 50 | 25 | +++ |
| 2-acetylfuran | 100 | 50 | ++ |
| 3-acetyl-2,5-dimethylfuran | 5 | 2.5 | +++ |
| 2-methyltetrahydrofuran-3-one | 100 | 50 | + |
| 4-acetoxy-2,5-dimethyl-3 (2H)-furanone | 100 | 50 | + |

As is clear from the results shown in Table 19, the intensity of off-tastes (bitter taste, metallic taste, harsh taste, astringent taste) derived from potassium chloride decreased in the base solutions to which cyclotene, propionic acid, furfural, 2-acetylfuran, 3-acetyl-2,5-dimethylfuran, 2-methyltetrahydrofuran-3-one, or 4-acetoxy-2,5-dimethyl-3(2H)-furanone was added. Therefore, it was confirmed that these compounds can suppress off-tastes derived from potassium chloride even in actual foods.

### [Experimental Example 6]

### (preparation of evaluation sample)

Each compound shown in the following Table 20 was added to an aqueous solution prepared by dissolving leucine (0.50 parts by weight), isoleucine (0.25 parts by weight), valine (0.25 parts by weight), and granulated sugar (4 parts by weight) in ion exchange water (95 parts by weight) (hereinafter at times referred to as BCAA sweetness aqueous solution) so as to achieve the concentration (addition concentration) shown in the following Table 20 to prepare each evaluation sample.

### (evaluation of off-taste suppressing effect)

Based on the following evaluation criteria, a panel of four experts determined by consensus the intensity of off-tastes (bitter taste, harsh taste) derived from amino acid in each evaluation sample, by comparison with a BCAA sweetness aqueous solution without addition of any compound (negative control).

### [evaluation criteria]

± : no change from negative control
- : slightly suppressed compared to negative control
-- : suppressed compared to negative control (same level of intensity as BCAA sweetness aqueous solution in which total concentration of leucine, isoleucine, and valine (weight ratio=2:1:1) exceeds 0.8 wt% and is not more than 0.9 wt%)
---: considerably suppressed compared to negative control (same level of intensity as BCAA sweetness aqueous solution in which total concentration of leucine, isoleucine, and valine (weight ratio=2:1:1) is not more than 0.8 wt%)

The results are shown in the following Table 20.

**[Table 20]**

| compound name | addition concentration (weight ppb) | addition amount of compound (weight ppm) with respect to amino acid contained in BCAA sweetness aqueous solution | off-taste suppressing effect |
|---|---|---|---|
| cyclotene | 1 | 0.1 | -- |
| | 10 | 1 | -- |
| | 50 | 5 | -- |
| | 100 | 10 | -- |
| propionic acid | 100 | 10 | - |
| | 500 | 50 | -- |
| | 1000 | 100 | -- |
| | 2000 | 200 | -- |
| furfural | 1 | 0.1 | - |
| | 10 | 1 | -- |
| | 50 | 5 | -- |
| | 100 | 10 | -- |
| 2-acetylfuran | 10 | 1 | - |
| | 50 | 5 | -- |
| | 100 | 10 | -- |
| | 200 | 20 | -- |

As is clear from the results shown in Table 20, the intensity of off-tastes (bitter taste, harsh taste) derived from amino acid (branched chain amino acid) was suppressed in the BCAA sweetness aqueous solution to which cyclotene, propionic acid, furfural, or 2-acetylfuran was added. Therefore, it was confirmed that these compounds have an effect of suppressing off-tastes derived from amino acid (branched chain amino acid).

### [Experimental Example 7]

### (preparation of evaluation sample)

Each compound shown in the following Table 21 was added to an aqueous solution prepared by dissolving stevia (manufactured by PureCircle) (0.073 parts by weight) in ion exchange water (99.93 parts by weight) (hereinafter at times referred to as stevia aqueous solution) so as to achieve the concentration (addition concentration) shown in the following Table 21 to prepare each evaluation sample.

### (evaluation of off-taste suppressing effect)

Based on the following evaluation criteria, a panel of four experts determined by consensus the intensity of off-tastes (bitter taste, harsh taste, metallic taste) derived from stevia in each evaluation sample, by comparison with a stevia aqueous solution without addition of any compound (negative control).

### [evaluation criteria]

± : no change from negative control
- : slightly suppressed compared to negative control
-- : suppressed compared to negative control (same level of intensity as stevia aqueous solution having stevia concentration exceeding 0.0584 wt% and not more than 0.0657 wt%)
---: considerably suppressed compared to negative control (same level of intensity as stevia aqueous solution having stevia concentration of not more than 0.0584 wt%)

The results are shown in the following Table 21.

**[Table 21]**

| compound name | addition concentration (weight ppb) | addition amount of compound (weight ppm) with respect to stevia contained in stevia aqueous solution | off-taste suppressing effect |
|---|---|---|---|
| cyclotene | 1 | 1.4 | - |
| | 10 | 13.7 | -- |
| | 100 | 137.0 | -- |
| propionic acid | 10 | 13.7 | -- |
| | 100 | 137.0 | -- |
| | 1000 | 1369.9 | -- |
| furfural | 1 | 1.4 | - |
| | 10 | 13.7 | -- |
| | 100 | 137.0 | -- |
| 2-acetylfuran | 1 | 1.4 | - |
| | 10 | 13.7 | -- |
| | 100 | 137.0 | -- |
| 2-acetyl-5-methylfuran | 10 | 13.7 | -- |
| | 100 | 137.0 | -- |
| | 1000 | 1369.9 | -- |
| 2-methyltetrahydrofuran-3-one | 10 | 13.7 | -- |
| | 100 | 137.0 | -- |
| | 1000 | 1369.9 | -- |

As is clear from the results shown in Table 21, the intensity of off-tastes (bitter taste, harsh taste, metallic taste) derived from stevia was suppressed in the stevia aqueous solution to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from stevia.

### [Experimental Example 8]

### (preparation of evaluation sample)

Each compound shown in the following Table 22 was added to an aqueous solution prepared by dissolving powdered pea protein (6 parts by weight) and granulated sugar (4 parts by weight) in ion exchange water (90 parts by weight) (hereinafter at times referred to as pea protein aqueous solution) so as to achieve the concentration (addition concentration) shown in the following Table 22 to prepare each evaluation sample. Here, the powdered pea protein manufactured by Cosucra was used.

### (evaluation of off-taste suppressing effect)

Based on the following evaluation criteria, a panel of four experts determined by consensus the intensity of off-tastes (bitter taste, harsh taste, astringent taste) derived from pea protein in each evaluation sample, by comparison with a pea protein aqueous solution without addition of any compound (negative control).

### [evaluation criteria]

± : no change from negative control
- : slightly suppressed compared to negative control
-- : suppressed compared to negative control (same level of intensity as pea protein aqueous solution having powdered pea protein content exceeding 4.8 wt% and not more than 5.4 wt%)
---: considerably suppressed compared to negative control (same level of intensity as pea protein aqueous solution having powdered pea protein content of not more than 4.8 wt%

The results are shown in the following Table 22.

**[Table 22]**

| compound name | addition concentration (weight ppb) | addition amount of compound (weight ppm) with respect to powdered pea protein contained in pea protein aqueous solution | off-taste suppressing effect |
|---|---|---|---|
| cyclotene | 10 | 0.2 | --- |
| | 100 | 1.7 | --- |
| propionic acid | 100 | 1.7 | --- |
| | 1000 | 16.7 | --- |
| furfural | 10 | 0.2 | --- |
| | 100 | 1.7 | --- |
| 2-acetylfuran | 10 | 0.2 | --- |
| | 100 | 1.7 | --- |
| 2-acetyl-5-methylfuran | 100 | 1.7 | --- |
| | 1000 | 16.7 | --- |
| 2-methyltetrahydrofuran-3-one | 100 | 1.7 | --- |
| | 1000 | 16.7 | --- |

As is clear from the results shown in Table 22, the intensity of off-tastes (bitter taste, harsh taste, astringent taste) derived from pea protein was suppressed in the pea protein aqueous solution to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from pea protein.

### [Experimental Example 9]

### (preparation of evaluation sample)

Each compound shown in the following Table 23 was added to a 0.15 wt% catechin aqueous solution (an aqueous solution prepared by dissolving catechin (0.15 parts by weight) in ion exchange water (99.85 parts by weight)) so as to achieve the concentration (addition concentration) shown in the following Table 23 to prepare each evaluation sample.

### (evaluation of off-taste suppressing effect)

Based on the following evaluation criteria, a panel of four experts determined by consensus the intensity of off-tastes (bitter taste, rough taste, harsh taste) derived from catechin in each evaluation sample, by comparison with a 0.15 wt% catechin aqueous solution without addition of any compound (negative control).

### [evaluation criteria]

± : no change from negative control
- : slightly suppressed compared to negative control
-- : suppressed compared to negative control (same level of intensity as catechin aqueous solution having catechin concentration exceeding 0.12 wt% and not more than 0.135 wt%)
---: considerably suppressed compared to negative control (same level of intensity as catechin aqueous solution having catechin concentration of not more than 0.12 wt%)

The results are shown in the following Table 23.

**[Table 23]**

| compound name | addition concentration (weight ppb) | addition amount of compound (weight ppm) with respect to catechin contained in catechin aqueous solution | off-taste suppressing effect |
|---|---|---|---|
| cyclotene | 10 | 6.7 | -- |
| | 100 | 66.7 | -- |
| propionic acid | 100 | 66.7 | -- |
| | 1000 | 666.7 | --- |
| furfural | 10 | 6.7 | -- |
| | 100 | 66.7 | -- |
| 2-acetylfuran | 10 | 6.7 | -- |
| | 100 | 66.7 | -- |
| 2-acetyl-5-methylfuran | 100 | 66.7 | -- |
| | 1000 | 666.7 | -- |
| 2-methyltetrahydrofuran-3-one | 100 | 66.7 | -- |
| | 1000 | 666.7 | -- |

As is clear from the results shown in Table 23, the intensity of off-tastes (bitter taste, rough taste, harsh taste) derived from catechin was suppressed in the catechin aqueous solution to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from catechin.

### [Experimental Example 10]

### (preparation of evaluation sample)

Each compound shown in the following Table 24 was added to a 0.06 wt% acesulfame potassium aqueous solution (an aqueous solution prepared by dissolving acesulfame potassium (0.06 parts by weight) in water (99.94 parts by weight)) so as to achieve the concentration (addition concentration) shown in the following Table 24 to prepare each evaluation sample.

### (evaluation of off-taste suppressing effect)

Based on the following evaluation criteria, a panel of four experts determined by consensus the intensity of off-tastes (bitter taste) derived from acesulfame potassium in each evaluation sample, by comparison with a 0.06 wt% acesulfame potassium aqueous solution without addition of any compound (negative control).

### [evaluation criteria]

± : no change from negative control
- : slightly suppressed compared to negative control
-- : suppressed compared to negative control (same level of intensity as acesulfame potassium aqueous solution having acesulfame potassium concentration exceeding 0.048 wt% and not more than 0.054 wt%)
---: considerably suppressed compared to negative control (same level of intensity as acesulfame potassium aqueous solution having acesulfame potassium concentration of not more than 0.048 wt%)

The results are shown in the following Table 24.

**[Table 24]**

| compound name | addition concentration (weight ppb) | addition amount of compound (weight ppm) with respect to acesulfame potassium contained in acesulfame potassium aqueous solution | off-taste suppressing effect |
|---|---|---|---|
| cyclotene | 10 | 16.7 | -- |
| | 100 | 166.7 | -- |
| propionic acid | 100 | 166.7 | - |
| | 1000 | 1666.7 | -- |
| furfural | 10 | 16.7 | -- |
| | 100 | 166.7 | -- |
| 2-acetylfuran | 10 | 16.7 | - |
| | 100 | 166.7 | -- |
| 2-acetyl-5-methylfuran | 100 | 166.7 | -- |
| | 1000 | 1666.7 | - |
| 2-methyltetrahydrofuran-3-one | 100 | 166.7 | -- |
| | 1000 | 1666.7 | -- |

As is clear from the results shown in Table 24, the intensity of off-tastes (bitter taste) derived from acesulfame potassium was suppressed in the acesulfame potassium aqueous solution to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from acesulfame potassium.

### [Experimental Example 11]

### (preparation of evaluation sample)

Each compound shown in the following Table 25 was added to a 0.007 wt% sucralose aqueous solution (an aqueous solution prepared by dissolving sucralose (0.007 parts by weight) in water (99.993 parts by weight)) so as to achieve the concentration (addition concentration) shown in the following Table 25 to prepare each evaluation sample.

### (evaluation of off-taste suppressing effect)

Based on the following evaluation criteria, a panel of three experts determined by consensus the intensity of off-tastes (bitter taste, harsh taste, metallic taste) derived from sucralose in each evaluation sample, by comparison with a 0.007 wt% sucralose aqueous solution without addition of any compound (negative control).

### [evaluation criteria]

± : no change from negative control
- : slightly suppressed compared to negative control
-- : suppressed compared to negative control (same level of intensity as sucralose aqueous solution having sucralose concentration exceeding 0.0056 wt% and not more than 0.0063 wt%)
---: considerably suppressed compared to negative control (same level of intensity as sucralose aqueous solution having sucralose concentration of not more than 0.0056 wt%)

The results are shown in the following Table 25.

**[Table 25]**

| compound name | addition concentration (weight ppb) | addition amount of compound (weight ppm) with respect to sucralose contained in sucralose aqueous solution | off-taste suppressing effect |
|---|---|---|---|
| cyclotene | 10 | 143 | -- |
| | 100 | 1429 | -- |
| propionic acid | 100 | 1429 | - |
| furfural | 10 | 143 | - |
| | 100 | 1429 | -- |
| 2-acetylfuran | 10 | 143 | - |
| | 100 | 1429 | -- |
| 2-acetyl-5-methylfuran | 100 | 1429 | - |
| 2-methyltetrahydrofuran-3-one | 100 | 1429 | - |

As is clear from the results shown in Table 25, the intensity of off-tastes (bitter taste, harsh taste, metallic taste) derived from sucralose was suppressed in the sucralose aqueous solution to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from sucralose.

### [Experimental Example 12]

### (preparation of evaluation sample)

Each compound shown in the following Table 26 was added to a 0.12 wt% aspartame aqueous solution (an aqueous solution prepared by dissolving aspartame (0.12 parts by weight) in ion exchange water (99.88 parts by weight)) so as to achieve the concentration (addition concentration) shown in the following Table 26 to prepare each evaluation sample.

### (evaluation of off-taste suppressing effect)

Based on the following evaluation criteria, a panel of three experts determined by consensus the intensity of off-tastes (bitter taste, harsh taste, metallic taste) derived from aspartame in each evaluation sample, by comparison with a 0.12 wt% aspartame aqueous solution without addition of any compound (negative control).

### [evaluation criteria]

± : no change from negative control
- : slightly suppressed compared to negative control
-- : suppressed compared to negative control (same level of intensity as aspartame aqueous solution having aspartame concentration exceeding 0.096 wt% and not more than 0.108 wt%)
---: considerably suppressed compared to negative control (same level of intensity as aspartame aqueous solution having aspartame concentration of not more than 0.096 wt%)

The results are shown in the following Table 26.

**[Table 26]**

| compound name | addition concentration (weight ppb) | addition amount of compound (weight ppm) with respect to aspartame contained in aspartame aqueous solution | off-taste suppressing effect |
|---|---|---|---|
| cyclotene | 10 | 8 | - |
| | 100 | 83 | - |
| propionic acid | 100 | 83 | - |
| | 1000 | 833 | - |
| furfural | 10 | 8 | - |
| | 100 | 83 | - |
| 2-acetylfuran | 10 | 8 | - |
| | 100 | 83 | - |
| 2-acetyl-5-methylfuran | 100 | 83 | - |
| | 1000 | 833 | - |
| 2-methyltetrahydrofuran-3-one | 100 | 83 | - |
| | 1000 | 833 | - |

As is clear from the results shown in Table 26, the intensity of off-tastes (bitter taste, harsh taste, metallic taste) derived from aspartame was suppressed in the aspartame aqueous solution to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from aspartame.

### [Experimental Example 13]

### (preparation of evaluation sample)

Each compound shown in the following Table 27 was added to an aqueous solution prepared by dissolving powdered soy protein (4 parts by weight) in water (96 parts by weight) (hereinafter at times referred to as soy protein aqueous solution) so as to achieve the concentration (addition concentration) shown in the following Table 27 to prepare each evaluation sample. Here, the powdered soy protein manufactured by FUJI OIL CO., LTD. was used.

### (evaluation of off-taste suppressing effect)

Based on the following evaluation criteria, a panel of four experts determined by consensus the intensity of off-tastes (bitter taste, harsh taste, astringent taste) derived from soy protein in each evaluation sample, by comparison with a soy protein aqueous solution without addition of any compound (negative control).

### [evaluation criteria]

± : no change from negative control
- : slightly suppressed compared to negative control
-- : suppressed compared to negative control (same level of intensity as soy protein aqueous solution having powdered soy protein content exceeding 3.2 wt% and not more than 3.6 wt%)
---: considerably suppressed compared to negative control (same level of intensity as soy protein aqueous solution having powdered soy protein content of not more than 3.2 wt%)

The results are shown in the following Table 27.

**[Table 27]**

| compound name | addition concentration (weight ppb) | addition amount of compound (weight ppm) with respect to powdered soy protein contained in soy protein aqueous solution | off-taste suppressing effect |
|---|---|---|---|
| cyclotene | 10 | 0.25 | -- |
| | 100 | 2.50 | -- |
| propionic acid | 100 | 2.50 | -- |
| | 1000 | 25.00 | -- |
| furfural | 10 | 0.25 | - |
| | 100 | 2.50 | -- |
| 2-acetylfuran | 10 | 0.25 | - |
| | 100 | 2.50 | - |
| 2-acetyl-5-methylfuran | 100 | 2.50 | -- |
| | 1000 | 25.00 | -- |
| 2-methyltetrahydrofuran-3-one | 100 | 2.50 | -- |
| | 1000 | 25.00 | -- |

As is clear from the results shown in Table 27, the intensity of off-tastes (bitter taste, harsh taste, astringent taste) derived from soy protein was suppressed in the soy protein aqueous solution to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from soy protein.

### [Experimental Example 14]

### (preparation of evaluation sample)

Each compound shown in the following Table 28 was added to granular soy protein (manufactured by FUJI OIL CO., LTD.) so as to achieve the concentration (addition concentration) shown in the following Table 28 to prepare each evaluation sample.

### (evaluation of off-taste suppressing effect)

Based on the following evaluation criteria, a panel of four experts determined by consensus the intensity of off-tastes (bitter taste, harsh taste, astringent taste) derived from soy protein in each evaluation sample, by comparison with granular soy protein without addition of any compound (negative control).

### [evaluation criteria]

± : no change from negative control
- : slightly suppressed compared to negative control
-- : suppressed compared to negative control
---: considerably suppressed compared to negative control

The results are shown in the following Table 28.

**[Table 28]**

| compound name | addition concentration (weight ppb) | addition amount of compound (weight ppm) with respect to granular soy protein | off-taste suppressing effect |
|---|---|---|---|
| cyclotene | 250 | 0.3 | -- |
| propionic acid | 10000 | 10.0 | --- |
| furfural | 500 | 0.5 | -- |
| 2-acetylfuran | 1000 | 1.0 | - |
| 2-acetyl-5-methylfuran | 500 | 0.5 | -- |
| 2-methyltetrahydrofuran-3-one | 10000 | 10.0 | -- |

As is clear from the results shown in Table 28, the intensity of off-tastes (bitter taste, harsh taste, astringent taste) derived from soy protein was suppressed in the granular soy protein to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from soy protein.

### [Experimental Example 15]

### (preparation of evaluation sample)

Each compound shown in the following Table 29 was added to granular pea protein (manufactured by Roquette) so as to achieve the concentration (addition concentration) shown in the following Table 29 to prepare each evaluation sample.

### (evaluation of off-taste suppressing effect)

Based on the following evaluation criteria, a panel of four experts determined by consensus the intensity of off-tastes (bitter taste, harsh taste, astringent taste) derived from pea protein in each evaluation sample, by comparison with granular pea protein without addition of any compound (negative control).

### [evaluation criteria]

± : no change from negative control
- : slightly suppressed compared to negative control
-- : suppressed compared to negative control
---: considerably suppressed compared to negative control

The results are shown in the following Table 29.

**[Table 29]**

| compound name | addition concentration (weight ppb) | addition amount of compound (weight ppm) with respect to granular pea protein | off-taste suppressing effect |
|---|---|---|---|
| cyclotene | 250 | 0.3 | -- |
| propionic acid | 10000 | 10.0 | -- |
| furfural | 500 | 0.5 | - |
| 2-acetylfuran | 1000 | 1.0 | -- |
| 2-acetyl-5-methylfuran | 500 | 0.5 | -- |
| 2-methyltetrahydrofuran-3-one | 10000 | 10.0 | -- |

As is clear from the results shown in Table 29, the intensity of off-tastes (bitter taste, harsh taste, astringent taste) derived from pea protein was suppressed in the granular pea protein to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from pea protein.

### [Experimental Example 16]

### (preparation of evaluation sample)

Each compound shown in the following Table 30 was added to granular fava bean protein (manufactured by Schouten) so as to achieve the concentration (addition concentration) shown in the following Table 30 to prepare each evaluation sample.

### (evaluation of off-taste suppressing effect)

Based on the following evaluation criteria, a panel of four experts determined by consensus the intensity of off-tastes (bitter taste, harsh taste, astringent taste) derived from fava bean protein in each evaluation sample, by comparison with granular fava bean protein without addition of any compound (negative control).

### [evaluation criteria]

± : no change from negative control
- : slightly suppressed compared to negative control
-- : suppressed compared to negative control
---: considerably suppressed compared to negative control

The results are shown in the following Table 30.

**[Table 30]**

| compound name | addition concentration (weight ppb) | addition amount of compound (weight ppm) with respect to granular fava bean protein | off-taste suppressing effect |
|---|---|---|---|
| cyclotene | 250 | 0.3 | -- |
| propionic acid | 10000 | 10.0 | -- |
| furfural | 500 | 0.5 | -- |
| 2-acetylfuran | 1000 | 1.0 | -- |
| 2-acetyl-5-methylfuran | 500 | 0.5 | - |
| 2-methyltetrahydrofuran-3-one | 10000 | 10.0 | -- |

As is clear from the results shown in Table 30, the intensity of off-tastes (bitter taste, harsh taste, astringent taste) derived from fava bean protein was suppressed in the granular fava bean protein to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from fava bean protein.

### [Experimental Example 17]

### (production of soy protein hamburg steak)

Of the materials shown in the following Table 31, the materials of category 1 were first mixed, and the materials of category 2 were further mixed. The obtained mixture was formed into a circular shape of about 100 g per piece, and then baked at 180°C for 2 minutes and 30 seconds for each of the front and back sides on an iron plate to produce a soy protein hamburg steak. Here, the granular soy protein manufactured by FUJI OIL CO., LTD. was used.

**[Table 31]**

| category | materials | blended (wt%) |
|---|---|---|
| 1 | granular soy protein | 21 |
| | water | 41.1 |
| | canola oil | 7.5 |
| 2 | wheat protein | 1 |
| | methyl cellulose | 1.0 |
| | canola oil | 2.5 |
| | water | 10 |
| | shortening | 8 |
| | margarine | 2 |
| | salt | 0.3 |
| | sugar | 0.2 |
| | onion powder | 0.4 |
| | garlic powder | 0.4 |
| | black pepper | 0.3 |
| | nutmeg | 0.3 |
| | Western-style seasoning | 4 |
| total (wt%) | | 100 |

### (preparation of evaluation sample)

Each compound shown in the following Table 32 was added to soy protein hamburg steak so as to achieve the concentration (addition concentration) shown in the following Table 32 to prepare each evaluation sample.

### (evaluation of off-taste suppressing effect)

Based on the following evaluation criteria, a panel of five experts determined by consensus the intensity of off-tastes (bitter taste, harsh taste, astringent taste) derived from soy protein in each evaluation sample, by comparison with soy protein hamburg steak without addition of any compound (negative control).

### [evaluation criteria]

± : no change from negative control
- : slightly suppressed compared to negative control
-- : suppressed compared to negative control
---: considerably suppressed compared to negative control

The results are shown in the following Table 32.

**[Table 32]**

| compound name | addition concentration (weight ppb) | addition amount of compound (weight ppm) with respect to granular soy protein contained in soy protein hamburg steak | off-taste suppressing effect |
|---|---|---|---|
| cyclotene | 250 | 1.2 | --- |
| propionic acid | 10000 | 47.6 | -- |
| furfural | 500 | 2.4 | -- |
| 2-acetylfuran | 1000 | 4.8 | -- |
| 2-acetyl-5-methylfuran | 500 | 2.4 | - |
| 2-methyltetrahydrofuran-3-one | 10000 | 47.6 | -- |

As is clear from the results shown in Table 32, the intensity of off-tastes (bitter taste, harsh taste, astringent taste) derived from soy protein was suppressed in the soy protein hamburg steak to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from soy protein.

### [Experimental Example 18]

### (preparation of evaluation sample)

Each compound shown in the following Table 33 was added to an aqueous solution prepared by dissolving sodium acetate (1 part by weight) and acetic acid (0.3 parts by weight) in water (98.7 parts by weight) (hereinafter at times referred to as sodium acetate aqueous solution) so as to achieve the concentration (addition concentration) shown in the following Table 33 to prepare each evaluation sample.

### (evaluation of off-taste suppressing effect)

Based on the following evaluation criteria, a panel of four experts determined by consensus the intensity of off-tastes (bitter taste, harsh taste, astringent taste) derived from sodium acetate in each evaluation sample, by comparison with a sodium acetate aqueous solution without addition of any compound (negative control).

### [evaluation criteria]

± : no change from negative control
- : slightly suppressed compared to negative control
-- : suppressed compared to negative control (same level of intensity as sodium acetate aqueous solution having sodium acetate concentration exceeding 0.8 wt% and not more than 0.9 wt%)
---: considerably suppressed compared to negative control (same level of intensity as sodium acetate aqueous solution having sodium acetate concentration of not more than 0.8 wt%)

The results are shown in the following Table 33.

**[Table 33]**

| compound name | addition concentration (weight ppb) | addition amount of compound (weight ppm) with respect to sodium acetate contained in sodium acetate aqueous solution | off-taste suppressing effect |
|---|---|---|---|
| cyclotene | 10 | 1 | - |
| | 100 | 10 | -- |
| propionic acid | 100 | 10 | - |
| | 1000 | 100 | - |
| furfural | 10 | 1 | -- |
| | 100 | 10 | -- |
| 2-acetylfuran | 10 | 1 | - |
| | 100 | 10 | - |
| 2-acetyl-5-methylfuran | 100 | 10 | - |
| | 1000 | 100 | - |
| 2-methyltetrahydrofuran-3-one | 100 | 10 | - |
| | 1000 | 100 | - |

As is clear from the results shown in Table 33, the intensity of off-tastes (bitter taste, harsh taste, astringent taste) derived from sodium acetate was suppressed in the sodium acetate aqueous solution to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from sodium acetate.

### [Experimental Example 19]

### (preparation of evaluation sample)

Each compound shown in the following Table 34 was added to a 1.5 wt% disodium phosphate aqueous solution (aqueous solution prepared by dissolving disodium phosphate (1.5 parts by weight) in water (98.5 parts by weight)) so as to achieve the concentration (addition concentration) shown in the following Table 34 to prepare each evaluation sample.

### (evaluation of off-taste suppressing effect)

Based on the following evaluation criteria, a panel of four experts determined by consensus the intensity of off-tastes (bitter taste, harsh taste, astringent taste) derived from disodium phosphate in each evaluation sample, by comparison with a 1.5 wt% disodium phosphate aqueous solution without addition of any compound (negative control).

### [evaluation criteria]

± : no change from negative control
- : slightly suppressed compared to negative control
-- : suppressed compared to negative control (same level of intensity as disodium phosphate aqueous solution having disodium phosphate concentration exceeding 1.2 wt% and not more than 1.35 wt%)
---: considerably suppressed compared to negative control (same level of intensity as disodium phosphate aqueous solution having disodium phosphate concentration of not more than 1.2 wt%)

The results are shown in the following Table 34.

**[Table 34]**

| compound name | addition concentration (weight ppb) | addition amount of compound (weight ppm) with respect to disodium phosphate contained in disodium phosphate aqueous solution | off-taste suppressing effect |
|---|---|---|---|
| cyclotene | 10 | 0.7 | - |
| | 100 | 6.7 | -- |
| propionic acid | 100 | 6.7 | - |
| | 1000 | 66.7 | - |
| furfural | 10 | 0.7 | -- |
| | 100 | 6.7 | -- |
| 2-acetylfuran | 10 | 0.7 | - |
| | 100 | 6.7 | -- |
| 2-acetyl-5-methylfuran | 100 | 6.7 | - |
| | 1000 | 66.7 | -- |
| 2-methyltetrahydrofuran-3-one | 100 | 6.7 | - |
| | 1000 | 66.7 | - |

As is clear from the results shown in Table 34, the intensity of off-tastes (bitter taste, harsh taste, astringent taste) derived from disodium phosphate was suppressed in the disodium phosphate aqueous solution to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from disodium phosphate.

### [Experimental Example 20]

### (preparation of evaluation sample)

Each compound shown in the following Table 35 was added to a 1 wt% methyl cellulose aqueous solution (aqueous solution prepared by dissolving methyl cellulose (1 part by weight) in water (99 parts by weight)) so as to achieve the concentration (addition concentration) shown in the following Table 35 to prepare each evaluation sample. Here, the methyl cellulose manufactured by Unitec Foods Co., Ltd. was used.

### (evaluation of off-taste suppressing effect)

Based on the following evaluation criteria, a panel of four experts determined by consensus the intensity of off-tastes (bitter taste, harsh taste, astringent taste) derived from methyl cellulose in each evaluation sample, by comparison with a 1 wt% methyl cellulose aqueous solution without addition of any compound (negative control).

### [evaluation criteria]

± : no change from negative control
- : slightly suppressed compared to negative control
-- : suppressed compared to negative control (same level of intensity as methyl cellulose aqueous solution having methyl cellulose concentration exceeding 0.8 wt% and not more than 0.9 wt%)
---: considerably suppressed compared to negative control (same level of intensity as methyl cellulose aqueous solution having methyl cellulose concentration of not more than 0.8 wt%)

The results are shown in the following Table 35.

**[Table 35]**

| compound name | addition concentration (weight ppb) | addition amount of compound (weight ppm) relative to methyl cellulose contained in methyl cellulose aqueous solution | off-taste suppressing effect |
|---|---|---|---|
| cyclotene | 10 | 1 | - |
| | 100 | 10 | -- |
| propionic acid | 100 | 10 | - |
| | 1000 | 100 | -- |
| furfural | 10 | 1 | - |
| | 100 | 10 | -- |
| 2-acetylfuran | 10 | 1 | - |
| | 100 | 10 | -- |
| 2-acetyl-5-methylfuran | 100 | 10 | - |
| | 1000 | 100 | - |
| 2-methyltetrahydrofuran-3-one | 100 | 10 | - |
| | 1000 | 100 | -- |

As is clear from the results shown in Table 35, the intensity of off-tastes (bitter taste, harsh taste, astringent taste) derived from methyl cellulose was suppressed in the methyl cellulose aqueous solution to which cyclotene, propionic acid, furfural, 2-acetylfuran, 2-acetyl-5-methylfuran, or 2-methyltetrahydrofuran-3-one was added. Therefore, it was confirmed that these compounds have an effect of suppressing off-tastes derived from methyl cellulose.

### [Industrial Applicability]

According to the present invention, an agent for suppressing an off-taste of an oral product containing an off-taste substance (e.g., potassium chloride, amino acid or a salt thereof, high-intensity sweetener, vegetable protein, flavonoid compound, pH-adjusting or bacteriostatic agent, thickening polysaccharide, etc.) added thereto can be provided.

In addition, the present invention can also provide a method for suppressing an off-taste of an oral product containing an off-taste substance (e.g., potassium chloride, amino acid or a salt thereof, high-intensity sweetener, vegetable protein, flavonoid compound, pH-adjusting or bacteriostatic agent, thickening polysaccharide, etc.) added thereto, and a method for producing an oral product containing an off-taste substance (e.g., potassium chloride, amino acid or a salt thereof, high-intensity sweetener, vegetable protein, flavonoid compound, pH-adjusting or bacteriostatic agent, thickening polysaccharide, etc.) added thereto in which the off-taste is suppressed.

This application is based on a patent application No. 2019-208858 filed in Japan (filing date: November 19, 2019), the contents of which are incorporated in full herein.

## Claims

1. An agent for suppressing an off-taste of an oral product to which an off-taste substance is added, which agent comprises at least one compound (hereinafter to be referred to as an off-taste suppressing compound) selected from the group consisting of
a compound represented by the following formula (I): 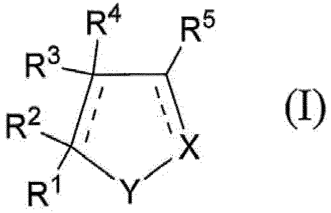 wherein
R¹ and R³ are each independently a hydrogen atom, a hydroxy group, a methyl group, a formyl group, an acetyl group, or an acetoxy group;
R² and R⁴ are each a hydrogen atom, or are absent when a carbon atom bonded to R¹ and a carbon atom bonded to R³ are bonded to each other to form a double bond;
R⁵ is a hydrogen atom or an oxo group;
one of X and Y is an oxy group, and the other is a group represented by the following formula (II): 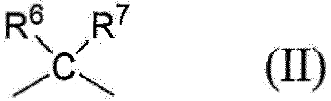 wherein R⁶ is a hydrogen atom or a methyl group;
R⁷ is a hydrogen atom, or is absent when a carbon atom bonded to R⁵ and a carbon atom bonded to R⁶ are bonded to each other to form a double bond;
a doublet consisting of a solid line and a broken line is a single bond or a double bond,
provided that R⁵ is an oxo group when R¹ and R³ are simultaneously hydrogen atoms,
cyclotene, and
a fatty acid having 3 or 4 carbon atoms.

2. The agent according to claim 1, wherein the off-taste suppressing compound is at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid.

3. The agent according to claim 1 or 2, wherein the off-taste substance comprises at least one selected from the group consisting of an inorganic salt, an amino acid or a salt thereof, a high-intensity sweetener, a vegetable protein, a flavonoid compound, a pH-adjusting or bacteriostatic agent, and a thickening polysaccharide.

4. The agent according to any one of claims 1 to 3, wherein the agent is used such that an addition amount of the off-taste suppressing compound to the oral product is 0.005 - 8000 weight ppm with respect to the addition amount of the off-taste substance to the oral product.

5. The agent according to any one of claims 1 to 4, wherein the oral product is a food.

6. The agent according to any one of claims 1 to 5, wherein the off-taste of the oral product derives from an off-taste substance added to the oral product.

7. The agent according to any one of claims 1 to 6, wherein the off-taste is at least one selected from the group consisting of a bitter taste, a metallic taste, a harsh taste, an astringent taste, and a rough taste.

8. A method for suppressing an off-taste of an oral product comprising an off-taste substance added thereto, comprising adding at least one compound (hereinafter to be referred to as an off-taste suppressing compound) selected from the group consisting of
a compound represented by the following formula (I): 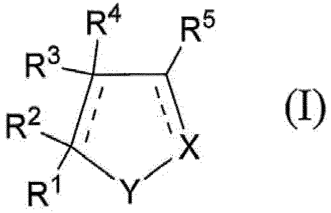 wherein
R¹ and R³ are each independently a hydrogen atom, a hydroxy group, a methyl group, a formyl group, an acetyl group, or an acetoxy group;
R² and R⁴ are each a hydrogen atom, or are absent when a carbon atom bonded to R¹ and a carbon atom bonded to R³ are bonded to each other to form a double bond;
R⁵ is a hydrogen atom or an oxo group;
one of X and Y is an oxy group, and the other is a group represented by the following formula (II): 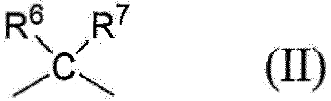 wherein R⁶ is a hydrogen atom or a methyl group;
R⁷ is a hydrogen atom, or is absent when a carbon atom bonded to R⁵ and a carbon atom bonded to R⁶ are bonded to each other to form a double bond;
a doublet consisting of a solid line and a broken line is a single bond or a double bond,
provided that R⁵ is an oxo group when R¹ and R³ are simultaneously hydrogen atoms,
cyclotene, and
a fatty acid having 3 or 4 carbon atoms.

9. The suppression method according to claim 8, wherein the off-taste suppressing compound is at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid.

10. The suppression method according to claim 8 or 9, wherein the off-taste substance comprises at least one selected from the group consisting of an inorganic salt, an amino acid or a salt thereof, a high-intensity sweetener, a vegetable protein, a flavonoid compound, a pH-adjusting or bacteriostatic agent, and a thickening polysaccharide.

11. The suppression method according to any one of claims 8 to 10, wherein the off-taste suppressing compound is added to the oral product in an amount of 0.005 - 8000 weight ppm with respect to the amount of the off-taste substance added to the oral product.

12. A method for producing an oral product, comprising adding at least one compound (hereinafter to be referred to as an off-taste suppressing compound) selected from the group consisting of
a compound represented by the following formula (I): 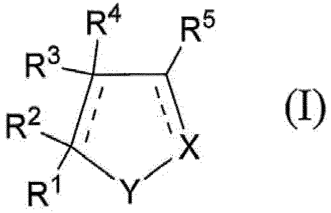 wherein
R¹ and R³ are each independently a hydrogen atom, a hydroxy group, a methyl group, a formyl group, an acetyl group, or an acetoxy group;
R² and R⁴ are each a hydrogen atom, or are absent when a carbon atom bonded to R¹ and a carbon atom bonded to R³ are bonded to each other to form a double bond;
R⁵ is a hydrogen atom or an oxo group;
one of X and Y is an oxy group, and the other is a group represented by the following formula (II): 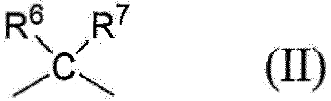 wherein R⁶ is a hydrogen atom or a methyl group;
R⁷ is a hydrogen atom, or is absent when a carbon atom bonded to R⁵ and a carbon atom bonded to R⁶ are bonded to each other to form a double bond;
a doublet consisting of a solid line and a broken line is a single bond or a double bond,
provided that R⁵ is an oxo group when R¹ and R³ are simultaneously hydrogen atoms,
cyclotene, and
a fatty acid having 3 or 4 carbon atoms, and
an off-taste substance.

13. The production method according to claim 12, wherein the off-taste suppressing compound is at least one compound selected from the group consisting of furfural, 2-acetylfuran, 2-acetyl-5-methylfuran, 3-acetyl-2,5-dimethylfuran, 4,5-dimethyl-3-hydroxy-2(5H)-furanone, 2-methyltetrahydrofuran-3-one, 4-hydroxy-5-methyl-3(2H)-furanone, 4-hydroxy-2,5-dimethyl-3(2H)-furanone, 4-acetoxy-2,5-dimethyl-3(2H)-furanone, cyclotene, propionic acid, and butyric acid.

14. The production method according to claim 12 or 13, wherein the off-taste substance comprises at least one selected from the group consisting of an inorganic salt, an amino acid or a salt thereof, a high-intensity sweetener, a vegetable protein, a flavonoid compound, a pH-adjusting or bacteriostatic agent, and a thickening polysaccharide.

15. The production method according to any one of claims 12 to 14, wherein the off-taste suppressing compound is added to the oral product in an amount of 0.005 - 8000 weight ppm with respect to the amount of the off-taste substance to be added to the oral product.

16. The production method according to any one of claims 12 to 15, wherein the oral product is an oral product with a suppressed off-taste.
